# EUROPEAN PATENT APPLICATION

(11) **EP 1 528 484 A2**
(43) Date of publication of application: **04.05.2005**
(21) Application number: 04255979.9
(22) Date of filing: 29.09.2004
(51) Int. Cl.: G06F 17/30

(54) **System and server for providing information, user terminal device, contents display device and method, and corresponding computer program**

(30) Priority: 14.10.2003 JP 2003354395
(71) Applicant: SONY CORPORATION, Tokyo (JP)
(72) Inventor: Ito, Akihiko c/o Sony Corporation, Shinagawa-Ku, Tokyo (JP)
(74) Representative: Leppard, Andrew John

(57) **Abstract**

In an information providing system, an information providing server comprises an assigning unit for configuring multiple fields containing at least one field block, and assigning keywords to each of the field blocks of the fields according to predetermined conditions, a setting unit for selecting at least one assigned keyword from the field block of each field, and combining these to set a combination keyword, and a placement unit for placing contents components equivalent to the combination keyword, according to the positions assigned to the selected keywords. Also, a user terminal device comprises a reception unit for receiving information to be displayed on a screen, generated by keywords being assigned to the field blocks of the fields according to predetermined conditions, and the contents components being placed at positions respectively assigned to the selected keywords, and a display unit for displaying on a screen, based on the information for screen display.

## Description

### BACKGROUND OF THE INVENTION

### 1. Field of the Invention

The present invention relates to an information providing system, an information providing server, a user terminal device, a contents display device, a computer program, and a contents display method.

### 2. Description of the Related Art

Conventionally, there have been operated information search services wherein an information search server searches contents or the like on a network, and the search results are displayed on the display screen of a computer of a user.

With such information search services, the information search server collects and accumulates meta data relating to contents, and searches for contents corresponding to the meta data form search conditions such as keywords or the like transmitted from a user computer, thereby displaying the search results on the display screen of the computer, such as disclosed in Japanese Unexamined Patent Application Publication No. 10-178597, which is a document relating to the field of embodiments of the present invention.

However, with the conventional art, search results displayed on the screen are classified by groups of contents searched with regard on one search condition, such as keywords or the like, and a list of contents is displayed for each group, so making a display of search results on the screen such that the overall relation between multiple combined search conditions and the search results could be understood, has been difficult.

### SUMMARY OF THE INVENTION

The present invention has been made in light of such, and accordingly, embodiments of the present invention seek to provide a new and improved contents display method and contents display device capable of displaying the overall relation between multiple combined conditions and the search results searched based on the search conditions.

According to a first aspect of the present invention, a contents display device for displaying contents on a screen is provided, comprising: an assigning unit for configuring a plurality of fields in which at least one field block is contained, and assigning keywords to the field blocks of the fields according to predetermined conditions; a setting unit for selecting at least one of the assigned keywords from the field blocks of the fields, and combining the keywords to establish a combination keyword; and a placement unit for placing contents components corresponding to the combination keyword at positions assigned with the selected keywords.

In embodiments, the contents display device assigns keywords to field blocks of the fields, and extracts at least one keyword regarding each field from the assigned keywords, the keywords are combined, and a combination keyword is set. Further, contents components corresponding to the combination keywords are placed at predetermined positions. According to this configuration, a list of the combined keywords, and all of the corresponding contents components are placed, so the distribution state of all of the contents components which have been placed, and the correlation between the keywords and the contents components, can be readily understood.

According to a second aspect of the present invention, an information providing system is provided wherein a user terminal device for displaying contents on a screen, and an information providing server for at least providing information for displaying the contents on the user terminal device, are mutually connected to a network; the information providing server comprising an assigning unit for configuring multiple fields containing at least one field block, and assigning keywords to each of the field blocks of the fields according to predetermined conditions, a setting unit for selecting at least one assigned keyword from the field block of each field, and combining these to set a combination keyword, and a placement unit for placing contents components equivalent to the combination keyword, according to the positions assigned to the selected keywords; and the user terminal device comprising a reception unit for receiving via the network information to be displayed on a screen, generated by keywords being assigned to the field blocks of the fields according to predetermined conditions, and the contents components being placed at positions respectively assigned to the selected keywords, and a display unit for displaying on a screen, based on the information for screen display.

According to a third aspect of the present invention, an information providing server for at least providing information for displaying contents on a user terminal device via the network is provided, the information providing server comprising: an assigning unit for configuring multiple fields containing at least one field block, and assigning keywords to each of the field blocks of the fields according to predetermined conditions; a setting unit for selecting at least one assigned keyword from the field block of each field, and combining these to set a combination keyword; and a placement unit for placing contents components equivalent to the combination keyword, according to the positions assigned to the selected keywords.

According to a fourth aspect of the present invention, a user terminal device for acquiring information to be displayed on a screen from the information providing server is provided, the user terminal device comprising: a reception unit for receiving information for display on the screen via the network; and a display unit for making a display on the screen based on information for display on the screen; wherein the information for display on the screen is generated by the information providing server configuring a plurality of fields in which at least one field block is contained, assigning keywords to the field blocks of the fields according to predetermined conditions, selecting at least one of the assigned keywords from the field blocks of the fields and combined to establish a combination keyword, and placing contents components at positions assigned with the combination keyword.

According to a fifth aspect of the present invention, a computer program for causing a computer to function as a contents display device for displaying contents on a screen is provided, such that the computer comprises: an assigning unit for configuring a plurality of fields in which at least one field block is contained, and assigning keywords to the field blocks of the fields according to predetermined conditions; a setting unit for selecting at least one of the assigned keywords from the field blocks of the fields, and combining the keywords to establish a combination keyword; and a placement unit for placing contents components corresponding to the combination keyword at positions assigned with the selected keywords.

According to a sixth aspect of the present invention, a contents display method for displaying contents on a screen is provided, comprising: an assigning step for configuring a plurality of fields in which at least one field block is contained, and assigning keywords to the field blocks of the fields according to predetermined conditions; a setting step for selecting at least one of the assigned keywords from the field blocks of the fields, and combining the keywords to establish a combination keyword; and a placement step for placing contents components corresponding to the combination keyword at positions assigned with the selected keywords.

The contents components may be placed within blocks configured on the fields, with each field as an axis, and contents components searched by the combination keyword are placed in the blocks, and the contents components searched by the combination keyword may be placed in the blocks. Also, a desired contents component which is the target of the search may be placed in at least one of the blocks.

The placed contents component may be displayed on the screen, and the placement unit or step may place meta information corresponding to the contents component. According to this configuration display processing can be made more efficiently, since meta data is smaller in data size than contents components.

The placement unit or step may place the meta information at a position wherein, of the selected keywords, a column at a position where a first keyword has been assigned and a row wherein a second keyword at least intersect. Further, the placement unit or step may place the meta information within a block corresponding to the intersecting position, and the placed meta information may be displayed on the screen.

The contents component searched by the combination keyword may be placed in the block, and a desired contents component which is the target of the search may be placed in at least one of the blocks. Also, the placed contents component may be a contents component searched based on the combination keyword. According to this configuration, the results of the search instruction are displayed, so the intended detailed information or the like can be found effectively, the results are of searches combining multiple keywords, and a search results containing a great amount of information can be displayed at once.

The contents components may be placed within blocks configured on the fields, with each field as an axis. The placement unit or step may place the meta information in the block corresponding to a position wherein, of the selected keywords, a row at a position where a first keyword has been assigned and a column wherein a second keyword at least intersect. Also, placed meta information relating to the searched content component may be displayed on the screen.

At least one of the attributes or attributes value of meta information relating to the contents component obtained by searching may be registered as a keyword. The predetermined conditions may be at least the search frequency or search history of a keyword.

The placement unit or step may place an image symbolizing the category of the contents component, and may further place the image at a position wherein, of the selected keywords, a row at a position where a first keyword has been assigned and a column wherein a second keyword at least intersect.

The contents component may be made to include broadcast programming, and may be configured of at least one contents component. In the event that the contents component is a broadcast program, the registration status of the program may be displayed in the block.

Also, in the event that the placed contents component is configured of two of the fields, the placed contents component may be displayed in a two-dimensional format, and further, in the event that the placed contents component is configured of three of the fields, the placed contents component may be displayed in a three-dimensional format.

As described above, according to embodiments of the present invention, a list of one or more keywords, and all of the contents components corresponding to the keywords are placed, so the distribution state of all of the contents components which have been placed, and the correlation between the keywords and the contents components, can be readily understood.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram illustrating a schematic configuration of an information providing system according to an embodiment of the present invention;
Fig. 2 is a block diagram illustrating a schematic configuration of a broadcasting station according to the embodiment;
Fig. 3 is an explanatory diagram schematically illustrating the data structure of ECG information according to the embodiment;
Figs. 4A and 4B are explanatory diagrams schematically illustrating meta information contained in the ECG information according to the embodiment;
Fig. 5 is a block diagram illustrating the schematic configuration of the user terminal device, directory service server, contents service server, and information managing server, according to the embodiment;
Fig. 6 is an explanatory diagram illustrating data structure of the EPG data according to the embodiment;
Figs. 7A and 7B are explanatory diagrams schematically illustrating the configuration of a display screen for ECG service according to the embodiment;
Figs. 8A through 8C are explanatory diagrams schematically illustrating display regions assigned to a screen display unit according to the embodiment;
Figs. 9A through 9E are explanatory diagrams schematically illustrating the configuration of contents components displayed in the display regions according to the embodiment;
Figs. 10A through 10F are explanatory diagrams schematically illustrating the transition of assigning the display regions according to the embodiment;
Figs. 11A and 11B are explanatory diagrams schematically illustrating the display regions assigned to the screen display unit according to the embodiment;
Figs. 12A and 12B are explanatory diagrams schematically illustrating the configuration of contents components displayed in the display regions according to the embodiment;
Figs. 13A and 13B are explanatory diagrams schematically illustrating the configuration of contents components displayed in the display regions according to the embodiment;
Fig. 14 is an explanatory diagram schematically illustrating the configuration of contents components displayed in the display regions according to the embodiment;
Fig. 15 is an explanatory diagram schematically illustrating an attribute list screen according to the embodiment;
Fig. 16 is a flowchart schematically illustrating registration processing of search information according to the embodiment;
Fig. 17 is an explanatory diagram schematically illustrating the registration processing for search information according to the embodiment;
Fig. 18 is a flowchart schematically illustrating the search processing using search information according to the embodiment;
Fig. 19 is an explanatory diagram schematically illustrating a screen displaying the search information according to the embodiment;
Fig. 20 is an explanatory diagram schematically illustrating the registration processing for search information according to the embodiment;
Fig. 21 is an explanatory diagram schematically illustrating a screen displaying the search information according to the embodiment;
Fig. 22 is an explanatory diagram schematically illustrating the data structure of a search information list according to the embodiment;
Fig. 23 is an explanatory diagram schematically illustrating the structure of a display screen of the search results according to the embodiment;
Fig. 24 is a flowchart schematically illustrating the display processing for search results according to the embodiment;
Fig. 25 is an explanatory diagram schematically illustrating the structure of a display screen of the search results according to the embodiment;
Fig. 26 is a flowchart schematically illustrating the display processing for search results according to the embodiment;
Fig. 27 is an explanatory diagram schematically illustrating the position of blocks making of the display screen for search results in the display processing for search results according to the embodiment;
Fig. 28 is an explanatory diagram schematically illustrating the structure of a display screen of the search results according to the embodiment;
Fig. 29 is an explanatory diagram schematically illustrating the structure of a display screen of the search results according to the embodiment;
Fig. 30 is an explanatory diagram schematically illustrating the structure of a display screen of the search results according to the embodiment;
Fig. 31 is an explanatory diagram schematically illustrating the structure of a display screen for setting search information as the contents of searching, according to the embodiment;
Fig. 32 is an explanatory diagram schematically illustrating the structure of a display screen of the search results according to the embodiment;
Fig. 33 is an explanatory diagram schematically illustrating the structure of a display screen of the search results according to the embodiment;
Fig. 34 is an explanatory diagram schematically illustrating the structure of a display screen of the search results according to the embodiment;
Fig. 35 is an explanatory diagram schematically illustrating the structure of a display screen of the search results according to the embodiment;
Fig. 36 is an explanatory diagram schematically illustrating the display processing for the search results according to the embodiment;
Fig. 37 illustrates a modification of the display screen for search results according to the embodiment;
Fig. 38 illustrates a modification of the display screen for search results according to the embodiment;
Fig. 39 is a flowchart regarding a modification of the display processing for search results according to the embodiment;
Fig. 40 is a flowchart regarding a modification of the display processing for search results according to the embodiment;
Fig. 41 is a flowchart regarding a modification of the display screen for search results according to the embodiment;
Fig. 42 is a modification of information managed by a user information managing service according to the embodiment; and
Fig. 43 is an explanatory diagram schematically describing a screen displaying search information according to the embodiment.

### DESCRIPTION OF THE PREFERRED EMBODIMENTS

Preferred embodiments of the present invention will now be described in detail with reference to the attached drawings. Note that components in following description and the drawings which have generally the same function or configuration will be denoted with the same reference numeral, thereby avoiding redundant description.

### (Information Providing System)

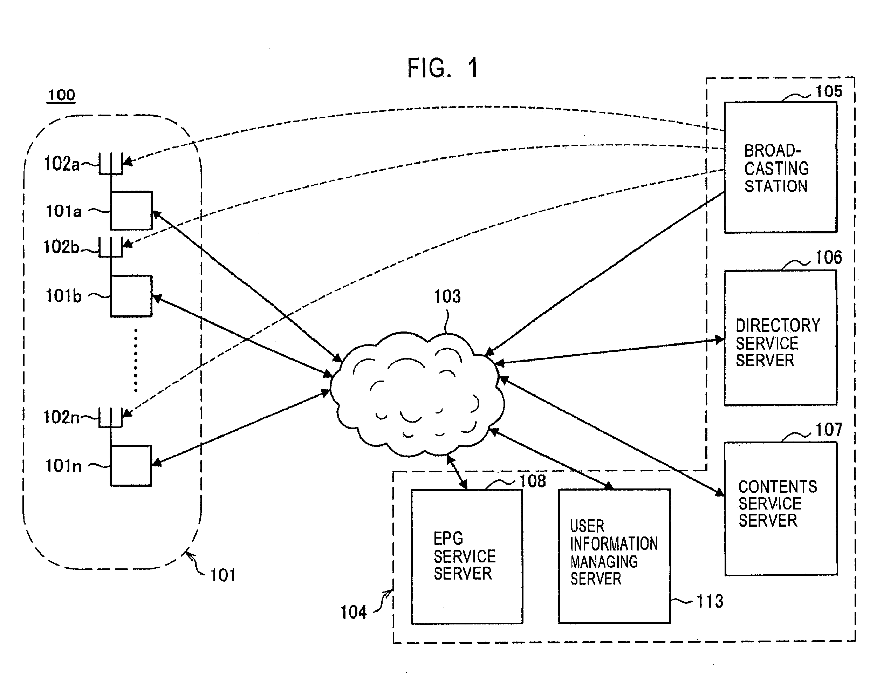

First, an information processing system 100 according to the present embodiment will be described with reference to Fig. 1. Fig. 1 is a block diagram schematically describing the information processing system 100 according to the present embodiment.

As shown in Fig. 1, the information processing system 100 according to the present embodiment is configured of at least a user terminal device 101 (101a, 101b, and so on through 101n), a network 103, and an information providing device 104. The information providing device 104 is a device such as an information providing server or the like which functions as a server-client system server, for example.

With the information providing system 100 according to the present embodiment, first, the information providing device 104 provides a broadcast schedule table such as an EPG (Electronic Program Guide) as main contents to the user terminal device 101, as a basic providing service. The main contents are contents information, but in addition to the program guide, lists of books, movies, and so forth may be provided as other examples.

Further, the information providing system 100 according to the present embodiment can provide search information for the user terminal device 101 to search for detailed information relating to the main contents by using keywords or the like, personalized guide information containing recommends, and so forth. The search information is contained in user information which is managed for each user using the user terminal device 101. The search information also includes keywords which the user uses frequently, and so forth. Also, the personalized guide information is information for providing the user with suitable contents information and the like according to the searching state of the user or usage state of ECG service, or for guiding the user to intended contents information and so forth; details thereof will be described later.

Also, one or more contents components exist in the main contents. For example, in the event that the main contents is EPG information, the contents components may be broadcast programs, and in the event that the main contents is a book list, the contents components may be books, for example. The contents components are one or more components configured in the contents information; details thereof will be described later.

The main contents serve as a portal for searching and view in the contents components, for example. The main contents serving as a portal provide the user with clues and entrances for searching for the desired contents components. Displaying the main contents on the display screen allows multiple contents components to be effectively selected and viewed.

The user terminal device 101 displays the main contents, and upon main contents displayed being selected, sub-content relating to the main contents are searched through the meta information of the contents component selected from the main components, and the sub-content such as detailed information or the like is obtained. Note that the detailed information in the present embodiment is not restricted to information which is detailed, just so long as it is at a hierarchical level below that of the main contents.

Further, the user terminal device 101 can display the obtained sub-contents in a display region within the display screen. Note that sub-contents are at a hierarchical level below that of the main contents, and have a principal and accessory relation therebetween. The main contents, sub-contents, and meta information and the like will be described in detail later.

The following is a description of the information providing system 100 according to the present embodiment, with reference to an example wherein the main contents displayed at the user terminal device 101 is a broadcast schedule table such as EPG or the like.

The information providing device 104 comprises at least a broadcasting station 105, a directory service server 106, a contents service server 107, an EPG service server 108, and a user information managing server 113. Note that the broadcasting station 105 may be a 124°/128° Communication Satellite broadcast, or a Communication Satellite digital broadcast, for example. Further, the broadcast station 105 according to the present embodiment is not restricted to these examples ether, and may be a terrestrial analog broadcast, terrestrial digital broadcast, Broadcast Satellite digital broadcast, Broadcast Satellite analog broadcast, or a broadband broadcast such as cable television, FTTH (Fiber To The Home), or ADSL (Asymmetric Digital Subscriber Line), and so forth.

The broadcasting station 105 broadcasts various broadcast programs to the user terminal device 101, but also sends basic EPG information or SI information as data broadcast along with the broadcast programs. The user terminal device 101 can display an EPG or ECG to serve as a program guide, by receiving the basic EPG information and the like in the EPG format.

The broadcasting station 105, which is a commissioned broadcasting enterprise, transmits programs to users by up linking or down linking airwaves such as broadcast waves, and charges the users for the transmitted programs.

Note that while description of the information providing device 104 according to the present embodiment will be made with reference to an example wherein a broadcasting station 105 is involved, the present invention is by no means restricted to this example. That is to say, embodiments of the present invention can be carried out in a manner wherein the main contents are not a program guide or EPG or the like, but are a game software sales list, a book viewing list, or the like, and in such a case, the information providing device 104 involved may be an ISP (Internet Service Provider), a retailing device for selling game software or the like (not shown), or the like.

The EPG service server 108 obtains compilation information and the like from the broadcasting stations 105, and generates EPG information in an EPG format, or obtains externally-generated EPG information. The compilation information is information for running and broadcasting programs according to schedule.

The basic EPG information is distributed to the user terminal devices 101 en bloc from the EPG service server 108, but other addition ECG (Electronic Content Guide) information such as sub-meta information or the like added to the sub-contents where are detailed information, and so forth, can be individually handled within the broadcasting station 105 which is the service providing side. The ECG information and sub-meta information will be described later. Further, this is not restricted to the broadcasting station 105, and may be any other device according to services provided by the information providing device 104.

The user terminal device 101 comprises identification information reception units 102 (102a, 102b, and so on through 102n) for receiving broadcast waves containing identification information such as meta information reference ID and so forth, and as shown in Fig. 1 by the dotted arrow, receives the broadcast waves sent from the broadcasting station 105. Or, this may be received via the network 103.

Further, the user terminal device 101 may exchange data with the information providing device 104 via the network 103. Receiving the broadcast waves enables the user terminal device 101 to display television programs and so forth.

The information providing system 100 according to the present embodiment is described here with an example wherein only one information providing device 104 is provided, but the present invention is by no means restricted to this example, and for example, each broadcasting station may have multiple information providing devices 104.

Also, the information providing system 100 according to the present embodiment may further comprise an account aggregation server (not shown). An account aggregation server has function to centrally perform verification at the time of a user using the information providing system 100, and billing and settlement performed at the time of the user of the information providing system 100 purchasing contents or the like, independently from the broadcasting station 105 or program, etc.

That is to say, having an account aggregation server enables integrated management of user verification information, as well as centralized billing and settlement for each user. This integration is performed based on integrated user ID wherein multiple user IDs have been integrated.

Thus, in the event that a user purchases various types of sub-contents based on the sub-meta information, the sub-contents may be managed by various content holders and retailers, since the account aggregation server has functions to handle all services such as billing and settlement single-handedly, and to act as an agent to access all services based on the one integrated user ID. This is realized by a dedicated server or the like.

Also, in the event that the content holder which is the copyright holder for copyrighted material such as movies, music, game software, and so forth, need disclosure of customer information for the purpose of marketing, the above user information can be effectively utilized. In this case, the contents service can be notified in the form of including the user ID in an electronic certificate.

Also, the information providing system 100 according to the preset embodiment further includes one or more content holders (not shown) and one or more commissioned broadcasters.

A content holder produces, manages, and provides various contents, and produces content meta information regarding the content as well. The produced content itself and the content meta information and so forth are provided to the information providing device 104.

The commissioned broadcaster provides channels, produces programs, and also compiles and sends out programs. An example of a commissioned broadcaster would be a program supplier.

Note that while the EPG service server 108 also provides EPG data to the user terminal device 101, the EPG service server 108 is unlike the ECG service providing device 105 in that the EPG service server 108 is restricted to providing EPG program information to the user terminal device 101.

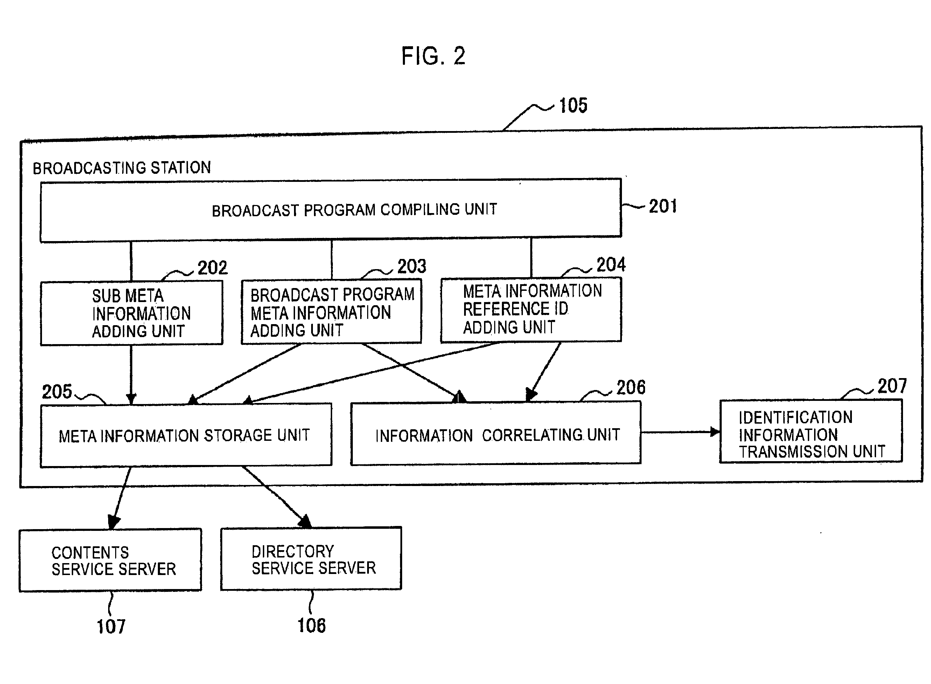

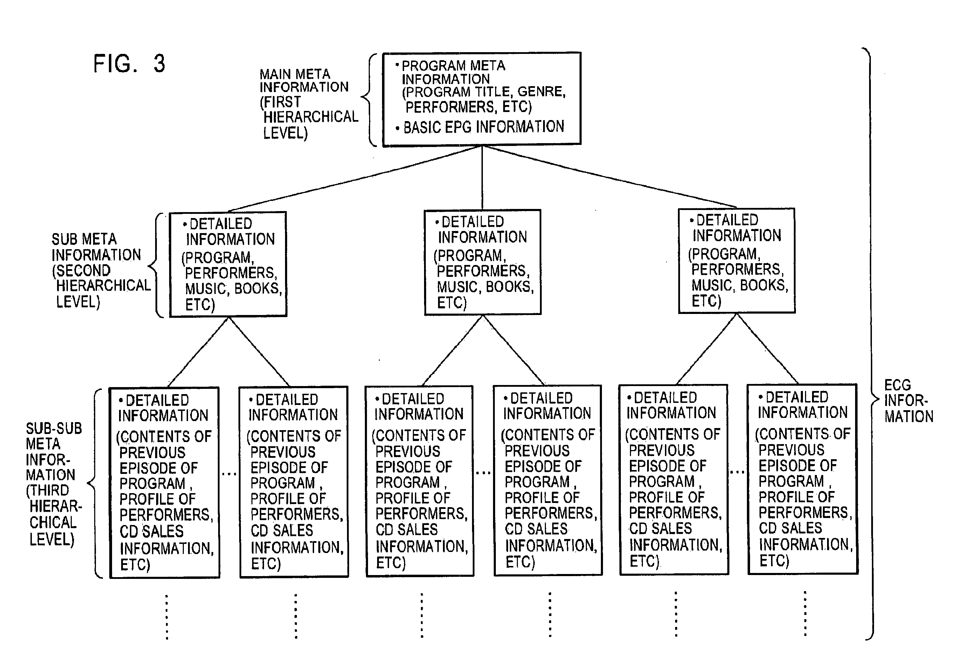

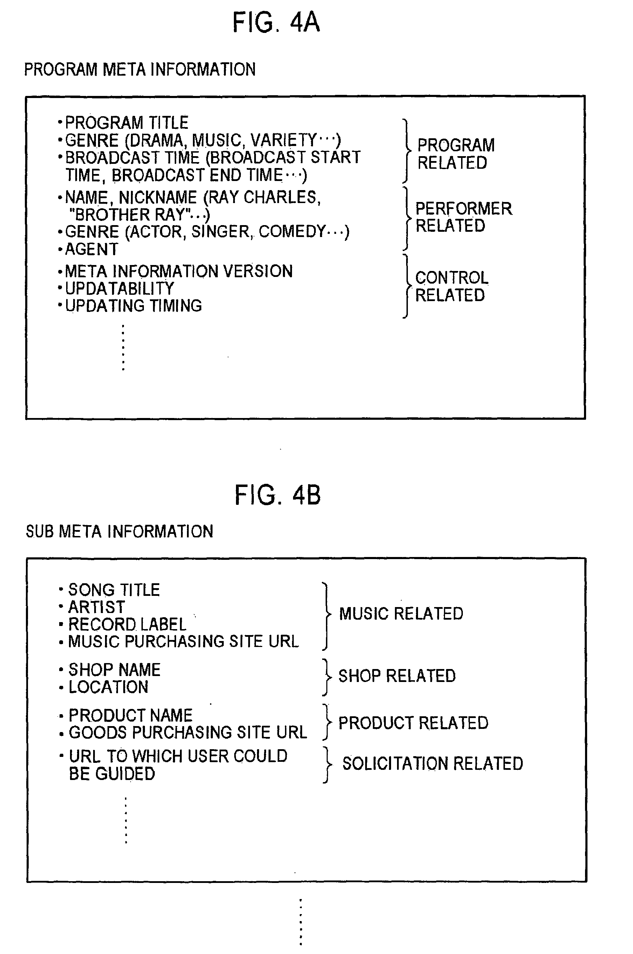

Next, the configuration of the components making up the information providing system 100 according to the present embodiment will be described with reference to Figs. 1 through 4B. Fig. 2 is a block diagram illustrating a schematic configuration of a broadcasting station according to the embodiment, Fig. 3 is an explanatory diagram schematically illustrating the data structure of ECG information according to the embodiment, and Figs. 4A and 4B are explanatory diagrams schematically illustrating meta information contained in the ECG information according to the embodiment.

First, as shown in Fig. 1, the network 103 according to the present embodiment is a connection for two-way communication with the information providing device 104. A typical example of the network would be the Internet, to which connection is made by ADSL (Asymmetric Digital Subscriber Line), FTTH (Fiber To The Home), or the like. Other connection media include FDDI (Fiber Distributed Data Interface) or other optical cable connections, Ethernet using coaxial or twisted pair cables, wireless communication via IEEE 802.11b. In other words, the connection is not restricted to either cable or wireless connection, and includes satellite communication networks as well.

Next, as shown in Fig. 2, the broadcasting station 105 according to the present embodiment comprises, in addition to normal broadcast facilities, a broadcast program compiling unit 201, sub meta information adding unit 202, a broadcast program meta information adding unit 203, a meta information reference ID adding unit 204, a meta information storage unit 205, an information unit correlating unit 206, and an identification information transmission unit 207.

Note that in the event that the service provided by the information providing system 100 according to the present embodiment is broadcasting, the information providing system 100 comprises the broadcasting station 105 according to the present embodiment, which is shown in Fig. 1. In this case, the main contents provided from the broadcasting station 105 to the viewers would be the Electronic Program Guide which is sent out along with the program picture. However, the main contents according to the present embodiment are not restricted to the EPG described here, and may be, for example, a list of game software for sale, a list of CDs for sale, a list of books for sale, a schedule of movies to be aired, and so forth.

The broadcast program compiling unit 201 performs compilation processing of the program to be broadcast by the broadcasting station 105, and generates compilation information and the like.

The sub meta information adding unit 202 generates sub meta information, and adds the sub meta information to the sub-contents, the actual sub-contents or compilation information. Note here that the term "sub-contents" means detailed information and the like tied to the main contents, and the term "actual sub-contents" means contents configured of at least one of products, programs, packages, services, still data, motion data, music data, or text, which are tied to the sub-contents, and is provided from the contents service server 107.

The sub meta information is meta information subordinate to the main meta information (or broadcast program meta information) correlated to the main contents. Accordingly, upon the user terminal device 101 accessing the main meta information, the user terminal device 101 can also access the sub meta information related to the main meta information. Note that meta information here means broadcast program information or contents meta information or the like.

Accordingly, the user can access the sub-contents which are detailed information and the like from the main contents, and further access the intended actual sub-contents (hereafter simply referred to as "goods"), which can be purchased by a billing and settlement process.

The broadcast program meta information adding unit 203 generates broadcast program meta information which is main meta information, and adds this to the compilation information generated by the broadcast program compiling unit 201. Note that the broadcast program meta information added to the compilation information is configured as basic EPG information to be distributed to the user terminal device 101. The basic EPG information is in the EPG format. The broadcast program meta information or sub meta information is meta information which includes the basic EPG information, and further, the broadcast program meta information belongs to the main meta information. The main meta information will be described later.

Also, the basic EPG information contains broadcast program meta information, and has structure information as a broadcast program guide. The basic EPG information is distributed in HTML (Hyper Text Markup Language) format, for example, in the event of being transmitted via the network 103, and is sent in the SI (Service Information) or BML (Broadcast Markup Language) format in the event of being sent out on broadcast waves.

The meta information reference ID adding unit 204 assigns meta information reference IDs, and adds the meta information reference ID to the compilation information generated by the broadcast program compiling unit 201 and to the sub meta information. The meta information reference ID is added to each broadcast program for example, in order to correlate the ECG information containing the broadcast program meta information or the sub meta information with the broadcast program. Accordingly, providing the meta information reference ID to the broadcast program meta information or the sub meta information added to the compilation information enables the broadcast program meta information or the sub meta information to be obtained based on the meta information reference ID.

Referring to the meta information reference ID allows the user terminal device 101 to obtain the broadcast program information or sub meta information, and access sub-contents or information related to the broadcast programs. The meta information reference ID only needs to be unique within the broadcasting station 105.

The meta information storage unit 205 stores at least the compilation information, sub meta information, broadcast program meta information, meta information reference ID, or sub-contents. Note that the sub meta information, broadcast program meta information, meta information reference ID, and sub-contents belong to ECG information, which will be described later.

The information correlating unit 206 correlates the basic EPG information added to the compilation information, and the meta information reference ID. Correlating the meta information reference ID and the EPG information allows the user terminal device 101 to obtain broadcast station information and the like for identifying the broadcasting station 105 contained in the basic EPG information, based on the meta information reference ID. The broadcasting station information will be described later.

The identification information transmission unit 207 sends out the basic EPG information and the meta information reference ID for each program, via broadcast waves or the network 103. The meta information reference ID is distributed from the identification information transmission unit 207 along with the basic EPG information.

In order to distribute the meta information reference ID from the identification information transmission unit 207 by broadcast waves, there is the need to determine the descriptor attribute values indicating the meta information reference ID, in SI which is a format for transmitting the basic EPG information, for example. Also, in order to transmit the basic EPG information or meta information reference ID via the network 103 such as the Internet or the like, a distribution format which the user terminal device 101 side can handle, and the system for distribution, etc., need to be determined.

Examples of the distribution format include the HTML (Hyper Text Markup Language) format, the XML (extensible Markup Language) format, and so forth. Accordingly, in the event that distribution is to be carried out with the HTML format or XML format, attributes indicating the meta information reference ID are contained in the meta information. Also, in the event that distribution is to be carried out with the HTML format or XML format, the basic EPG information following the above distribution format is appended with the attributes value of the meta information reference ID.

The sub meta information or broadcast program meta information stored in the meta information storage unit 205 is transmitted to the directory service server 106 as necessary. Also, the sub-contents or the sub meta information stored in the meta information storage unit 205 is transmitted to the contents service server 107.

Next, the ECG information according to the present embodiment will be described with reference to Fig. 3. as shown in Fig. 3, the ECG information is configured of main meta information and sub meta information which belong to the meta information.

ECG information is an expansion of basic EPG information serving as data for searching for TV programs, which enables user to search not only for TV programs but also for various contents in the Internet and so forth, so as to obtain desired information.

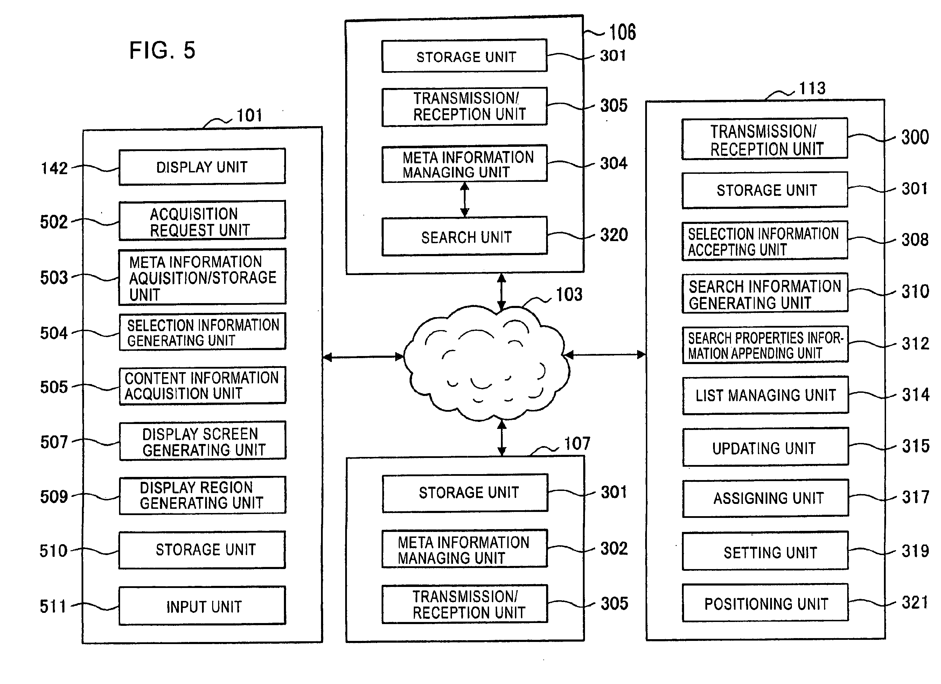

Included in ECG information are the above-described broadcast program meta information, basic EPG information, sub meta information, sub-sub meta information, an so forth, in respective hierarchical levels. The broadcast program meta information or basic EPG information is information belonging to the EPG information, which is electronic program guide information for searching for TV programs. Note that in the event that the EPG information is displayed in a first display region on a display unit 142 shown in Fig. 5, the EPG information is equivalent to the main content information. Also, the broadcast program meta information belongs to the PEG information in the same way as with the basic EPG information, but also includes various types of other information, besides the information contained in the basic EPG information, such as book meta information and so forth.

Using the ECG which is an expansion of the EPG information enables the user to search for not only television programming but also detailed information and various goods via the network 103, and moreover to obtaining the searched detailed information and goods and the like.

The main meta information shown in Fig. 3 is meta information which is added to, of the meta information provided as ECG information, the main contents. Note that the main contents are contents which the information providing device 104 provides as main contents, and in the event that there is a broadcasting station 105 involved with the information providing device 104, the main contents would be broadcast programs, EPG information, and complication information. On the other hand, in the event that a DVD (Digital Versatile Disc) vending device is involved rather than a broadcasting station 105, the main contents would be a list of DVDs for sale, and the goods would be the DVDs and so forth.

Also, in the event that the main contents are EPG information or compilation information, the main meta information relating to the present embodiment is specially "program meta information". This program meta information (program title, genre, category, performers, etc.) is in the same class as meta information distributed with SI (Service Information) in current broadcast wave arrangements and EPG service on the Internet (though the details differ from one service to another). Note that meta information should be understood to be simply "information about certain information".

Also, in the event that the various types of meta information such as program meta information and sub meta information are displayed on a display region on the display unit 142 according to the user terminal device 101, the meta information is also equivalent to contents information. For example, the title of the program displayed on the first display region on the display unit 142, the broadcast time, performers, and other program meta information, are equivalent to contents information. Also, the sub meta information such as the name of a book relating to the program or the name of a performer, displayed on the second display region, is equivalent to sub-contents information.

Also, the sub meta information shown in Fig. 3 belongs to a hierarchical level below the first hierarchical level of the main meta information. The sub meat information is the meta information of that provided as ECG information which is added to the sub-contents. Note that the sub-contents are one or more detailed information correlated with the main contents, and can be obtained by making reference to the sub meta information.

The sub-contents have sub-sub-contents connected to and belonging thereto, at the hierarchical level below that of the sub-contents, i.e., the third hierarchical level. Further, detailed information and the like exists below the hierarchical level of the sub-sub-contents. Accordingly, one or more hierarchical levels exist from the main contents, with detailed information existing below each hierarchical level.

Examples of the actual sub-contents (goods) include products, packages, electronic data such as moving images and music, services, and so forth. It should be noted that the actual sub-contents according to the present embodiment are by no means restricted to these examples.

Also, the program meta information shown in Fig. 3 is meta information related to broadcast program, of that provided as the ECG information. Examples of the program meta information include the program title, genre, performers, etc., relating to the broadcast program.

The broadcast meta information is in the same class as the information distributed with SI (Service Information) in current broadcast wave arrangements and the EPG service server 108 on the Internet (though the details partially differ from one EPG service to another). The program meta information differs in data structure from that of the basic EPG information, but expressing program meta information as the basic EPG information is essentially the same.

Sub meta information is meta information contained in the ECG information, and is added to sub-contents provided from the later-described contents service server 107. Examples of the sub meta information include a URI (Universal Resource Identifier) which is the location information of the sub-contents, the title, names such as the author, the producer of the sub-contents, and the service period for providing the sub-contents. Note that URLs fall under the URI system.

Next, the program meta information and sub meta information according to the present embodiment will be described with reference to Figs. 4A and 4B. Figs. 4A and 4B are explanatory diagram schematically illustrating the configuration of program meta information and sub meta information according to the present embodiment.

As shown in Figs. 4A and 4B, examples of the program meta information contained in the ECG information include program-related program meta information such as "program title", "program genre", "broadcast time", "rerun", and so forth, performer-related program meta information such as "name/nickname", "performer genre", "agent", and so forth, and control-related program meta information such as "meta information version" indicating the version of the program meta information, "updatability" indicating the probability of multiple program meta information groups belonging to the meta information reference ID being updated, "updating timing" for updating the program meta information group, and so forth.

Note that the "broadcast time" represents the time when the program is to be broadcast (broadcast start time, broadcast end time). The program-related "genre" indicates the genre of the program to be broadcast, such as drama, music, variety, or the like. the "name/nickname" is the name or nickname of the leading actor or the like of the program, and program meta information such as "Ray Charles, 'Brother Ray'" may be used.

Also, "rerun" is used for programs which are reruns, to indicate the original program for the rerun. Accordingly, searching for "rerun" will yield of list of reruns of original programs. Also, this term "rerun" is not limited to reruns of exactly the same program again, but also includes sequences to original programs, special programs, recaps, and even DVDs of the original programs.

The "genre" of the performer is program meta information indicates the genre of the performer performing in the program to be broadcast, such as "actor", "singer", "comedy", "artist" and so forth, as a few examples. While examples have been given for the program meta information according to embodiments of the preset invention regarding cases of belonging to the program or performers, but the present invention is by no means restricted to this arrangement.

Also, as shown in Fig. 4B, examples of the sub-meta information contained in the ECG information include music-related sub meta information such as "song title", "artist", "record label", "music purchasing site URL", and so forth, shop-related sub meta information such as "shop name", "location", product-related sub meta information such as "product name", "goods purchasing site URL", and so forth, solicitation-related sub meta information such as "URL to which user could be guided", and control-related sub meta information such as "meta information version" indicating the version of the sub meta information, "updatability" indicating the probability of multiple sub meta information groups belonging to the meta information reference ID being updated, "updating timing" for updating the sub meta information group, and so forth.

The program meta information and sub meta information are in a principal and accessory relation, which may be carried out by correlating the sub-metal information at the hierarchical level below the program meta information, or by including the sub meta information relating to the program meta information in the program meta information beforehand. In the same way, sub-sub meta information may be correlated at the hierarchical level below the sub meta information, or the sub-sub meta information may be contained therein. This holds for the following hierarchical levels as well.

The sub meta information according to embodiments of the present invention has been described with reference to examples, such as music piece related, shop related, prize related, solicitation related, and so forth, but the present invention is not restricted to these examples. Also, the sub-sub meta information according to embodiments of the present invention is of generally the same structure as the sub meta information, and accordingly detailed description thereof will be omitted.

### (Contents Service Server 107)

Next, the user terminal device 101 according to the present embodiment, the directory service server 106, contents service server 107, and user information managing server 113 will be described with reference to Fig. 5. Fig. 5 is a block diagram schematically illustrating the configuration of the user terminal device 101, the directory service server 106, contents service server 107, and user information managing server 113, according to the present embodiment.

The contents service server 107 according to the present embodiment has the main contents and various types of detailed information and the like to be provided from the contents provider such as a broadcast station or the like to viewers, stored in hierarchical levels. Note that in some cases, the detailed information may include information for purchasing goods, the location and how to get detailed information in a lower hierarchical level than the current detailed information, and so forth.

As shown in Fig. 5, the contents service server 107 comprises at least a storage unit 301, meta information managing unit 302, a control unit (not shown) for controlling the components, and a transmission/reception unit 300 for exchanging data over the network 103.

The storage unit 301 stores detailed information (sub-contents) provided from the broadcasting station 105. The sub-contents are detailed information or the like tied to the main contents. For example, in the event that the main contents is EPG information, the sub-contents would be information tied to the programs of the EPG information. Accordingly, of the information relating to the program, the child information having the main contents as a parent would be the sub-contents.

In the event that the main contents are EPG information, the sub-contents might be information of the story of the previous episode, information regarding performers performing in the program, book information related to the programs, music information related to the program and so forth. The main contents, sub-contents, and so forth, are all contents information.

The storage unit 301 stores Web site information of sites selling goods such as books or CDs or the like related to the main contents, as detailed information as well. The storage unit 301 stores Web site information particularly related to the program. Also, the sub-contents according to the preset embodiment may be dispersed in the storage unit 301 on the network 103 relating to the contents service server 107, not just in the storage unit 301 of the contents service server 107 to be disposed in a broadcast station.

The sub meta information provided as the ECG information can be attached to the sub-contents. The meta information managing unit 302 stores the sub meta information, accordingly, an arrangement may be made wherein the sub meta information are first provided to the user terminal device 101 and then the sub-contents. Note that the storage device 301 according to the present embodiment stores main contents as well as sub-contents, and accordingly, the meta information managing unit 302 stores main meta information besides sub meta information.

Also, in the event that multiple broadcast stations 105 are involved in the information providing system 100 according to the present embodiment, this arrangement can handle cases wherein one contents service server 107 is shared by the multiple broadcast stations 105.

### (Directory Service Server 106)

Next, the directory service server 106 according to the preset embodiment is operated as a server dedicated for directory service, for example. As shown in Fig. 5, the directory service server 106 comprises a storage unit 303, a meta information managing unit 304, a transmission/reception unit 305 for exchanging data via the network 103, a search unit 320, and a control unit (not shown) for controlling the processing of the components.

The meta information managing unit 304 holds sub meta information groups which are collections of multiple sets of sub meta information relating to various attributes, such as the location of the various types of sub-contents provided from the contents service server 107 as ECG information, as well as the title, genre, names (performers, authors), price, service period, and so forth, and holds main meta information groups (program meta information groups), and reads and writes meta information as necessary.

Also, the meta information managing unit 304 holds program meta information relating to normal broadcast programs and the above-described sub-meta information, in a correlated manner. Note that the program meta information may be configured as a program meta information group made up of multiple sets of program meta information. Also, the meta information managing unit 304 may individually store the program meta information, sub meta information, and meta information reference ID, and the like for each broadcasting station 105.

The sub meta information is edited in increments of broadcast programs by the broadcasting station 105, and is configured as a sub meta information group made up of one or more pieces of sub meta information. Also, a meta information reference ID is appropriated to make reference to the sub meta information group.

The user terminal device 101 accesses the director service server 106 based on the meta information reference ID, thereby obtaining meta information such as sub meta information and the like. Note that the directory service server 106 can obtain access information generated each time the user terminal device 101 accesses, and accumulate the access information for each user terminal device 101.

The search unit 320 searches meta information corresponding to the keyword obtained from the user information managing server 113 or the like, and searches for meta information corresponding to the keywords, from the meta information stored in the meta information managing unit 304. The keywords according to the present embodiment will be described as text keywords as one example, but the present invention is by no means restricted to this example, and arrangements may be made wherein the keyword is any one of text, symbols, or shapes, for example.

In the event that multiple broadcast stations 105 are involved in the information providing system 100 according to the present embodiment, this arrangement can handle cases wherein one directory service server 106 is shared by the multiple broadcast stations 105.

### (User Information Managing Server 113)

The user information managing server 113 according to the present embodiment manages user information for each user, and further provides user information such as search information or the like, for example, to the user terminal device 101. The user information managing server 113 is equivalent to a contents display device for display contents, for example, if provided with a display unit.

The user information managing server 113 comprises a transmission/reception unit 300 for exchanging data over the network 103, a storage unit 301, a selection information accepting unit 308 for acquiring selection information from the user terminal device, a search information generating unit 310 for generating search information based on the selection information, a search properties information appending unit 312 for adding search properties information, a list managing unit 314 for managing user information for each user, an updating unit 315 for updating the user information, an assigning unit 317, a setting unit 319, a positioning unit 321, and a control unit (not shown) for controlling the processing of the components.

Upon a program displayed on the display unit 142 of the user terminal device 101 or an icon displayed within the program being selected for example, the selection information accepting unit 308 obtains selection information generated based on the attribute values or the like contained in the meta information relating to the selected icon or program or the like. Note that while the selection information accepting unit 308 according to the present embodiment will be described with reference to an example of being provided to the user information managing server 113, the present invention is by no means restricted to this arrangement, and the selection information accepting unit 308 may be provided to the user terminal device 101, etc., instead. The icon corresponding to images symbolizing content component categories for example, and further, icons can serve as indicators for grasping a general idea of what sort of contents or indexes exist.

The search information generating unit 310 generates search information by extracting keywords from attributes values and the like of meta information contained in the selection information. Note that the search information contains at least one keyword, and is stored in a user information search information list. The search information may also be stored in a keyword pool region in the user terminal device 101, but this will be described in detail later. Note that while the search information generating unit 310 according to the present embodiment is described with reference to an example of being provided to the user information managing server 113, the present invention is by no means restricted to this arrangement, and the search information generating unit 310 may be provided to the user terminal device 101 instead.

The search properties information appending unit 312 appends search properties representing the properties of the search information to the generated search information. Search properties information includes, for example, the usage frequency of the search information for searching (search frequency) and search history of recent search usages, but these will be described in detail later. Note that while the search generating unit 310 according to the present embodiment is described with reference to an example of being provided to the user information managing server 113, the present invention is by no means restricted to this arrangement, and the search generating unit 310 may be provided to the user terminal device 101 instead.

The list managing unit 314 manages user information for each user. The user information includes user profile information, and search information lists which are lists of search information, and will be described in detail later.

The updating unit 315 updates the user information managed by the list managing unit 314. Accordingly, each time search information is newly generated by the search information generating unit 310, the generated search information and search properties information are updated in the search information in the search information list of the corresponding user by the updating unit 315.

The assigning unit 317 generates search content information and search results information for causing the search unit 320 of the directory service server 106 to perform a search, and to display the keyword following the search on the user terminal device 101.

Further, the assigning unit 317 performs assigning processing for the search content information or the search results information, such that one of the keywords is assigned to at least one field block included in the X-axial direction and Y-axial direction fields making up the display screen of the user terminal device 101. Note that field blocks placed within fields which are coordinate axes or the like are like cells formed by sectioning the fields into units of blocks, and setting a keyword for a field block forms a keyword index space or the like. While the index space according to the present embodiment is described as displaying text representing the keyword, the present invention is by no means retracted to this arrangement, and may be realized with arrangements wherein icons such as "CD" for example, representing the keyword, are displayed in the index spaces.

By obtaining the search content information, the user terminal device 101 can display a search screen for setting the keyword on the display unit 142 for performing a search, and also the search results can be obtained and displayed on the display unit 142.

Note that the display screen for the search screen or search results is a screen in a table-like format with X-axial direction components and Y-axial direction components, having keywords such as described above assigned to the field blocks corresponding to the blocks where item names and so forth are displayed, and thus displayed on the display screen of the user terminal device 101. Details will be given later.

Also, note that while the assigning unit 317 according to the present embodiment is described with reference to an example of being provided to the user information managing server 113, the present invention is by no means restricted to this arrangement, and the assigning unit 317 may be provided to the user terminal device 101 instead.

The setting unit 319 extracts at least one of the keywords assigned by the assigning unit 317 and combines the keywords with Boolean operators or the like such as AND and OR as necessary, thereby setting a combination keyword. Note that at least one keyword is selected from each of the X-axial direction and Y-axial direction in the present embodiment, but the present invention is not restricted to this example, and arrangements may be made wherein at least one keyword is selected from either the X-axial direction or the Y-axial direction.

The combination keyword is a combination of the keywords assigned to the field blocks displayed on the display screen, and the search results are displayed at the predetermined positions of the keywords, whereby the combination can be readily understood, i.e., which keywords have been combined to form the combination keyword can be readily understood. Further, the user can judge from the placement state of the contents component searched how scattered the results are, i.e., the distribution thereof. Accordingly, the user can easily understand the search results contain a great amount of information, by displaying keywords combination having a great amount of contents, displaying keywords combination having few contents, and so forth.

Also, note that while the setting unit 319 according to the present embodiment is described with reference to an example of being provided to the user information managing server 113, the present invention is by no means restricted to this arrangement, and the setting unit 319 may be provided to the user terminal device 101 instead.

The placement unit 321 checks the results searched by the search unit 320 for each search keyword, and determines whether or not there are redundant search results. In the event that there are redundant search results, these can be changed into text or icons or some other like display format by the placement unit 321 so that the user can visually recognize these as such, or, the redundant search results may simply be not displayed. A search keyword is a keyword used for search processing.

Further, the placement unit 321 changes the display position of the text or icon or the like to be displayed as the search results along with the search keyword, based on predetermined standards, and displays the display results on the display screen accordingly, which will be described in detail later.

Also, note that while the placement unit 321 according to the present embodiment is described with reference to an example of being provided to the user information managing server 113, the present invention is by no means restricted to this arrangement, and the placement unit 321 may be provided to the user terminal device 101 instead.

### (User Terminal Device 101)

Next, the user terminal device 101 according to the present embodiment shown in Fig. 5 will be described. The user terminal device 101 may be any of, for example, a broadcast STB (Set-Top Box), home information appliance, video recorder, game device, or other like CE devices, a personal computer, PDA (Personal Digital Assistant), cellular telephone, or other like mobile devices.

The user terminal device 101 comprises a transmission/reception unit 514 for exchanging data such as identification information and the like, an acquisition request unit 502, a meta information acquisition/storage unit 503, a selection information generating unit 504, a content information acquisition unit 505, a display screen generating unit 507, a display unit 142, a storage unit 510, an input unit 511, and a control unit (not shown) for controlling the processing of the components. Note that the transmission/reception unit 514 corresponds to a reception unit for receiving data or a transmission unit for transmitting data, for example, and the user terminal device 101 corresponds to a contents display device or the like for displaying contents, for example.

Also, the content information acquisition unit 505 according to embodiments of the present invention corresponds to a detailed information acquisition unit for obtaining detailed information or the like, for example.

The transmission/reception unit 514 which transmits and receives identification information receives the basic EPG information and meta information reference ID via the airwaves with an antenna or the like, and stores these. Also, the transmission/reception unit 514 capable of transmitting and receiving via a network receives the basic EPG information and meta information reference ID via the network 103, and stores these.

Note that while the present embodiment is described with reference to an example wherein the user terminal device 101 according to the present embodiment receives data broadcasts from a broadcasting station 105, the present invention is by no means restricted to this example, and arrangements may be made wherein meta information reference ID and the like is received from an ISP or the like other than the broadcasting station 105.

Also, while the present embodiment is described with reference to an example wherein the user terminal device 101 according to the present embodiment obtains the meta information reference ID from the transmission/reception unit 514, the present invention is by no means restricted to this example, and arrangements may be made wherein, in the event that the main content is a CD sales list and the goods are CDs such as music CDs or the like for example, a user terminal device 101 capable of reading CDs reads the meta information reference ID stored in the extended storage region of the CD, thereby obtaining the meta information reference ID from the information providing device 104.

Also, in the event that the main content is a book publication list and the goods are books, and the meta information reference ID is directly printed on the cover of the book or the like, for example, the user may input the meta information reference ID from the input unit 511 such as a keyboard or the like of the user terminal device 101, such that the user terminal device 101 obtains the meta information reference ID. Note that the meta information reference ID may be either one-dimensional, two-dimensional, three-dimensional, or the like.

The selection information generating unit 504 generates selection information based on the program meta information of the program which is the contents component selected with the input unit 511, contents meta information, icons displayed in the EPG, and so forth. The selection information serves as a basis for search information used by the director service server 106 to perform searching. Search information is generated based on the selection information, and is managed for each user. Selection information includes, in addition to attribute values of the meta information, keywords and the like directly input from the input unit 511. Also, the search information is registered to and managed by a keyword pool region in the storage device 510 of the user terminal device 101, which will be described in detail later.

The input unit 511 may be a pointing device such as a mouse, trackball, track pad, stylus pen, or joystick, a remote controller, a keyboard, or the like, which can accept operating instructions from the user, but is not restricted to any of these examples.

Also, the transmission/reception unit 514 receives the location information of the directory service server 106, such as an URI or the like, via the network 103, and sores the URI. Also, the location information such as the URI or the like may be input from the input unit 511 of the user terminal device 101, and stored. The user terminal device 101 is capable of accessing the directory service server 106 by means of the URI. The user terminals device 101 is capable of connected to the network 103 by dial-up connection, ADSL/FTTH, or like methods.

The user terminal device 101 receives the basic EPG information distributed via broadcast waves or the network 103, and also receives the meta information reference ID added to the contents components, such as programs or icons.

The user terminal device 101 manages the locations on the Internet (URI, etc.) of the directory service server 106 or user information managing server 113 corresponding to each station. In the event that the URI has been changed, the new URI is stored by updating the URI. The URI is updated with update information received by broadcast waves or via the network 103.

The broadcast wave reception unit 102 or reception unit (not shown) receives the basic EPG information to which has been added the meta information reference ID, transmitted by SI with broadcast waves or via the network 103, and saves the meta information reference ID.

At the time of receiving the meta information reference ID, the program corresponding to the received meta information reference ID is correlated with broadcast station information (not shown) in order to tell which station the program was broadcast from, and saved.

Note that in the event of obtaining meta information reference ID from the SI (Service Information), receiving the broadcast station information enables which broadcast station the program is from to be discerned. For example, the broadcast code stipulated by the ARIB (Association of Radio Industries and Businesses, primarily for Japan) states that a service ID identifying the broadcasting station is always included in the SI. The broadcasting station information including the service ID, and the meta information reference ID, are correlated.

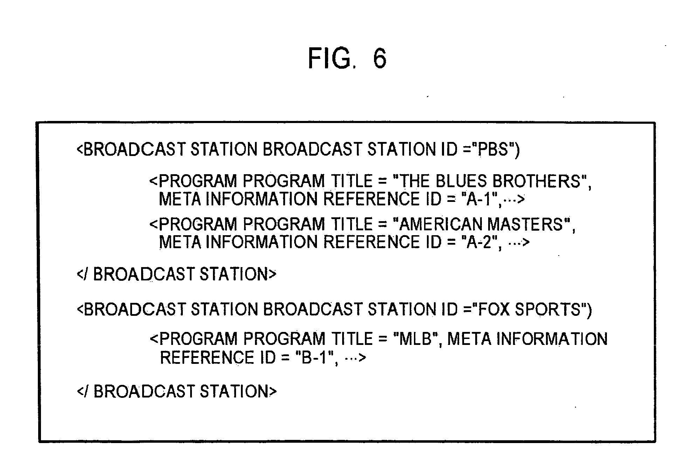

In the event of the EPG service server 108 providing broadcasting station information via the network 103, the broadcasting station information is distributed in a discernable format. The EPG data distributed via the network 103 will be described now with reference to Fig. 6. Fig. 6 is an explanatory diagram illustrating the data structure of the EPG data according to the present embodiment.

As shown in Fig. 6, the data structure of the EPG data is the XML format. The EPG data is made up of a tag indicating that the data is basic EPG data, a tag indicating broadcasting station information, a tag indicating broadcast program meta information, and so forth. Of course, it should be understood that while the present embodiment is described with the data structure of the EPG data being the XML format, the present invention is by no mean restricted to this example, and the data structure of the EPG data may be HTML format data, for example.

The meta information reference ID distributed along with the basic EPG information is always distributed with broadcasting station information indicating the broadcasting station. While the broadcasting station information is described here as meta information, the present invention is by no means restricted to this example.

Also, while the meta information reference ID shown in Fig. 6 is described with an example of being attributes, present invention is by no means restricted to this example, and the meta information reference ID may be tags having indexing functions indicating meta information reference ID.

As shown in Fig. 6, "BROADCAST STATION ID" indicates the broadcasting station. Also, "PBS" and "FOX SPORTS" are set for the "BROADCAST STATION ID". Of course, the present invention is not restricted to this example, and a suitable ID may be assigned to the "BROADCAST STATION ID".

The broadcasting station information shown in Fig. 6 has the broadcasting station tag <BROADCAST STATION> and program tag <PROGRAM> in a hierarchical structure. The meta information reference ID for each program is defined as a child component of the component indicating the broadcasting station, i.e., "BROADCAST STATION ID".

In the event of the data structure shown in Fig. 6, at the time of obtaining the meta information reference ID, which broadcasting station this belongs to can be determined by making reference to the "BROADCAST STATION ID", which is a parent component in the hierarchical structure.

Also, other broadcasting station information distributed via the network 103 includes broadcasting station information for making ID naming rules for the meta information reference ID. Characters indicating the broadcasting station must be placed at the head or the like of the ID serving as the meta information reference ID.

The user terminal device 101 can determine which broadcasting station 105 this belongs to by making reference to the meta information reference ID with the text string set therein as described above. However, this may also undermine the advantage of each broadcasting station 105 managing its own ID. Accordingly, at the time of a broadcasting station 105 distributing meta information reference ID which it has individually named (not including a text string for determining the broadcasting station 105) with the EPG service server 108, a text string for determining the broadcasting station is added.

At the time of the user terminal device 101 obtaining data such as the meta information reference ID or the like, there is the need to add the processing of deleting the text string for determining the broadcasting station 105 and returning the meta information reference ID to that which the broadcasting station 105 has specified.

The user terminal device 101 which has obtained the basic EPG information displays the EPG display screen on the display unit 142. The viewer instructs displaying of program meta information or sub meta information regarding a certain program displayed on the EPG screen, upon which the user terminal device 101 obtains the proper sub-meta information based on the meta information reference ID and the URI information of the directory service server 106 of the broadcasting station 105.

Note that the directory service server 106 and contents service server 107 according to the present embodiment can be independently operated for each broadcasting station 105. The user terminal device 101 obtains sub-contents serving as detailed information, by distinguishing the meta information reference ID, sub meta information, etc., for each broadcasting station 105.

For example, program meta information or sub meta information of a broadcasting station 105-B may be searched based on keywords contained in program meta information or sub meta information obtained from a broadcasting station 105-A, and thus the user can obtain program meta information or sub meta information without taking into consideration the difference of the broadcasting stations 105.

Also, the directory service server 106 and contents service server 107 according to the present embodiment can be used individually for each program sponsor, each contents provider, etc. Even in cases of being used individually for each program sponsor, each contents provider, etc., the broadcasting station 105 assigns the meta information reference ID. In the event of operating independently for each program sponsor or each contents provider, a directory service server 106-A holds the meta information reference ID or sub meta information or the like relating to a sponsor of a program A, and a directory service server 106-B holds the meta information reference ID or sub meta information or the like relating to a sponsor of a program B.

The input unit 511 is capable of selecting broadcast programs or icons or the like for suitable contents components from the EPG display screen or the like displayed on the display unit 142. Upon selection, the user terminal device 101 obtains detailed information such as sub-contents or the like related to the broadcast program, and displays this in a newly-assigned display region on the display unit 142, and also generates selection information from the program meta information or contents meta information relating to the selected contents components.

Selecting the broadcast program with the input unit 511 enables the user terminal device 101 to obtain sub meta information corresponding to the detailed information and the like related to the program, and for this to be displayed. Accordingly, along with obtaining the desired sub meta information from the main meta information displayed on the display unit 142, the sub-contents correlated with the sub meta information can be obtained. Note that the input unit 511 is not restricted to selecting sub meta information, and may also select main meta information as well.

Upon the selection information generating unit 504 receiving operating instructions for selecting a contents component form the input unit 511, the selection information generating unit 504 generates selection information wherein is set the meta information reference ID to which the selected broadcasting program belongs, and attributes values and the like such as the title of the broadcast program. The generated selection information is transmitted via the network 103 to the directory service server 106 or the user information managing server 113.

The acquisition request unit 502 transmits an acquisition request for obtaining searching information from the directory service server 106, via the network 103. All URIs of the directory service servers 106 which the user terminal device 101 has can be used as the transmission destination for transmitting acquisition request information.

The meta information acquisition/storage unit 503 receives and stores the program meta information or sub meta information from the directory service server 106 or the user information managing server 113 via the network 103.

The display screen generating unit 507 generates data for displaying on the display unit 142 using templates and the like, based on the information received form the servers 106 and 107. For example, the display screen generating unit 507 obtains sub meta information or sub-contents received from the servers 106 and 107, and generates display data by template conversion using XML and XSLT.

A display region generating unit 509 generates display regions by assigning data generated by the display screen generating unit 507 to the display regions for displaying on the display unit 142.

Images made up of at least one of text, shapes, designs, etc., in icons displayed in the EPG or the like, may be sorted in a storage unit beforehand, or may be received from the directory service server 106 or user information managing server 113.

### (Configuration of Display Screen)

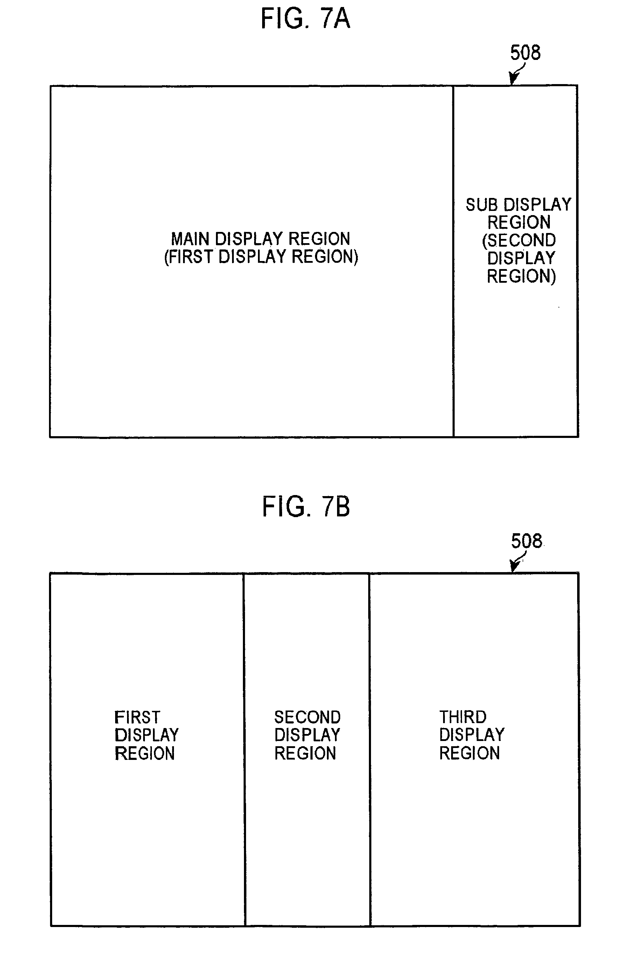

Next, the configuration of the display screen of the ECG service, which is a general concept of the ECG service, will be described with reference to Figs. 7A and 7B. Figs. 7A and 7B are explanatory diagrams schematically illustrating the structure of the display screen of ECG service.

As shown in Fig. 7A, the display unit 142 is configured of one or more display regions. A main display region (first display region) is first assigned to the display unit 142. In the event there is the need to display regions for multiple sets of related information, such as main contents and sub-contents, the main display region serves as the root or parent component region which is at the highest hierarchical level. This highest region displaying the parent component will be called the first display region. EPG information which is an electronic program guide of the broadcast program, or pictures of the broadcast program, etc., are displayed in the main display region according to the present embodiment.

Also, as shown in Fig. 7A, a sub display region (second display region) is a region for displaying related information or detailed information or the like in the event of selecting a contents component from a contents component (subject) group displayed in the main display region. The sub display region of the first display region is called the second display region.

The contents components according to embodiments of the present invention are the components of multiple contents such as items and issues configured in the main contents, and in the event that the main contents are EPG information for example, examples of the components may be the contents of the programs, the performers, music, and so forth, configured in the EPG information.

Also, the term "select" as used according to the present embodiment may mean clicking on a contents component with a mouse of the input unit 511 for example, specifying a contents component by pressing a button, placing a mouse cursor on the contents component (onMouse), displaying a frame (cursor) for selecting with a remote control operation on the contents component, etc.

As shown in Fig. 7B, besides the main display region and sub display region, a third display region can be assigned to the display unit 142. Multiple display regions can be assigned to the display unit 142 in a hierarchical structure, as the first display region, second display region, and third display region shown in Fig. 7B. Accordingly, the display regions for the multiple hierarchical levels display have a parent-and-child relation. For example, for the third display region under the hierarchical level of the second display region, the second display region is the parent region thereof.

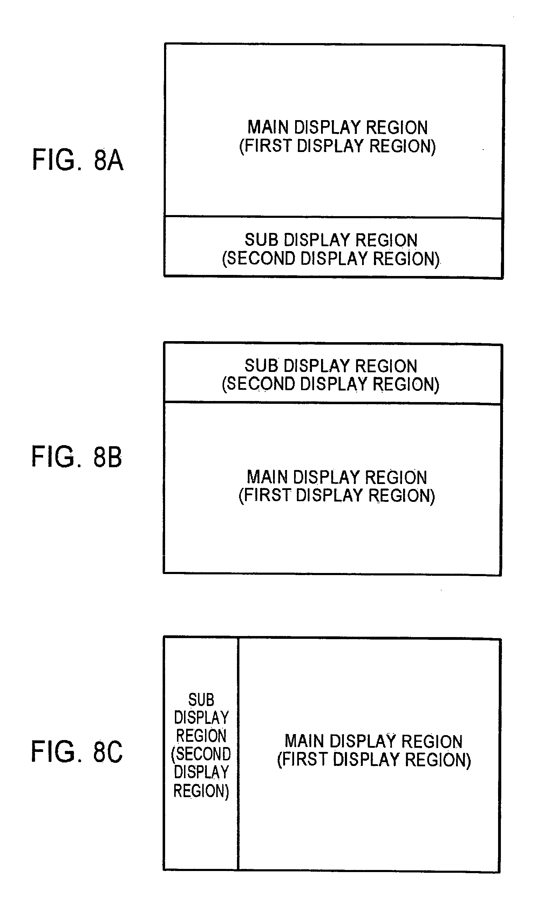

Also, as shown in Figs. 8A through 8C, there can be various patterns of the display regions being placed on the display region 142. Figs. 8A through 8C are explanatory diagrams schematically illustrating display regions appropriated to the display unit according to the present embodiment.

As shown in Fig. 8A, the display unit 142 may display the main display region and the sub display region placed with the main display region above the sub display region, or as shown in Fig. 8B, the display unit 142 may display the sub display region above the main display region. Further, as shown in Fig. 8C, the display regions may be displayed with the sub display region to the left and the main display region to the right. Of course, layouts according to the present embodiment for arranging the main display region and sub display region are not restricted to these examples.

There may be cases wherein multiple hierarchical levels are involved besides the main display region and the sub display region, such as the third display region. Accordingly, hereinafter, the parent-child relation of the display regions of the hierarchical levels will be represented by numbers, i.e., the sub display region of the first display region is the second display region, the sub display region of the second display region in the event that the second display region is serving as the main display region is the third display region, and the sub di splay region of the N'th display region in the event that the N'th display region is serving as the main display region is the N+1'th display region, and so forth.

While the display unit 142 according to the present embodiment appropriates the main display region and sub display region separately, the properties of the display regions are the same. Accordingly, there is no particular restriction in mutual relation according to area or the like of the display regions. An example of the relation is to display the main display region with the greatest area.

### (Placement Patterns Of Contents Components)

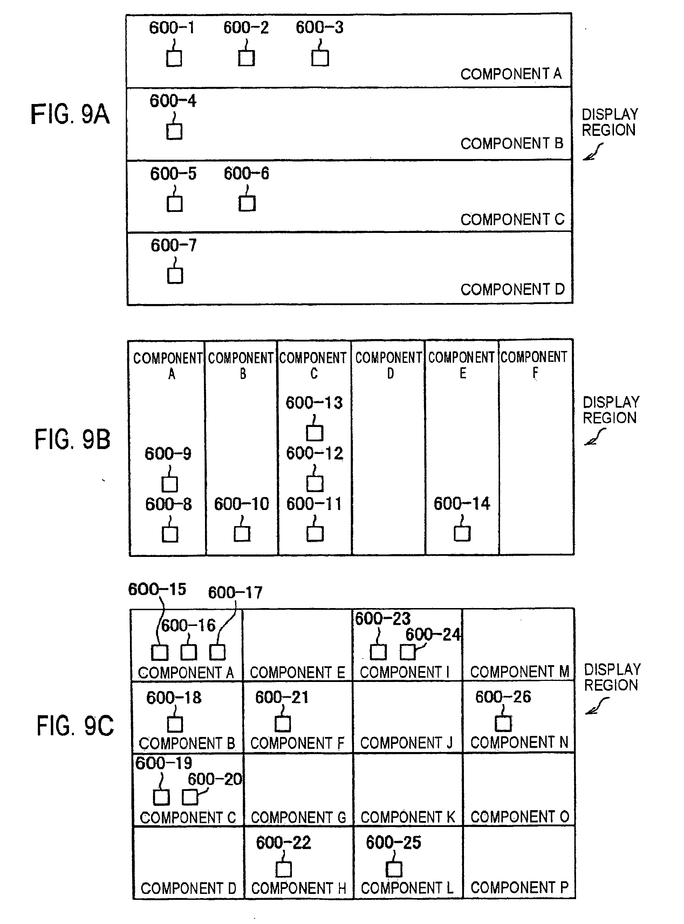

Next, the placement patterns of the contents components according to the present embodiment will be described with reference to Figs. 9A through 9E. Figs. 9A through 9E are explanatory diagrams schematically illustrating the configuration of the contents components to be displayed on the display regions according to the present embodiment. Though description will proceed with reference to Figs. 9A through 9E, multiple contents components contained in the contents information are displayed within the display regions as described later. Examples of display patterns include list types, table types, combined formats such as with EPG information for example, and irregular types. Any display pattern is acceptable as long as the target components can be identified from the multiple contents components.

In the event that contents components are further displayed as a region within the display region, child contents components such as icons or the like can be placed within. For example, multiple related icons or the like can be placed within the display region of a contents component in a list or table, thereby forming hierarchical levels.

First, as shown in Fig. 9A, the display region has the component A, component B, component C, and component D placed vertically as in a list, form the top down. The display regions are the main display region, sub display region, and so forth. The component A, component B, component C, and component D include icons 600 (600-1, 600-2, and so on up to 600-7) as child components.

Selecting one of the component A, component B, component C, and component D by clicking with a mouse displays the detailed information correlated to the selected contents component on another display region. Also, selecting an icon 600 by clicking with the mouse or the like displays the various types of detailed information related to the contents component to which the icon 600 is provided, by displaying in an assigned display region. In the event that there is no detailed information correlated with the contents component, no icon 600 is contained in that contents component.

Displaying icons for each contents component, to display the detailed information which is sub-contents, as related information of the contents component, allows the user to easily visually recognize that the greater the number of icons is, the more detailed information there is. Also, the user has more opportunities to intentionally access such contents components and attempt to obtain information.

One contents component can have one or multiple icons 600 for each detailed information category to be displayed. Accordingly, selecting the icon 600 enables the detailed information of the desired category to be displayed effectively. For example, in the event that the main contents is EPG information, examples of the categories according to the present embodiment include program contents, performers, books, music, and so forth. Accordingly, providing a program contents icon 600, a performers icon 600, a books icon 600, and a music icon 600, for each program corresponding to the contents component enables the detailed information and the like of the performers related to the program, and so forth, to be displayed in the display region.

Next, as shown in Fig. 9B, the display regions are displayed in the order of component A, component B, component C, component D, component E, and component F, from the left as in a list. Also, the component A, component B, component C, component D, component E, and component F include icons 600 (600-8, 600-9, and so on up to 600-14) as child components. Other features are generally the same as those of the arrangement shown in Fig. 9A, and accordingly, description thereof will be omitted.

Next, as shown in Fig. 9C, the contents components are placed on the display region in a table shape like a checkerboard, with component A, component B, component C, and component D placed in order from the top down at the leftmost portion, then component E, component F, component G, and component H, and so on through component P. Also, the component A, component B, component C, component D, on through component P, include icons 600 (600-15, 600-16, and so on up to 600-26) as child components. Other features are generally the same as those of the arrangement shown in Fig. 9A, and accordingly, description thereof will be omitted.

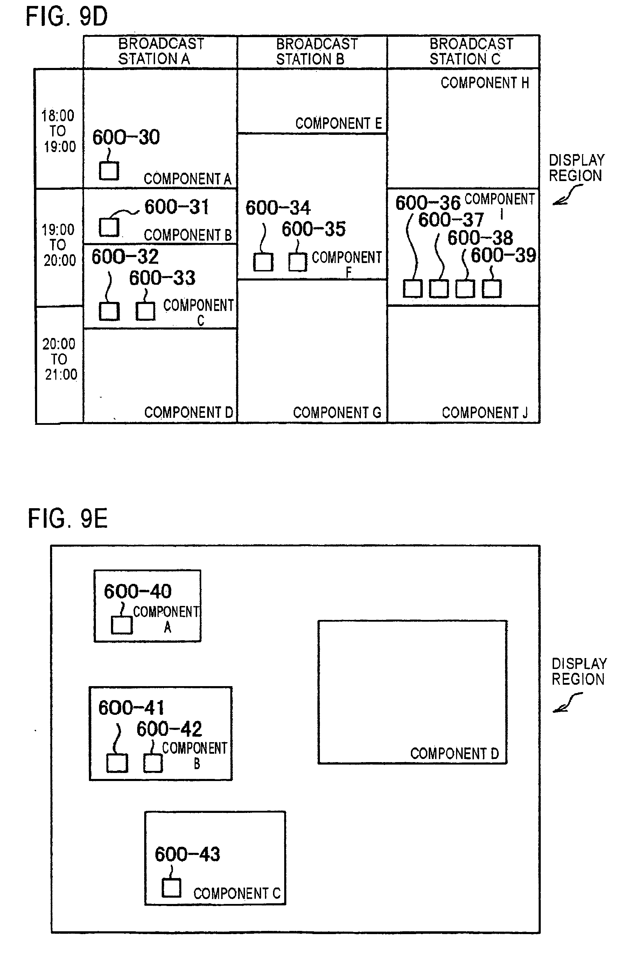

As shown in Fig. 9D, as a modified example of a table format, the content components are placed on the display region in a format wherein the vertical axis represents the time and the horizontal axis represents the broadcast station, such as for displaying EPG information. With the contents components in the EPG information, first, with station A, component A, component B, and component C are placed in order of broadcast time, then with station B, component E, component F, and component G are placed in order of broadcast time, and further, with station C, component H, component I, and component J are placed in order of broadcast time. Also, the component A, component B, component C, on through component J, include icons 600 (600-30, 600-31, and so on up to 600-39) as child components. Other features are generally the same as those of the arrangement shown in Fig. 9A, and accordingly, description thereof will be omitted.

Next, as shown in Fig. 9E, the contents components are placed irregularly in the display region (irregular format). Component A, component B, component C, and component D are placed from the upper left corner. Also, the component A, component B, component C, and component D include icons 600 (600-40, 600-41, and 600-43) as child components. Other features are generally the same as those of the arrangement shown in Fig. 9A, and accordingly, description thereof will be omitted.

### (Appropriation Variations Of Display Regions)

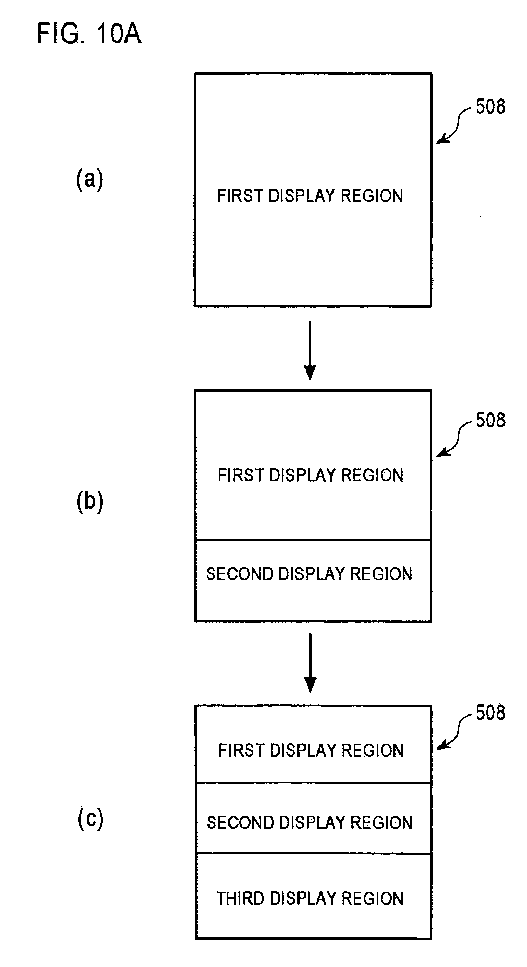

Next, variations of appropriating the display regions to the display unit 142 according to the present embodiment will be described with reference to Figs. 10A through 10F. Figs. 10A through 10F are explanatory diagrams schematically illustrating the transition of appropriation of display regions according to the present embodiment.

First, as indicated by (a) in Fig. 10A, a first display region is displayed on the display unit 142. The first display region displays contents information such as EPG information or the like, which is main contents, for example. Upon a contents component such as a program for example being selected from the first display region shown in Fig. 10A(a), a display region for displaying the detailed information tied to the contents component is newly appropriated.

As shown in Fig. 10A(b), the second display region newly appropriated is placed beneath the first display region. Accordingly, the first display region is reduced in size by however much area is used to display the second display region. At the time of reducing the size of the first display region, reduction can be made while leaving only the necessary portions; this will be described later. As shown in Fig. 10A(b), the first display region and the second display region are appropriates so as to fit within the one screen on the display unit 142, and accordingly, both display regions can be visually recognized overall.

Detailed information relating to the contents component (programs, etc.) within the first display region is displayed in the second display region, and accordingly, there is a principal and accessory relation between the first display region and the second display region. The display regions have such principal and accessory relations even in the event that the number of hierarchical levels increases, such as the first display region, second display region, third display region, and so on. For example, the fifth display region and the sixth display region have principal and accessory relations.

Next, As shown in Fig. 10A(c), upon a contents component displayed in the second display region being selected, a display region for displaying the detailed information tied to the contents component is newly appropriated as the third display region. Examples of the contents components displayed in the second display region include, profiles of performers in the program, stories of previous episodes, and various items, issues, and so forth. As shown in Fig. 10A(c), the third display region newly appropriated is placed beneath the first display region and the second display region which had been appropriated before, so as to fit within the display unit 142.

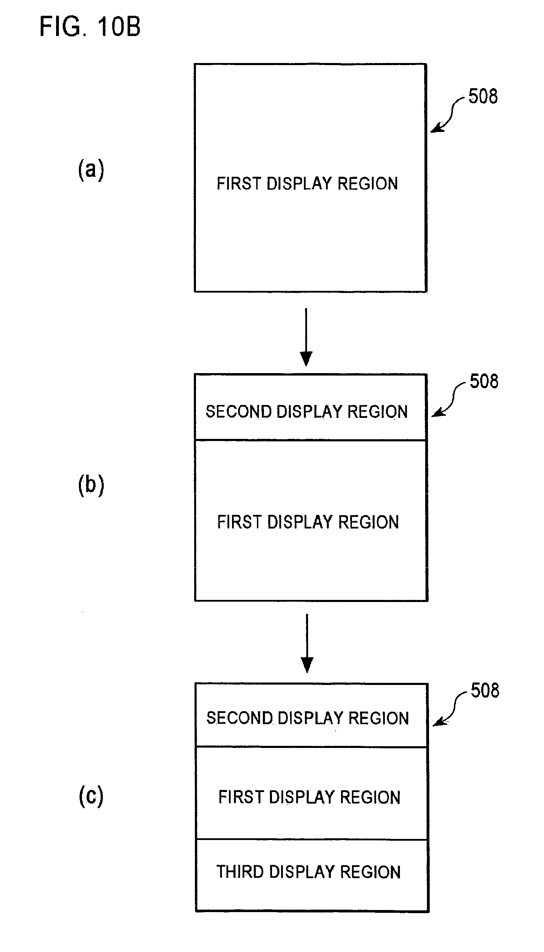

Next, as shown in Fig. 10B(a), a first display region is displayed on the display unit 142. The first display region displays contents information such as EPG information or the like, which is main contents, for example. The difference between this arrangement and that in Fig. 10A will be described.

As shown in Fig. 10B(b), the second display region is placed above the first display region. Accordingly, the first display region is reduced in size by however much area is used to display the second display region.

Next, as shown in Fig. 10B(c), upon a contents component displayed in the second display region being selected, a display region for displaying the detailed information tied to the contents component is newly appropriated as the third display region. As shown in Fig. 10B(c), following the first display region and the second display region being appropriated, the third display region newly appropriated is placed beneath the first display region, so as to fit within the display unit 142.

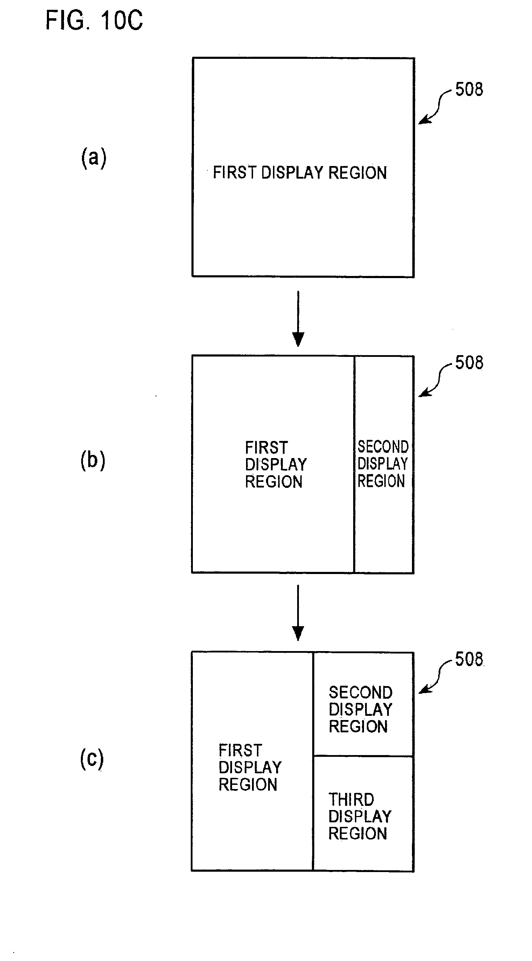

Next, as shown in Fig. 10C(a), a first display region is displayed on the display unit 142. The first display region displays contents information such as EPG information or the like, which is main contents, for example. The difference between this arrangement and that in Fig. 10A will be described.

As shown in Fig. 10C(b), the second display region is placed to the right of the first display region. Accordingly, the first display region is reduced in size by however much area is used to display the second display region.

Next, as shown in Fig. 10C(c), upon a contents component displayed in the second display region being selected, a display region for displaying the detailed information tied to the contents component is newly appropriated as the third display region. As shown in Fig. 10C(c), following the first display region and the second display region being appropriated, the third display region newly appropriated is placed beneath the second display region, so as to fit within the display unit 142. Accordingly, the second display region is reduced in size by however much area is used to display the third display region.

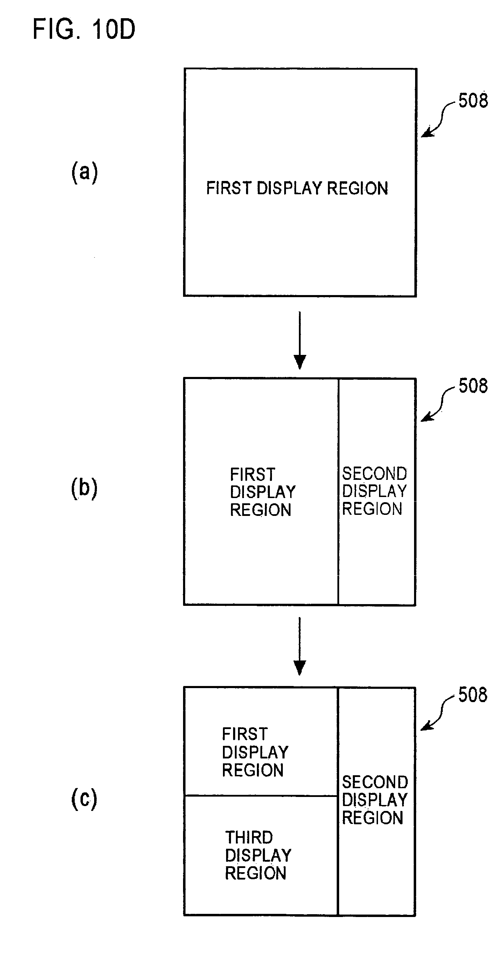

Next, as shown in Fig. 10D(a), a first display region is displayed on the display unit 142. The first display region displays contents information such as EPG information or the like, which is main contents, for example. The difference between this arrangement and that in Fig. 10A will be described.

As shown in Fig. 10D(b), the second display region is placed to the right of the first display region. Accordingly, the first display region is reduced in size by however much area is used to display the second display region.

Next, as shown in Fig. 10D(c), upon a contents component displayed in the second display region being selected, a display region for displaying the detailed information tied to the contents component is newly appropriated as the third display region. As shown in Fig. 10D(c), following the first display region and the second display region being appropriated, the third display region newly appropriated is placed beneath the first display region, so as to fit within the display unit 142. Accordingly, the first display region is reduced in size by however much area is used to display the third display region.

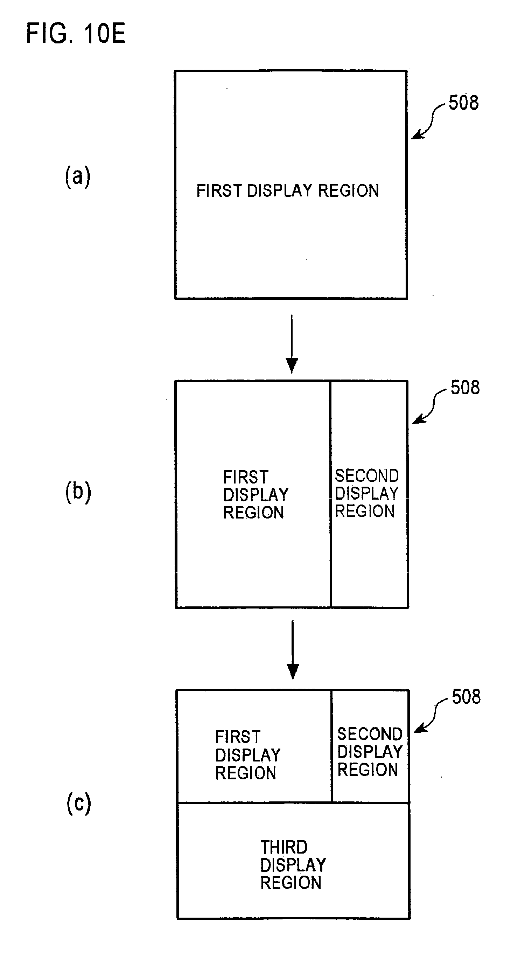

Next, as shown in Fig. 10E(a), a first display region is displayed on the display unit 142. The first display region displays contents information such as EPG information or the like, which is main contents, for example. The difference between this arrangement and that in Fig. 10A will be described.

As shown in Fig. 10E(b), the second display region is placed to the right of the first display region. Accordingly, the first display region is reduced in size by however much area is used to display the second display region.

Next, as shown in Fig. 10E(c), upon a contents component displayed in the second display region being selected, a display region for displaying the detailed information tied to the contents component is newly appropriated as the third display region. As shown in Fig. 10E(c), following the first display region and the second display region being appropriated, the third display region newly appropriated is placed beneath the first display region and second display region, so as to fit within the display unit 142. Accordingly, the first display region and second display region are reduced in size by however much area is used to display the third display region.

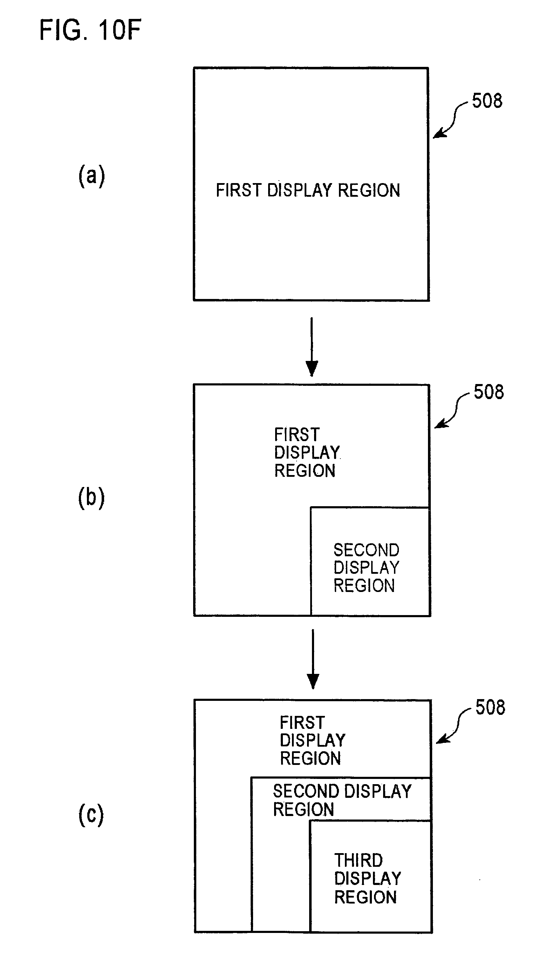

Next, as shown in Fig. 10F(a), a first display region is displayed on the display unit 142. The first display region displays contents information such as EPG information or the like, which is main contents, for example. The difference between this arrangement and that in Fig. 10A will be described.

As shown in Fig. 10F(b), the second display region is placed to the lower right of the first display region. Accordingly, the first display region is reduced in size by however much area is used to display the second display region.

Next, as shown in Fig. 10F(c), upon a contents component displayed in the second display region being selected, a display region for displaying the detailed information tied to the contents component in the second display region is newly appropriated as the third display region. As shown in Fig. 10F(c), following the first display region and the second display region being appropriated, the third display region newly appropriated is placed within the second display region. At then time of the third display region being placed, the second display region ensures sufficient space for displaying the third display region, while also ensuring sufficient space for displaying itself. Accordingly, all of the space of the second display region is not taken up by displaying the third display region. The expanded region of.the second display region and the region of the third display region are ensured by reducing the first display region. The first display region, second display region, and third display region are all appropriated so as to fit within the screen of the display unit 142.

In the descriptions of the display unit 142 made with reference to Figs. 10A through 10F, an example has been given wherein only the first display region is displayed to begin with, but the present invention is by no means restricted to this example, and for example, the first display region and the second display region may be displayed on the display unit 142 to begin with.

The display size appropriated to the display regions of each hierarchical level shown in Figs. 10A through 10F change dynamically according to the amount of contents information and the attributes. Also, display regions are appropriated to regions suitable for the size appropriated to the display region. Accordingly, the layout of the appropriated display regions differ according to the amount of contents information and the attributes. Note that the amount of contents is the size of the region necessary to display the contents information or the data size of the contents information, and the amount of information is obtained based on at least one of the size and data size.

Now, with digital broadcasts, (BS (Broadcasting Satellite) digital, CS (Communication Satellite) 110°, terrestrial digital broadcast, etc., and also means for providing similar services other than by broadcast waves, such as cable and FTTH), users who use data broadcasts synchronized with the program normally would be viewing television pictures using the entire screen of the terminal such as a television set or the like, and from there go to the data broadcast screen. In this case, generally, the television picture screen is reduced to a fraction of the entire screen and displayed, and the data (images and text information) is displayed on the other region (usually an L-shaped region).

ECG services are often provided as provided as data service accessory to such television viewing terminals. In such cases, there will most likely be cases wherein the portion providing the ECG service and the portion displaying the television picture are displayed in the same screen at the same time. With the image providing system 100 according to the present embodiment, the ECG service and broadcast program picture are provided.

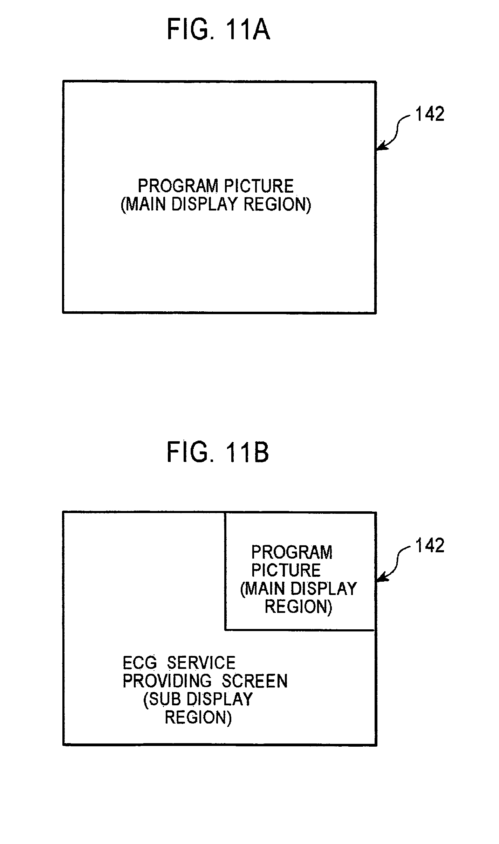

Now, the display screen according to the present embodiment displayed by the ECG service of the user terminal device 101 while displaying the program screen will be described with reference to Figs. 11A and 11B. Figs. 11A and 11B are explanatory diagrams schematically illustrating the display screen displayed by the user terminal device 101 according to the preset embodiment.

As shown in Fig. 11A, first, the user terminal device 101 displays the picture of a program broadcast from a broadcasting station on the display unit 142. Also, the ECG service displays an appropriated display region in the screen for displaying the various detailed information and the like relating to the program, along with the broadcast program.

Accordingly, in the event that there is the need to display multiple related information sets in the display region, a display region where a parent contents component from a hierarchical perspective is displayed will be called a main display region for sake of facilitating description, as with the case of hierarchical relations between parent and child content components. Particularly, the display region for displaying the parent component at the highest hierarchical level will be called the first display region.

Specifically, as shown in Fig. 11B, the above-described display region division is used to appropriate a part of the divided display region as the region for displaying the television program, for example. Also, the picture display at the same time as the detailed information is not restricted to the television picture, rather, picture streams distributed on-demand and picture file playbacks are also handled in the same way.

Accordingly, as shown in Fig. 11B, in the event that a contents component is selected from the contents components group displayed in the main display region, a display region is appropriated for displaying related information thereof, and so forth by providing the ECG service. The sub display region of the first display region will be referred to as the second display region.

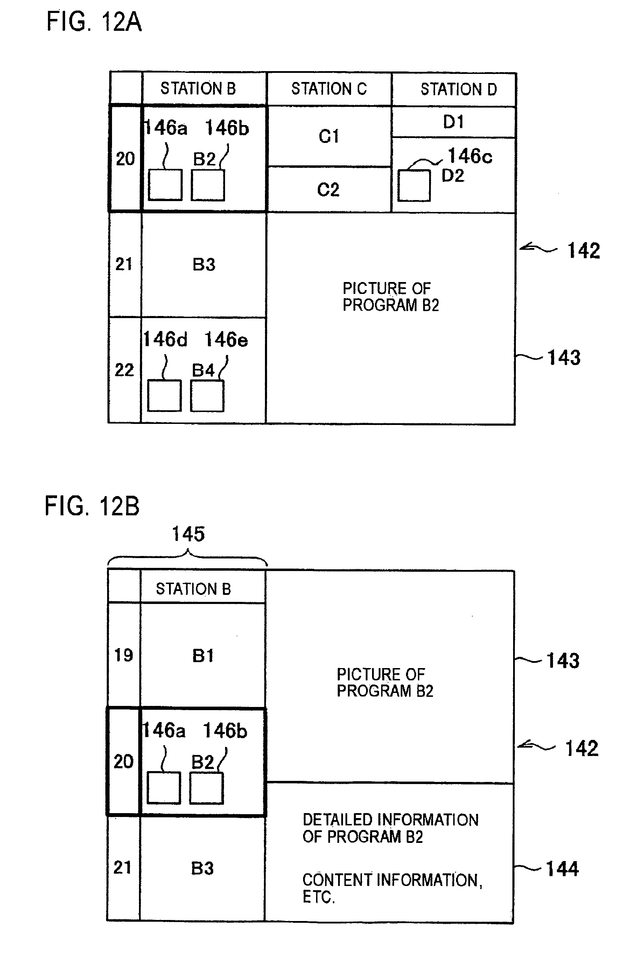

Next, the combination of the program picture and the EPG type program guide displayed in a display region other than the picture display region on the display unit 142 according to the present embodiment will be described with reference to Figs. 12A through 14.

As shown in Fig. 12A, a display region 143 where a program picture is displayed, and an EPG made up of program meta information and the like, are displayed within the screen of the display unit 142, with the EPG being displayed at portions other than where the display region where the program picture is displayed. The program displayed in the display region 143 is the program selected by the EPG.

Upon a program which is a contents component, or an icon 146 displayed within the program (contents component) frame of the EPG being selected with the input unit, the display region 145 displaying the EPG in Fig. 12A is reduced as shown in Fig. 12B, a display region 144 is newly appropriated, and information relating to the selected program or icon 146 is displayed.

For example, in the event of moving the heavy frame (cursor) shown in Fig. 12A with the input unit 511 to the program B2 and selecting the icon 146a, a display region 144 for displaying detailed information relating to the program B2 is appropriated to the lower right side of the display unit 142 shown in Fig. 12B.

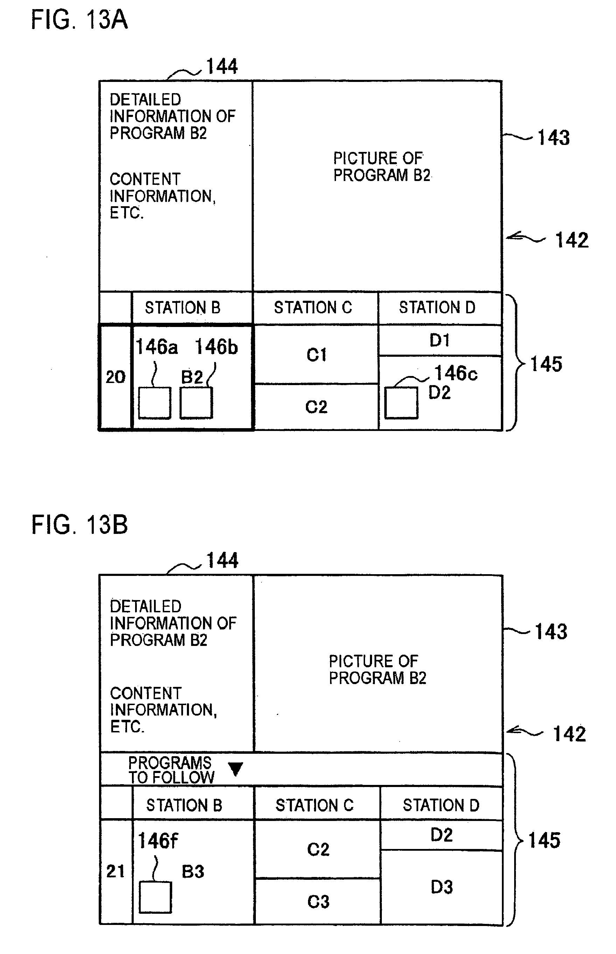

Next, as shown in Fig. 13A, the display region 143 where the program picture is displayed, and the display region 145 displaying the EPG made up of program meta information and the like, are displayed within the screen of the display unit 142. This differs from the arrangement in Figs. 12A and 12B in that the EPG information is displayed to the lower side.

Further, upon a program which is a contents component, or an icon 146 displayed within the program (contents component) frame of the EPG being selected with the input unit 511, information relating to the selected program or icon 146 is displayed.

Also, as shown in Fig. 13B, an arrangement may be made wherein instead of displaying the icon for the contents component or program selected with the input unit, the EPG relating to the next time slot for the picture being broadcast in the display region 143, for example, may be displayed in the display region 145. Displaying the EPG relating to the next time slot aids the user in continuing to view or record desired programs. Note that the display region 145 and the display region 144 are in a hierarchical relation, with the display region 145 being the main display region and the display region 144 being the sub display region.

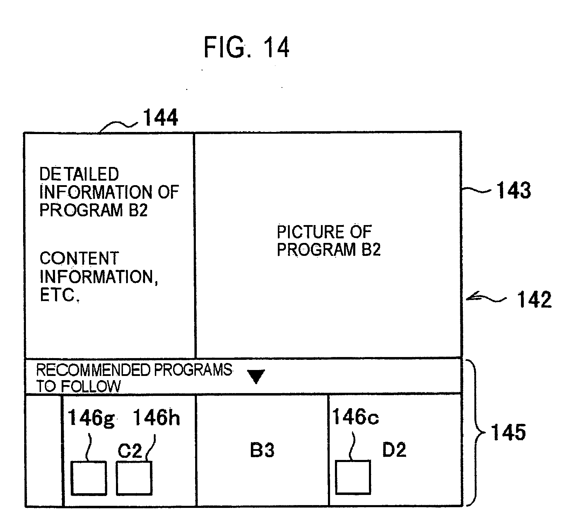

Appropriated on the display unit 142 shown in Fig. 14 are a display region 143 where the program picture is displayed, a display region 144 where information relating to the contents component of the icon or program selected by selecting a contents component in the EPG, and a display region 145 for performing searches based on keywords, specifying programs which the broadcasting station 105 providing the ECG service recommends, and displaying results extracted by a preference analyzing engine (not shown) of the user terminal device 101 to make recommendations. Also, note that while the preference analyzing engine according to the present embodiment is described with reference to an example of being provided to the user terminal device 101, the present invention is by no means restricted to this arrangement, and the preference analyzing engine may be provided to the directory service server 106 or the user information managing server 113, instead.

### (Providing Search Information)

With the search information system 100 according to the present embodiment, in addition to the basic services provided as ECG services, the user terminal device 101 can perform searches using keywords.

In the event of making a search using keywords or the like, the most common method for using keywords is to directly input keywords into an input form in the event that the user terminal device 101 is a personal computer or the like, but in the event that the user terminal device 101 is a television set or the like without a standard keyboard provided, a software keyboard or the like needs to be provided, which is troublesome. Note that a software keyboard is a simulated keyboard displayed on the display screen used to input text or the like.

Accordingly, in the event that the terminal is a television set or the like with limited remote control operations, the keyword specifying method for the search is one wherein the user selects items displayed on the screen by user operations.

With the ECG service, attributes and attribute values set as meta information are displayed as items for detailed information in the region for displaying the detailed information of the program or contents.

Items which can be used as keywords for a search are "focused" on to be placed in a selectable state by the user. For example, placing the cursor of a pointing device such as a mouse or the like on an item (text or image), or changing the focus by remote control operations, is "focusing".

Clicking the mouse or pressing a button on the remote control to select items in a focused state enables the attribute values of the items to be used as keywords in keyword search processing.

That is to say, the meta information relating to the contents components contained in the EPG provided from the information providing device 104 functions as search information for performing a search, and selecting appropriate meta information with the user terminal device 101 allows the related contents meta information or the like to be easily searched.

For example, selecting from the detail information items for a certain program an item "Cast (name) = Ms. B" accesses the directory service server managing the meta information and requests search processing with the "Name" of "Ms. B" as the keyword yields the search results, which are displayed. An example of the display method of the search results will be described later.

Now, while selecting one item as described above to use as a keyword is relatively simple in operation, but multiple keywords cannot be set for the search, which is a problem, since a search with only one keyword may yield a great number of search results being displayed. Accordingly, just the search results having the attribute values which the user is searching can be displayed by narrowing down the search using other components as keywords to carry out a multiple-keyword search (an AND search, OR search, etc.).

For example, in the event that the user wants to know information in "Category = CD" relating to "Name = Ms. B", searching with only "Ms. B" as the keyword will yield unnecessary information such as programs and books about Ms. B, but an AND search for "Category = CD" and "Name = Ms. B" will narrow down the results.

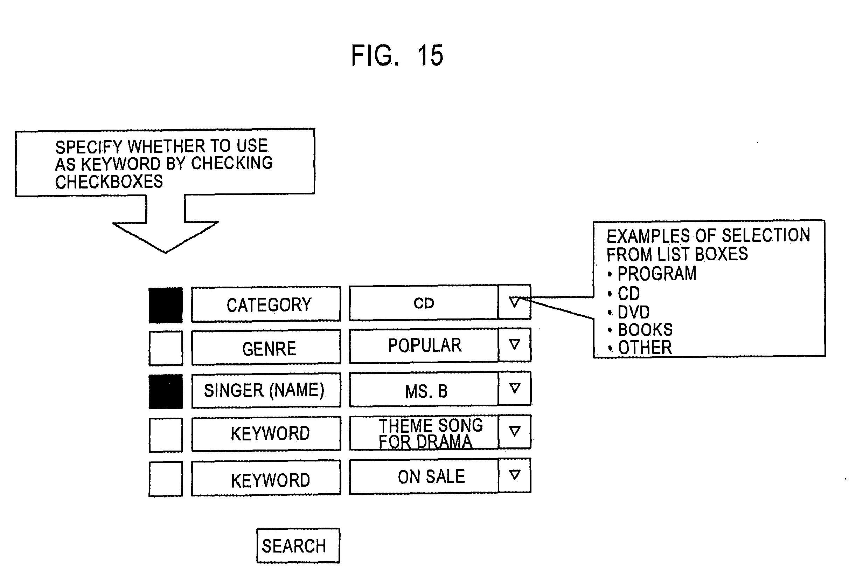

As shown in Fig. 15, one example of a method to select multiple keywords and make a search is to select attribute values serving as keywords in the form of list boxes from the attributes list screen displayed on the display unit 142. Here, checkboxes are shown next to the attribute items, and a search is made with only the attribute values regarding which the box is checked (filled in solid) as the keyword. However, while several of the items displayed on the display region at the same time can be specified as keywords on the screen using the attributes list screen shown in Fig. 15, items not shown at the same time cannot be specified. Note that a search keyword is a keyword used for searching processing.

In the event of displaying data on a television screen or the like, the amount of information which can be displayed at the same time is generally less than that of displaying on a PC display, due to considerations in resolution, the distance between the user and the screen, and so forth. The fact that the amount of information which can be displayed at the same time is less means that displaying detailed information of a program A and detailed information of a content A at the same time is difficult.

In such a case, the user would need to close the detailed information display for the program after viewing the detailed information of the program A and then separately open and view the detailed information of the content A. Here, while "Name = Ms. B" could be selected from the detailed information of the program A and the "Category = CD" could be selected from the detailed information of the content A so as to search related programs and contents, these are not displayed on the same screen at the same time, so "Name = Ms. B" and "Category = CD" cannot be set as keywords to be searched at the same time.

Accordingly, the user information managing server 106 of the information providing device 104 according to embodiments of the preset invention keeps search information which the user terminal devices 101 can use in common in a search information list in the user information even if the screen of the user terminal device 101 is changed, and stores keywords and the like which the user has shown interest in for each screen, and these can be provided to the user terminal device 101 as search keywords.

Note that with the present embodiment, the object of searching is the detailed information and the like of programs and contents to which meta information has been added, and may include searches of information such as attributes besides text strings for the keywords, but an arrangement may be made wherein only text strings are searched with as well. Also, an arrangement may be made wherein a keyword keeping region (keyword pool region) is kept in the storage unit 510 of the user terminal device 101, with the user terminal device 101 temporarily managing the search information.

### (Registration of Search Information)

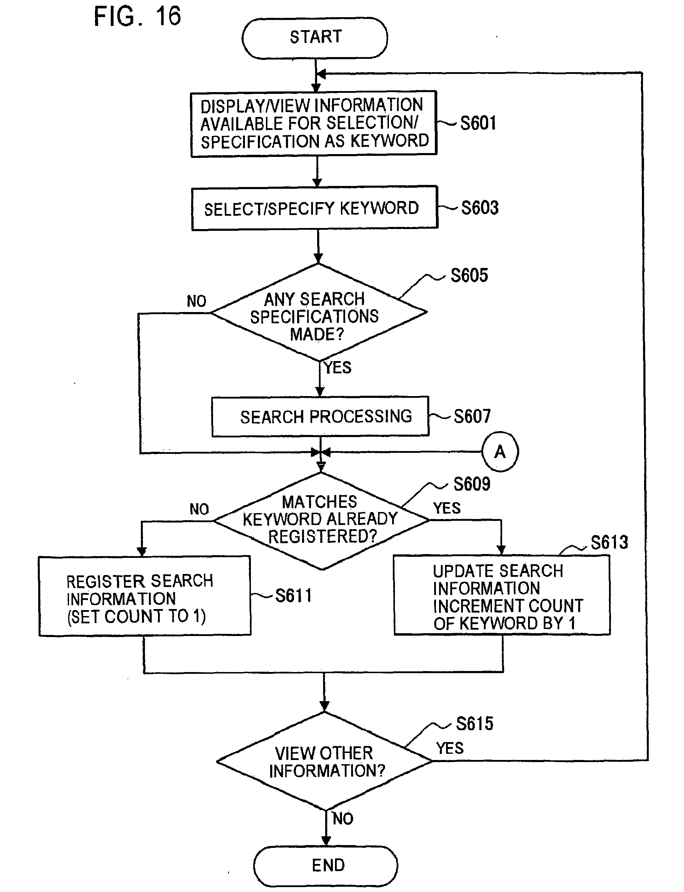

Next, registration of search information with the information providing system 100 according to the present embodiment will be described with reference to Fig. 16. While description will be made regarding a case wherein the information providing device 104 carries out the executing, this is applicable to an arrangement wherein the user terminal device 101 carries out the execution as well.

As shown in Fig. 16, content meta information of detailed information of the program and contents is displayed on the screen 142 of the user terminal 101, having been provided from the information providing device 104 (S601).

Next, in the state with this displayed, the user takes interest in a certain keyword and selects the meta information relating to the contents component or an icon or the with the input unit 511 (S603). Note that at this time, a search can be performed with the keyword set to the attributes value or the like of the meta information belonging to the category of the icon or the meta information selected, or the user may simply register this to the keyword pool with no intent of performing a search at the immediate time.

Upon selection (S603), the selection information generating unit 504 generates selection information including whether or not a search was performed, the attributes of the selected meta information, or attributes values or the like, and transmits the selection information to the user information managing server 113 via the network 103. This is also applicable of a case wherein the user terminal device 101 generates the search information for the selection information and transmits the search information to the directory service server 106, so as to directly cause the directory service server 106 to execute a search.

Next, Upon receiving the selection information, the selection information accepting unit 308 of the user managing server 113 confirms whether or not thee are instructions to execute a search (S605). In the event that there are search instructions, the search information generating unit 310 generates search information by extracting attributes values and the like of the meta information selected, that is contained in the selection information, and transmits this to the directory service server 106. The search results are received by the user information managing server 113. Further, the user information managing server 113 generates a display screen of the search results for displaying the search results. The display screen for the search results is displayed on the display unit 142 of the user terminal device 101.

In the event that there is no instruction for a search, the search information generating unit 310 extracts the attributes or attribute values of the meta information contained in the search information, extracts keywords such as text strings input by the input unit 511, and generates search information. Further upon the search information being generated, the directory service server 106 confirms whether or not there is search information matching the search information registered in the search information list of the user information (S609).

In the event that there is no matching search information (S609), the search properties information appending unit 312 provides the search information with search properties information made up of usage frequency or previous usage state, and registers this to the search information list contained in the user information of the user. In the event that this is a first registration, "1" is set to the usage frequency in the search properties information. Also, an arrangement may be made wherein the search information is sent to the keyword pool region in the user terminal device 101 to be registered.

Conversely, in the event that there is matching search information (S610), the updating unit 315 increments the usage count by 1 in the search properties information contained in the search information in the search information list, or updates the recent search history, thereby updating the search properties information (S613).

Further, in addition to cases wherein the keyword match must be an exact match, there may be cases wherein a separate word indicating the same subject may be judged to be a match. For example, the name of a person may be that person's true name or a nickname, with either case being taken as a match. In this case, different keywords can be judged as matching the same subject by preparing a correlation table.

Next, in the event that there is no need to view other information (S615), the series of registration processing of search information at the information providing system 100 according to the present embodiment ends.

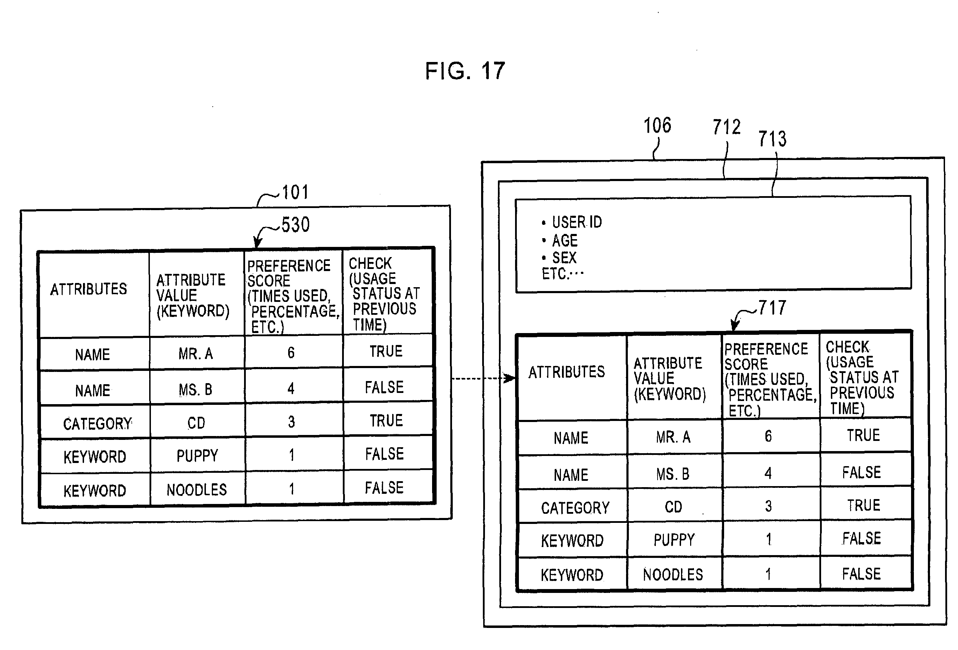

As shown in Fig. 17, with the registration processing for the search information according to the present embodiment, the user terminal device 101 has a keyword pool region 530 in the storage unit 510, with multiple sets of search information generated from the meta information and the like selected by the user being stored in the keyword pool region 530.

Further, at the user information managing server 113, the list managing unit 314 manages the user information 712 of each user. The user information 712 contains user profile information 713 and search information which has been formed into a search information list. Attribute values and attributes contained in the search information are searched with as keywords; details will be described later. Note that "keyword" in Fig. 17 indicates a text string or the like of a keyword directly input from the input unit 511. Further, in the event that a content component has been selected on the display screen or the like, or the user has directly made input into an input form, or the user has set the keyword beforehand, the keyword or the like is set as search information. Also, in addition to frequency information such as the number of times of use, frequency of use, etc., priority information indicating the priority at the time of screen display may be added as well.

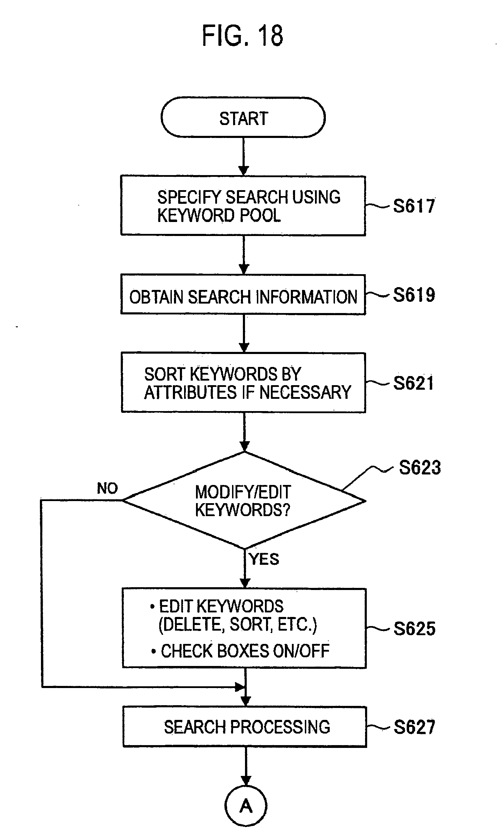

Next, the searching processing using the search information according to the present embodiment will be described with reference to Fig. 18. Note that while the following description will be made regarding a case executed by the information providing device 104, this may be executed at the user terminal device 101 as well.

As shown in Fig. 18, first, instruction for searching using the search information is made by the input unit 511 (S617). Next, the acquisition request unit 502 of the user terminal device 101 makes a request for obtaining search information to the user information managing server 113 via the network 103.

Next, the user information managing server 113 which has received the request obtains the search information from the search information list contained in the user information 712 of the corresponding user (S619). Or, the user terminal device 101 may directly obtain the search information from the keyword pool region 530 of the storage unit 510 instead.

Next, upon the user information managing server 113 obtaining the search information, the keywords contained in the search information are sorted based on the attributes contained in the search information or the priority information or the like by the assigning unit 317, to display the keywords on the display unit 142 (S621).

Next, search information including the sorted keywords is transmitted from the user information managing server 113, and received by the user terminal device 101. Determination is then made regarding whether to change or edit the keywords, such as combining keywords to use for searching from the keywords displayed on the screen of the user terminal device 101 (S623).

In the event of changing or editing keywords, deleting search information containing unnecessary keywords is performed with the "display" button displayed on the display unit 142, and adding keywords to use for the search is performed by checking the check box on (S625).

After editing (S625), selecting the "search" button displayed on the display unit 142 causes the user terminal device 101 to transmit the search keywords to the directory service server 106 or the user information managing server 113, and the search is carried out by the directory service server 106 (S627). Search results will be described later. Further, selecting the "search" button (S627) leads to the subsequent processing in order to register the above-described search information.

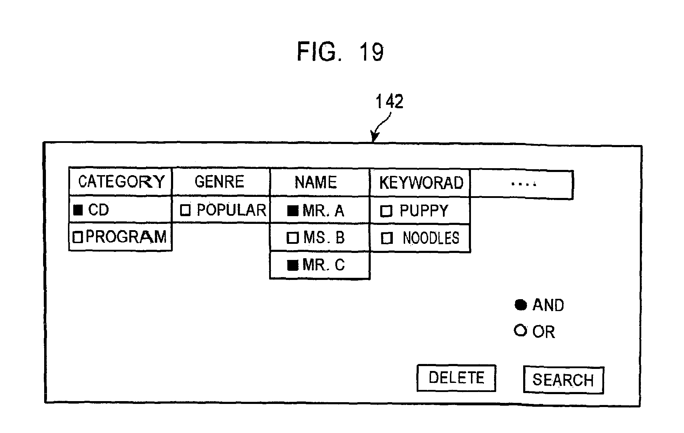

Now, the search information displayed on the display unit 142 will be described with reference to Fig. 19. As shown in Fig. 19, in the event of changing or editing keywords (S625), keywords which are the attribute values contained in the search information are displayed on the screen of the display unit 142 along with the checkbox, according to attribute such as "category" and "genre". The keywords displayed by attribute such as "category" may be displayed in different order according to the search frequency or the like contained in the search information or the like, for example. Further, an arrangement may be made wherein displaying of the items of attributes such as "category" is made from the left to the right in order of search frequency, contained in the search information of all keywords displayed by item.

Checking the checkbox by the keyword which the user desires to search with fills the box in solid, and the keyword is added to the search keyword. Selecting AND or OR with radio buttons allows selection of whether to perform an AND search or an OR search.

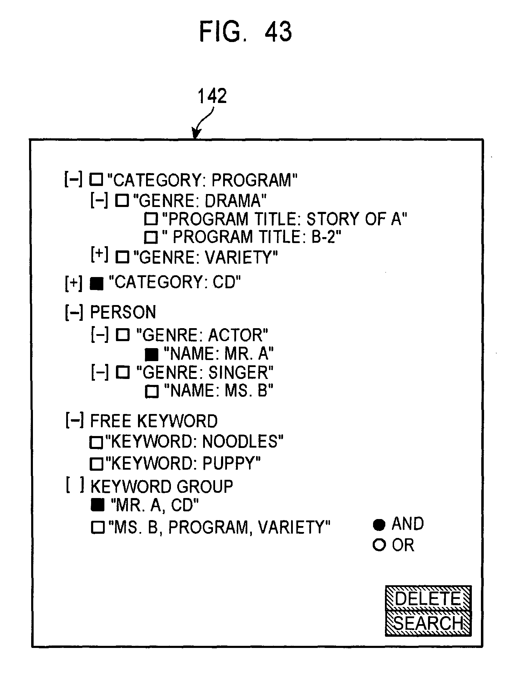

Also, examples of how the search information is displayed on the display unit 142 may include a case wherein the search information is always displayed on the screen with a constant region, a case wherein the search information is displayed on the screen at all times but only a part of the search information such as the keyword list or the like is displayed at the time of registering search information and so forth, a case wherein the size of the display region is variable so as to display the entirety only when using, such as making search specification, a case wherein a new region is secured by slide display or the like only in the event of using such as registering or editing search information, and so forth, and otherwise is not displayed. For example, as a modification of that shown in Fig. 19, Fig. 43 illustrates an arrangement displaying the keyword group in a tree format (the format used with Windows (a Registered Trademark) Explorer and so forth), using the hierarchical structure of the keywords displayed on the display unit 142. The [+] and [-] shown in Fig. 43 control opening and closing of nodes including the attributes such as "category" and keywords relating the attributes, and whether or not to use for the search can be controlled with the checkboxes displayed next to the keywords. Also, the order in which the components such as keywords of the tree are arrayed can be sorted by various standards, such as user preference (frequency of use), the order of use, user-specified, and so on. The hierarchical structure of search information including keywords will be described later.

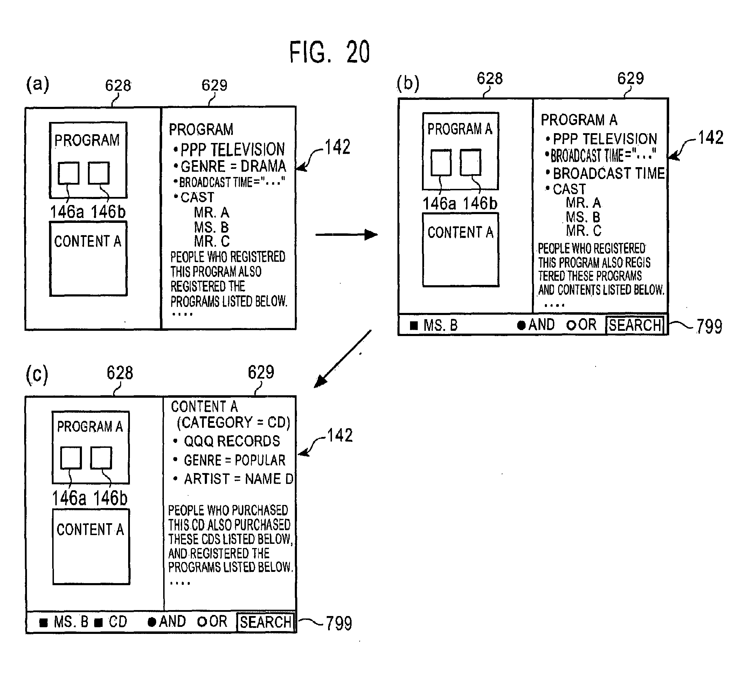

Next, as indicated by (a) in Fig. 20, upon "Ms. B" which is program meta information displayed on the display region 629 of the display unit 142 being selected, search information with the attribute "cast" and the attribute value "Ms. B" is generated, and is registered in the search information list on the keyword pool region 530 of the user terminal device 101. Upon registration, "Ms. B", which is the keyword of the search information, is displayed in the display region 799 at the bottom of the display unit 142 along with a checkbox, as indicated by (b) in Fig. 20. An EPG or the like may be displayed on the display region 628.

In the same way, detailed information relating to the contents A displayed in the display region 628 is displayed in the display region 629 as indicated by (c) in Fig. 20, and upon "CD", which is contents meta data being selected, search information wherein the attribute is "category" and the attribute value is "CD" is registered, and added to the display region 799 at the bottom of the display unit 142. Note that the arrangement is not restricted to cases wherein the search information is registered by selecting, and for example, an arrangement may be made wherein registration is made to the keyword pool region 530 or the like at the point of pressing the "search" button, for example.

At the time of registering the search information including the keyword, the correlation between the attribute and attribute value of the meta information can be retained, not just the text string of the keyword. For example, in the event that a search is made using only the text string "Ms. B", unnecessary information such as "look-alike of Ms. B on the set" from program information or the like may be searched as well, but searching for "Ms. B" along with the attribute "performer name" of "Ms. B" yields only information satisfying the condition of "performer = Ms. B".

Also, the ECG service providing side can also group keywords which will likely be combined for searching as group keywords, to be displayed in the detailed information. Such group keywords can be used for searching in the same way as the search keywords.

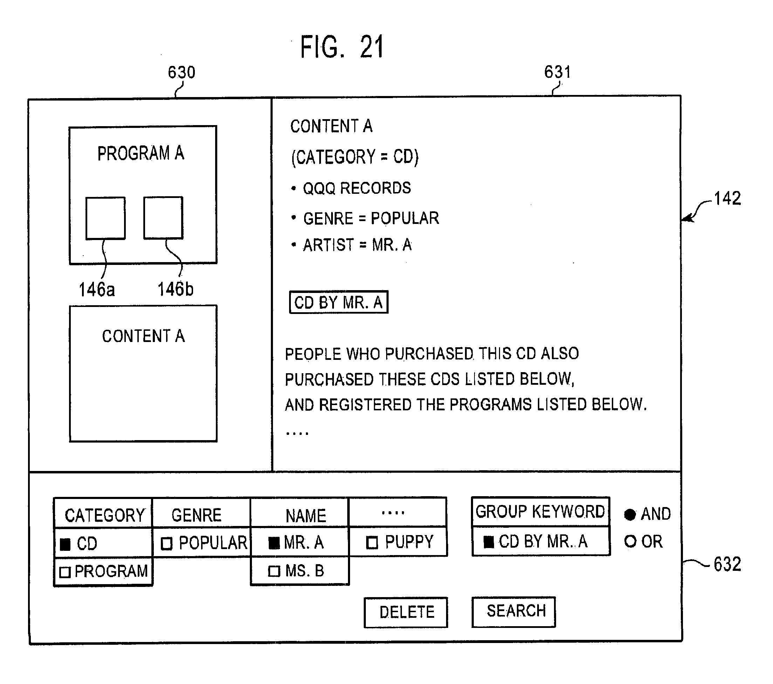

Now, with reference to Fig. 21, description will be made regarding group keywords according to the present embodiment. Displayed in the display region 630 are a program A with icons 146, and content A, and detailed information relating to the selected content A is displayed in the display region 631.

As displayed in the display region 631, in the event that "CD" and the musician "Mr. A" are displayed, with the likelihood of searching for "CD of Mr. A" being very high, in addition to displaying meta information in the display region 631 for "category = CD" and "artist = Mr. A" a button, icon, menu, or the like with " CD of Mr. A" may be provided and displayed in the display region 631 of the display unit 142, or displayed as text as with the other items.

Accordingly, selecting the button or the like for " CD of Mr. A" single-handedly registers the attribute "category" and attribute value "CD", and attribute "artist" and attribute value "Mr. A" as search information. Both keywords are in an AND search relation. Also, both keywords are also registered as individual search information at the time of group keyword registration.

Also, adding information such as "pressing button to instruct search registers search information with 'category = CD' and 'artist = Mr. A' as keywords in an AND relation" at the time of providing (realized by writing script for pressing the button) allows the user to register the group keyword and perform a search is a single instruction action.

Upon the group keyword being registered, " CD by Mr. A" is displayed in "group keywords", an item in the display region 632. Accordingly, the search keywords can be efficiently edited by checking the checkbox for group keywords or keywords.

### (Saving Keywords)

As described above, upon keywords being temporarily registered in the keyword pool region 530, the keyword registered on the screen is displayed, and the registration made is also stored in the search information list contained in the user information 712 of the list managing unit 314 of the user information managing server 113. Besides the search information list of the user information 712 being saved in the user information managing server 113 by access thereto, the search information list of the user information 712 may be temporarily managed in the keyword pool region 530 at the user terminal device 101 for a predetermined amount of time, and saved to the user information managing server 113 all at once at a predetermined timing.

Registering to the search information list of the user information 712 allows the keyword information by which searches have been made in the past to be saved, so subsequent searches using the same conditions (i.e., keywords) can be made more efficiently. Also, in the event that a search has been made with an already-registered keyword, the number of times of use of the search keyword is counted for each keyword and saved along with the other information. This allows information of keywords indicating the interest of the user to be obtained. Even more effective searching can be realized by displaying keywords with high usage frequency at conspicuous positions on the display unit 142 or causing such keywords with high priority to blink or the like.

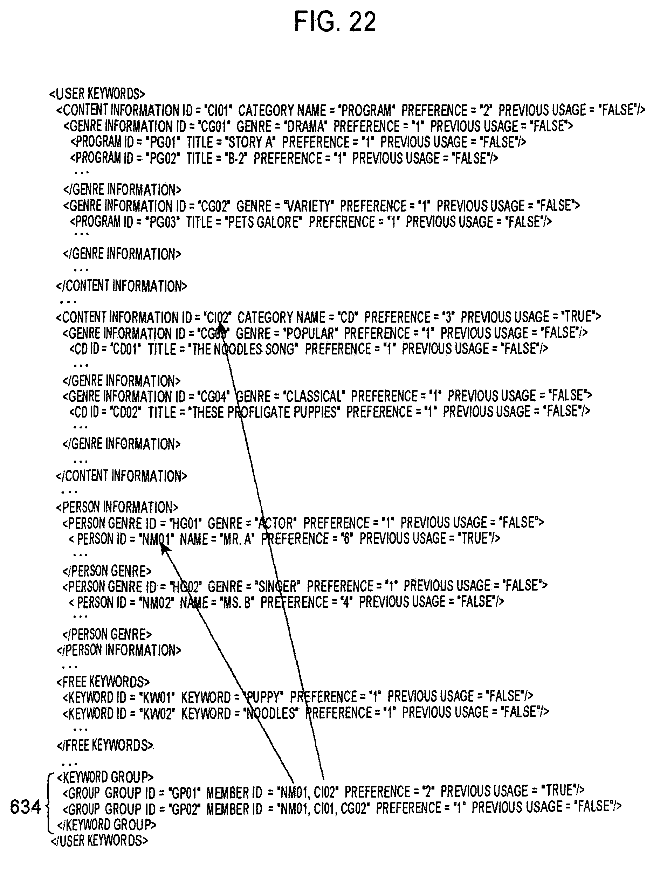

Next, the data structure of the search information list which the list managing unit 314 of the user information managing server 113 manages will be described with reference to Fig. 22. As shown in Fig. 22, the search information list according to the present embodiment is in XML format, and search information including keywords is displayed with tags for each attribute. For example, in Fig. 22, in the case of the tag <PROGRAM ID = "PG01" TITLE = "STORY A" PREFERENCE = "1" PREVIOUS USAGE = "FALSE"/>, this meta information means that the attribute is the "title" of the program, the meta information ID is "PG01", and the attribute value to serve as a keyword is "STORY A". Further, there is a principal and accessory relation with the <GENRE INFORMATION ...> through </GENRE INFORMATION> described one line above.

For example, as shown in Fig. 22, there is a child component for the tag <PERSON GENRE...> through </PERSON GENRE>, which is the attribute value "Mr. A". Making direct reference to the attribute value "Mr. A" and reference to the <PERSON GENRE...> through </PERSON GENRE> tag which is the parent component allows the user terminal device 101 to easily determine that the "person genre" of "Mr. A" is "actor".

Accordingly, in addition to keyword text strings, attribute information and hierarchical structures can also be included in registration of search information. Of course, registration of text string alone can also be made. Also, setting the number of time of using the keyword to each tag sets the "preference" of the user, which can make searching processing more efficient.

Further, there is a tag 634 provided for registering group keywords. The tag 634 is <KEYWORD GROUP...> through </KEYWORD GROUP>, and search information including group keywords made up of multiple keywords can be registered as a tag.

An example of group keyword search information is the tag <GROUP GROUP ID = "GP01" MEMBER ID = "NM01, CI02" PREFERENCE = "2" PREVIOUS USAGE = "TRUE"/>. While this tag has no attribute or attribute value as with the search information, the ID set as "MEMBER ID" determines the attribute and attribute value instead. Accordingly, in this example, the member ID is "NM01, CI02", so the keywords making up the group keyword are uniquely defined, as indicated by the arrows in Fig. 22.

Note that while the search information according to the present embodiment all has IDs appended, the present invention is by no means restricted to this example, and arrangements may be made wherein IDs are added only for search information requiring grouping, for example.

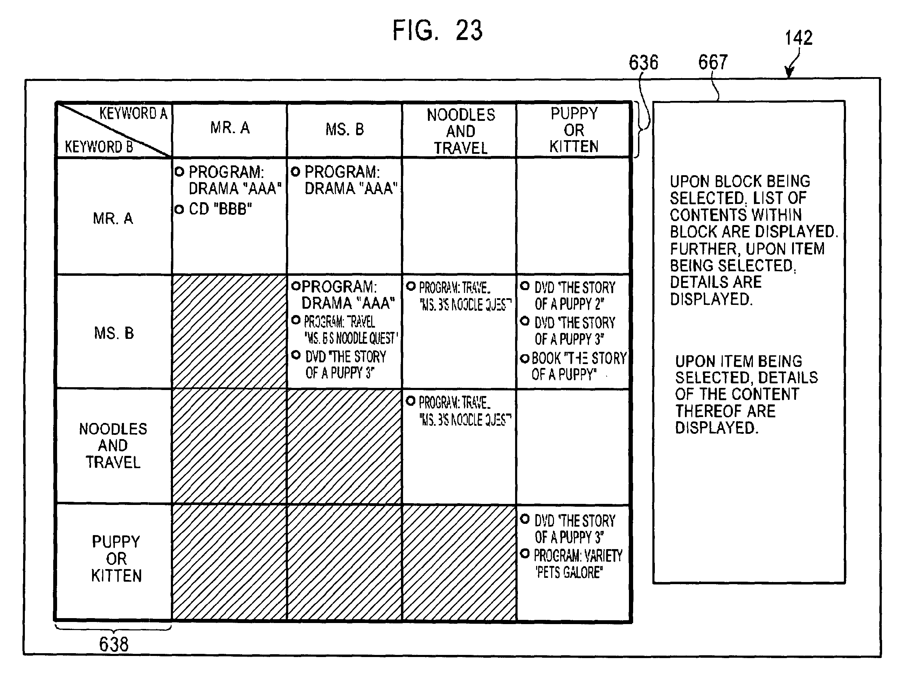

Next, the display processing for the search results with the information providing system 100 according to the present embodiment will be described with reference to Fig. 23 and other drawings.

While display processing for results obtained by searching with selected keywords is generally made in the form of a list according to match score of the keywords or the frequency of access to pages or items found (program or contents meta information or the like with ECG service), with the search results display processing according to the present embodiment, in addition to the above arrangement, description will be made regarding display processing for displaying the search results on a table on the display 142 wherein multiple keywords have been placed two-dimensionally or three-dimensionally.

First, as shown in Fig. 23, search results are displayed on the display screen displayed on the display unit 142, based on the search results information transmitted from the user information managing server 106. Also, in a display region displaying the search results, multiple keywords specified by the user can be set to each field block in the X-axial direction and Y-axial direction. For example, the keywords "Mr. A", "Ms. B", "noodles AND travel", and "puppy OR kitten" are assigned to the field blocks of the field 636 in the X-axial direction shown in Fig. 23 ("keyword A"), and displayed. One or multiple keywords can be set to each block. In the event of setting multiple keywords in one block, whether an AND or OR combination can be specified.

Also, the search results information is screen information for displaying the search results displayed on the display screen shown in Fig. 23 and so forth for example, the search results information being generated by the assigning unit 317 and set by the placement unit 231 and so forth such that the items and the like of the meta information that has been searched is displayed at predetermined positions. The search results information is not restricted to arrangements of being transmitted from the user information managing server 113, and may be generated at the user terminal device 101, for example.

In the same way, the same keywords "Mr. A", "Ms. B", "noodles AND travel", and "puppy OR kitten" as those of the field 636 are assigned to the field blocks of the field 638 in the Y-axial direction ("keyword B"), and displayed.

Also, multiple blocks are arrayed in a grid corresponding to the number of field blocks in the X-axial direction and Y-axial direction. These blocks display the meta information of the search results. Note that the blocks that have been grayed out are portions regarding which search processing is not performed, since redundant keyword searches would be performed.

Keywords in the set keyword group are combined to created a combination keyword, a search is performed with this combination keyword whenever appropriate, and the results thereof are displayed in the blocks corresponding to the field blocks, according to the combination of the keywords. In the event that meta information displayed in a block as a result of the search is selected, the details of the meta information are displayed in the display region to the right. Note that the display region where the details are to be displayed is not restricted to the right side.

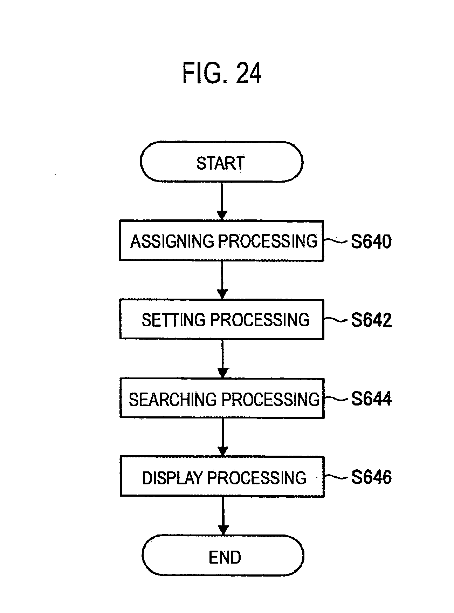

Next, the display processing of the search results according to the present embodiment will be described with reference to Fig. 24. Fig. 24 is a flowchart schematically illustrating the display processing of the search results according to the present embodiment.

First, as shown in Fig. 24, search results information is generated, and of the search results information, keywords are assigned to the one or more field blocks arrayed in the X-axial direction and Y-axial direction by the assigning unit 317 (S640). Other examples include a case wherein the keywords are automatically assigned to the field blocks based on the search information extracted from the user information 712 or the keyword pool region 530, a case of assigning in the order in which the keywords were specified, a case of assigning the keywords contained in the search information in order to preference or frequency of access to the search results, a case of the user displaying the search results information in a table format (a display of the same format can be used not only for displaying search results information but also to determine what is searched) and freely assigning keywords, and so forth.

Next, upon the keywords having been assigned to the field blocks (S640), the setting unit 319 combines each of the keywords assigned to the X-axial direction and Y-axial direction field blocks so as to set combination keywords (S642). The set combination keywords are used as a search keyword for searching. For example, the X-axial direction keyword "Mr. A" and the Y-axial direction keyword "Ms. B" are combined to set the combination keyword "Mr. A AND Ms. B" by the setting unit 319.

Next, the search unit 320 of the directory service server 106 receives the combination keyword from the user information managing server 113, and searches for meta information or the like corresponding to the combination keyword (S644). Further, in addition to cases wherein the keyword match must be an exact match, a partial match may be judged to be a match. For example, in the event of searching with a keyword which is an abbreviation or the like, meta information having a keyword which is essentially the same as the actual name may be detected as well. Further, in the event that a search has already been performed and only display of results is to be made, the search processing (S644) here is not performed, and the flow continues on to the subsequent search results display processing.

Next, the placement unit 321 determines the display position of the meta information or the like searched with the search unit 320 to be block at a position of intersection between the field blocks set as the combination keywords from the search results information, and the position information is set in the search results information.

Next, all of the set search results information is sent from the user information managing server 113 to the user terminal device 101. The display unit 142 of the user terminal device 101 displays the received search results information on the display screen (S646).

For example, in the event that the combination keyword is "'Mr. A' AND 'Mr. A'", the position where the X-axial direction field block and the Y-axial direction field block where 'Mr. A' has been set is the block at the intersection of the first horizontal row and first vertical row at the upper left, so the results are displayed in this block.

Upon display processing (S646) being performed, the series of operations for the display processing of the search results according to the present embodiment ends. Note that while the setting processing for the search result information for displaying on the display screen according to the present embodiment has been described with reference to an example wherein the processing is carried out at the information providing device 104 on the service providing side, but the present invention is by no means restricted to this, and for example, this can be executed at the user terminal device 101 as well, except for the keyword search processing and the like carried out by the directory service server 106 or the like.

Now, it should be noted that the search results searched basically with an AND search are displayed at the blocks at the intersections of the keywords with the display processing of the search results on the display unit 142, but in the event that the keywords in the X-axial direction and Y-axial direction are the same as with the example in Fig. 23 and the like, redundant search results occur wherein results searched at one block are also displayed at another block depending on the combination of keywords.

As shown in Fig. 23, the search for "'Mr. A' AND 'Mr. A'" is actually the same as a search for "Mr. A ", and the search results of "'Mr. A' AND 'MS. B'" will always be redundantly displayed on the block for "'Mr. A' AND 'Mr. A'".

To prevent this, searching processing of blocks which do not have the same keyword in the X-axial direction and Y Y-axial direction is performed following which searching processing of blocks corresponding to the combination of the same keyword is performed, and comparison with the already-searched results is perpetually made to minimize redundant display of the same items.

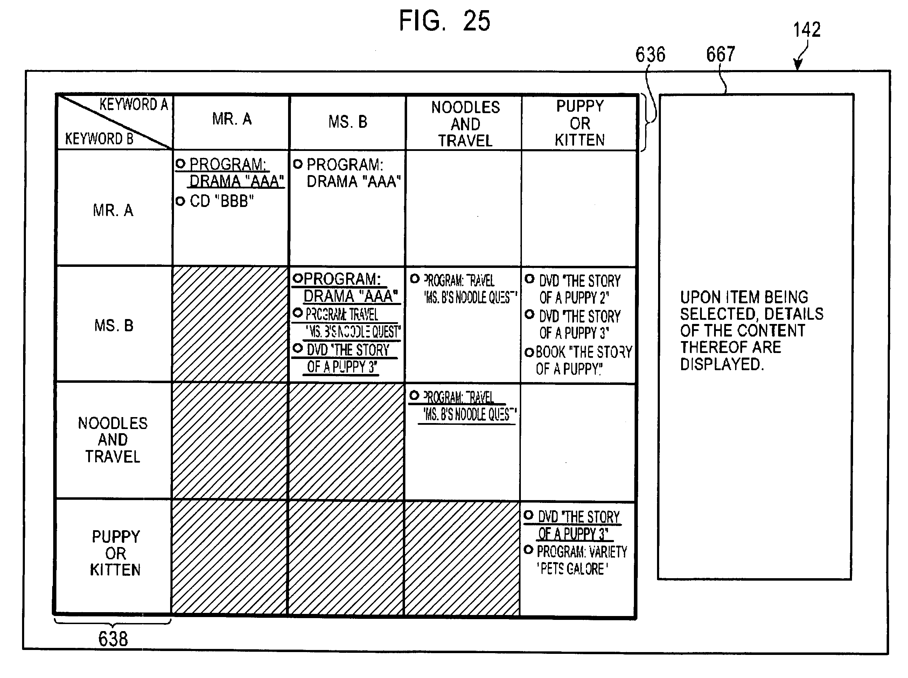

Due to such prevention of redundant display, redundant items found in the comparison between the search results and the already-searched results are not displayed in the blocks, as shown in Fig. 25. For example, in the event that the combination keyword between keyword A and keyword B is "'Mr. A' AND 'Mr. A'", the search results are the same as the PROGRAM: DRAMA "AAA" searched with the combination keyword "'Ms. B' AND 'Mr. A'", so the results are not displayed, or displayed with a different display format. For example, a display can be made as in Fig. 25 wherein the redundant items are underlined so as to be easily recognized as such.

Also, the list of searched keywords and the searched items in the blocks are displayed in the display screen of the search results, so the user can easily tell the relation between the keywords and the search items by the distribution of the search items on the entire display screen.

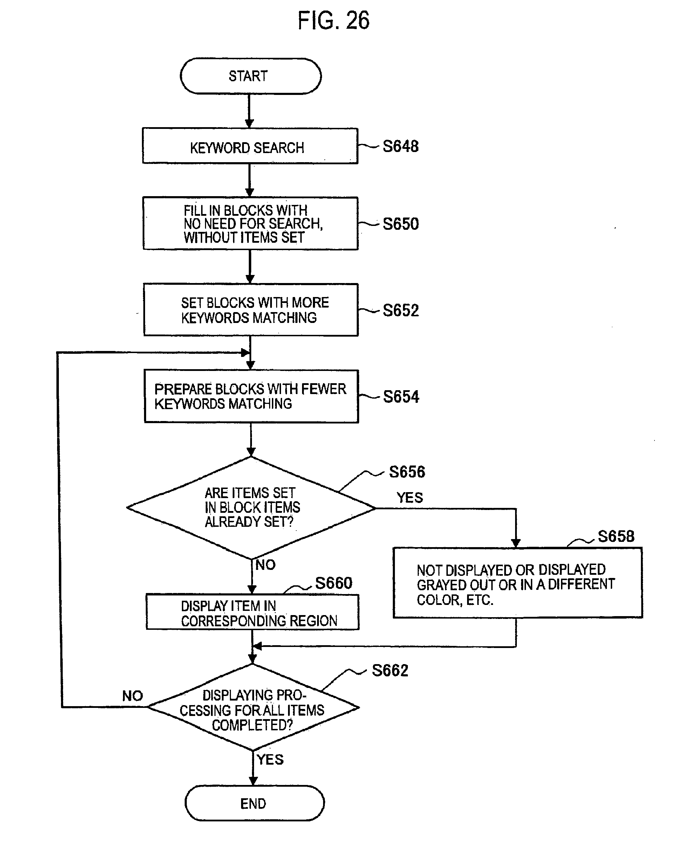

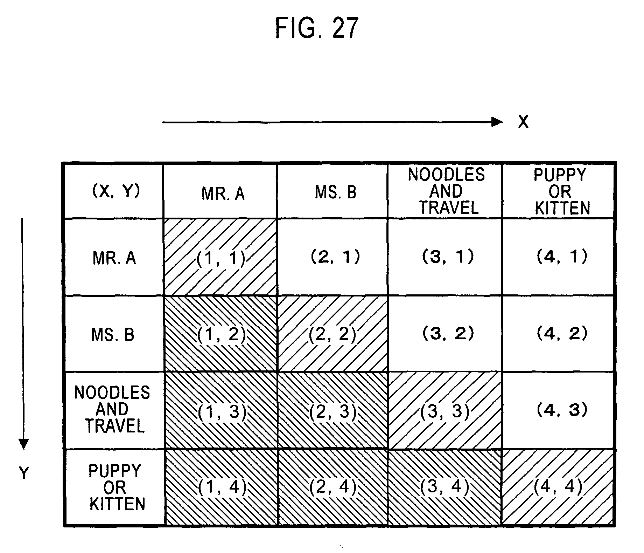

Now, the display processing of search results for preventing redundant display of items will be described with reference to Figs. 26 and 27. Fig. 26 is a flowchart schematically illustrating the searching processing according to the present embodiment, and Fig. 27 is an explanatory diagram for judging the position of the block where the searching processing according to the present embodiment is performed.

As shown in Fig. 26, first, in the search processing (S644) in Fig. 24, the search unit 320 performs the search processing for each of the combination keywords that have been set (S648). Let us say that checking of blocks regarding which searching processing is unnecessary by the placement unit 321 is performed beforehand, prior to the searching processing (S648), and has been notified to the search unit 320. Also, the searched results are transmitted to the placement unit 321 and temporarily held.

Next, the placement unit 321 checks blocks regarding which searching processing with the search unit 320 is unnecessary to begin with, and sets the search results information such that these blocks are grayed out in the search results display screen displayed on the display unit (S650). The search results information is generated by the assigning unit 317 beforehand. As shown in Fig. 27, in the event of a display screen for search results regarding the search results information, with the block positions in the (X, Y) format, blocks regarding which searching processing is unnecessary are in a relation wherein X < Y.

In the case of the search results display screen displayed on the display unit 142 as shown in Fig. 27, the blocks grayed out are (1, 2), (1, 3), (1, 4), (2, 3), (2, 4), and (3, 4), a total of six blocks. Accordingly, changes in the display of these six blocks are set in the search results information. The changes here are graying out the blocks.

Next, the placement unit 321 performs setting operation for the items of the meta information regarding which the search results by the search unit 320 are displayed, for blocks with a great number of corresponding keywords (S652).

Next, the placement unit 321 of the user information managing server 106 prepares setting processing for setting the search results to the search results information with regard to the remaining blocks having the relation of "X = Y" (S654). The blocks having the relation of "X = Y" have a high probability of redundant items, so the placement unit 321 checks each one based on the search results (S662).

In the processing from step S650 through step S654 in Fig. 26, X of the block position coordinates (X, Y) is the range of blocks from 1 through the maximum value X_{MAX}, and Y is the range of blocks from 1 through the maximum value Y_{MAX}.

For example, in the case of the 3 by 4 blocks in Fig. 27, X is 1 through 4 (which is X_{MAX}), and Y is 1 through 3 (which is Y_{MAX}), in which range the blocks are processed ( S 650 through S654).

Next, the placement unit 321 checks whether an item found by searching processing is the same as a search result already contained in the search results information (S656). This redundancy check is determined based on meta information reference ID or the like contained in the already-searched meta information transmitted from the search unit 320, for example.

In the event that the corresponding item is already included in the search results information, the placement unit 321 either does not set the item of the meta information that was searched in the search results information so as to prevent the searched item from being displayed in the blocks, or sets the item in the search results information so as to be displayed in the block but changes the text color for example, so as to be distinguished from other items.

Accordingly, even in the event that the user terminal device 101 receives this search results information, the items within the blocks are not displayed or are displayed in a different color which can be recognized (S658).

On the other hand, in the event that the corresponding items is found to be not displayed yet, the placement unit 321 sets the item of the meta information that has been searched in the corresponding block, for the search results information.

Upon the set search results information being transmitted to the user terminal device 101, the display screen of the search results wherein the items are displayed in the blocks, is displayed (S660). The searching processing according to the present embodiment has been described with reference to an example of being carried out by the information providing device 104 on the service providing side, but it should be noted that the present invention is by no means restricted to this example, and that this can be realized with cases of execution at the user terminal device 101 side as well.

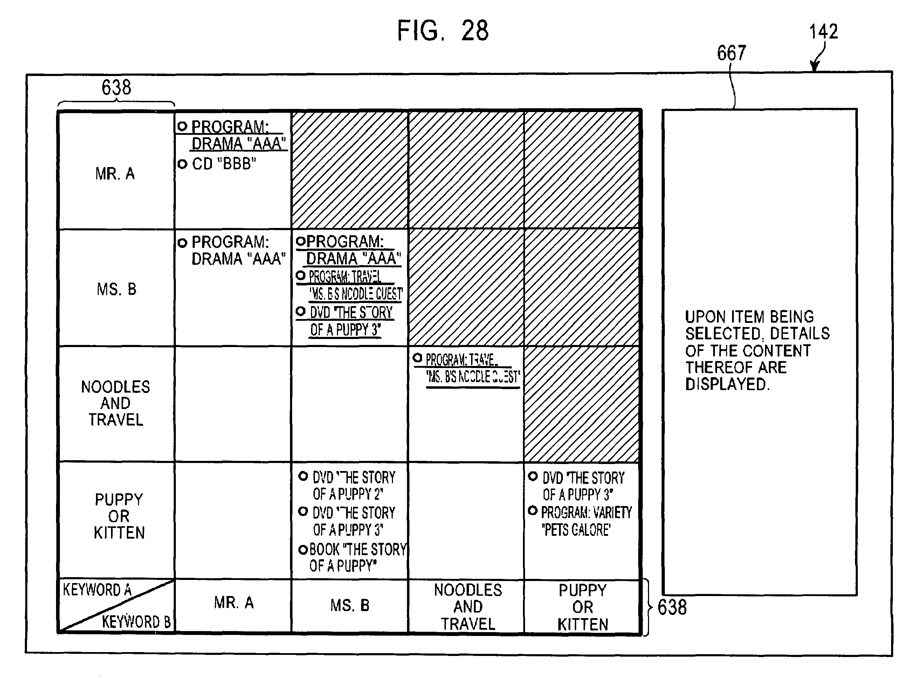

Next, a modification of the search results display screen shown in Fig. 25 according to the present embodiment will be described with reference to Fig. 28. As shown in Fig. 28, the display screen of the search results displayed on the display unit 142 differs from the display screen of the search results in Fig. 25 in that the block group grayed out without searching processing beforehand, is located at the upper right corner.

Also, detailed information displayed by selecting program pictures or items in the blocks can be displayed in the block group placed at the upper right corner. Thus, the user will more likely visually recognize the program pictures or the like displayed in the upper right corner, thereby improving usability.

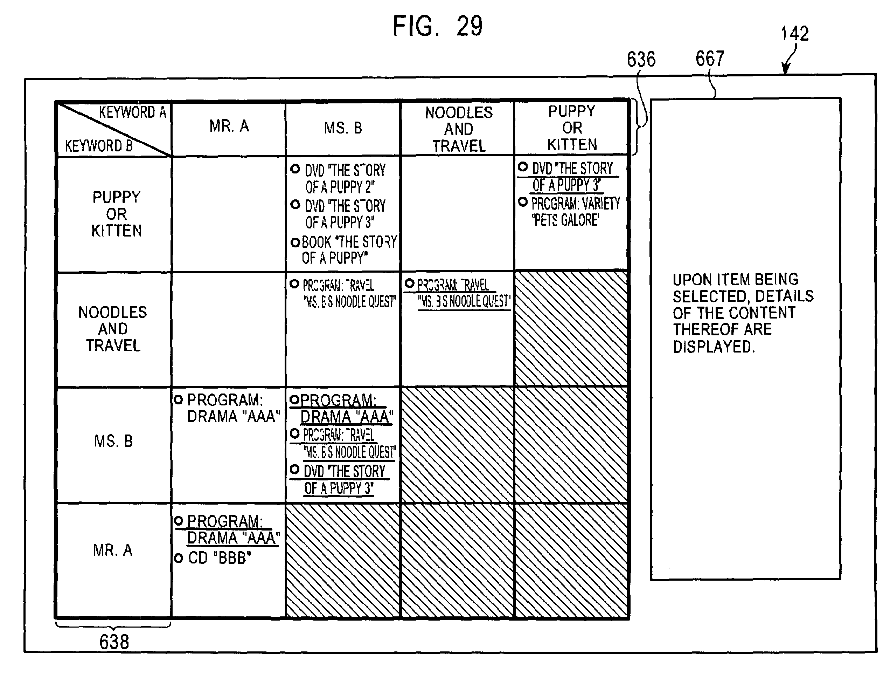

Next, a modification of the search results display screen shown in Fig. 25 according to the present embodiment will be described with reference to Fig. 29.

As shown in Fig. 29, the display screen of the search results displayed on the display unit 142 differs from the display screen of the search results shown in Fig. 25 in that the order of the keywords in the field blocks or the items within the blocks has been changed so that all items displayed in the blocks of the display screen are displayed toward the upper left. In the event that the line of sight of the user goes to the upper left more often, visual recognition improves. Of course, the present invention is not restricted to this example, and display may be made to the upper right or the like, in accordance with movement of the line of sight of the viewer.

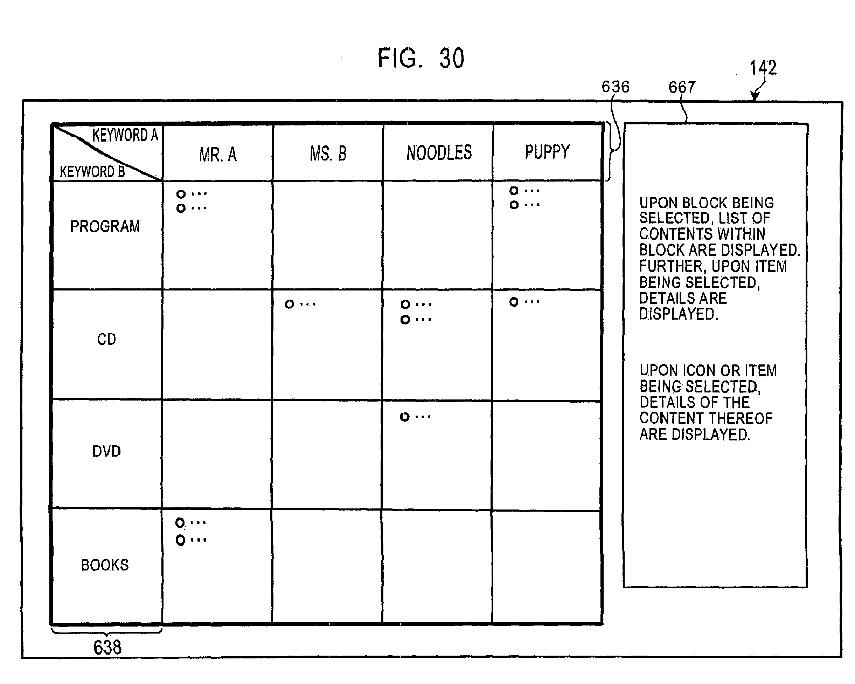

Next, a modification of the search results display screen shown in Fig. 25 according to the present embodiment will be described with reference to Fig. 30. As shown in Fig. 30, the search results display screen displayed on the display unit 142 differs from the search results display screen shown in Fig. 25, in that the keywords set in the field blocks in the X-axial direction differ from the keywords set in the field blocks in the Y-axial direction.

Accordingly, keywords with high user frequency can be set in the field blocks in the X-axial direction and the Y-axial direction, thereby displaying a search results display screen containing information with high user interest.

Further, a list of the search keywords, and the searched items shown in the blocks, are displayed on the display screen, so the user can readily grasp the relation between the distribution of the search items from the entire screen, and the relation between the keywords and the searched items.

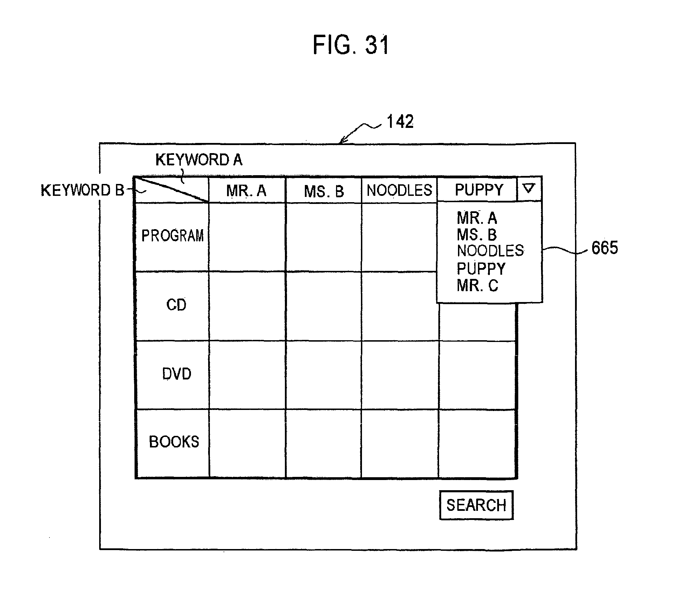

Now, the processing for setting search keywords for searching in the field blocks displayed on the display unit 142 will be described with reference to Fig. 31. Setting of keywords according to the present embodiment may be made automatically from the user information 712 or the keywords pool region 530, but here, a description will be given regarding the user setting the keywords via the display unit 142.

As shown in Fig. 31, the display unit 142 displays two-dimensional search object information. The search object information can be set in one or more field blocks in the X-axial direction and the Y-axial direction, with one or more blocks set in table format of rows and columns. While description will be made with reference to an example wherein the setting screen for setting the keywords according to the present embodiment is a two-dimensional format, this may be carried out in a three-dimensional format, as well.

In order to set search keywords, the user selects a suitable field block via the search object information displayed on the display unit 142 using the input unit 511, whereby a pull-down menu 665 is displayed. The pull-down menu 665 displays keywords which can be specified, from which the user specifies a desired keyword.

Environment settings can be made beforehand such that the keywords in the fields on the same axis are searched for in an OR search, and settings can be made beforehand such that the combinations of keywords for combination keywords are searched for in an AND search. Of course, the present invention is not restricted to this example, and an arrangement may be made wherein an AND search or an OR search is specified for each keyword set.

Upon keywords being set in each of the field blocks, and the "search " button selected from the input unit 511, at least one each of the field blocks in each of the X-axial direction and the Y-axial direction is extracted, the keywords are combined with an AND search, thereby setting a combination keyword, whereby the searching processing is performed.

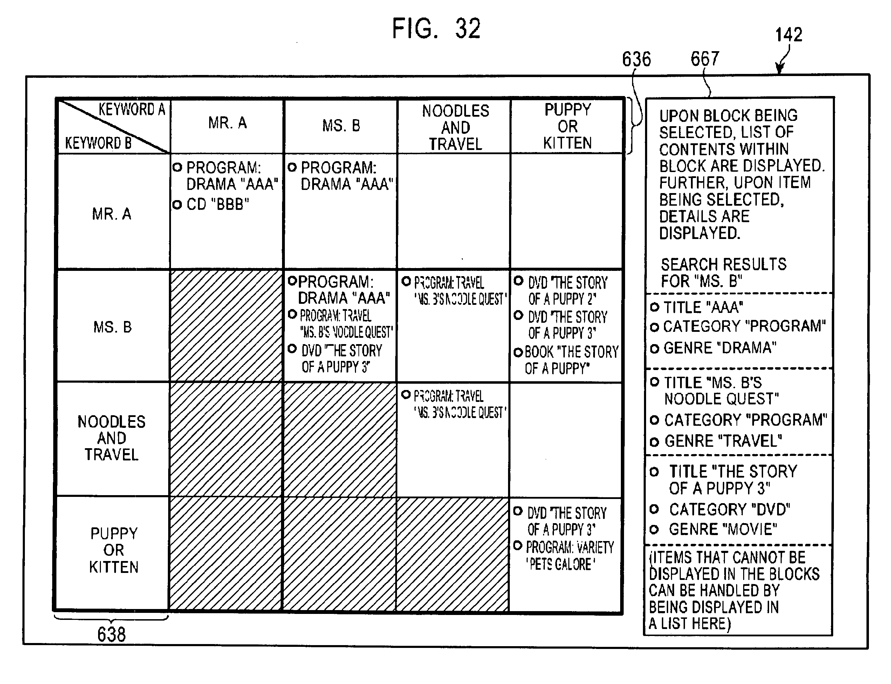

Next, a search results display screen according to the present embodiment will be described with reference to Fig. 32. Here, upon keywords being assigned to the field blocks in the X-axial direction and the Y-axial direction, and the search processing being executed, items of the searched meta information are displayed in the blocks arrayed in table fashion, of rows and columns, as shown in Fig. 32. Selecting a block with the input unit 511 displays a list of the items such as contents meta information or the like displayed in the block at the display region 667.

Also, at the time of displaying in the display region 667, keywords or the like with high usage frequency for example, are assigned to the field blocks in the X-axial direction and the Y-axial direction, and the searched items are displayed in the blocks, whereby the user can easily understand the distribution of the items displayed in the blocks from the entire display screen.

Further, upon selecting an item shown in text, such as a title or category of meta information displayed in the display region 667, using the input unit 511, the directory service server 106 is accessed based on the URI or the like contained in the meta information of the selected item, and detailed information of the meta information or related meta information is displayed in the display region 667.

As shown in Fig. 32, in the event that the items in the block indicated by heavy lines are selected for example, the content of the meta information of the selected items, and detailed information relating to the selected items, etc., are displayed on the display region 667.

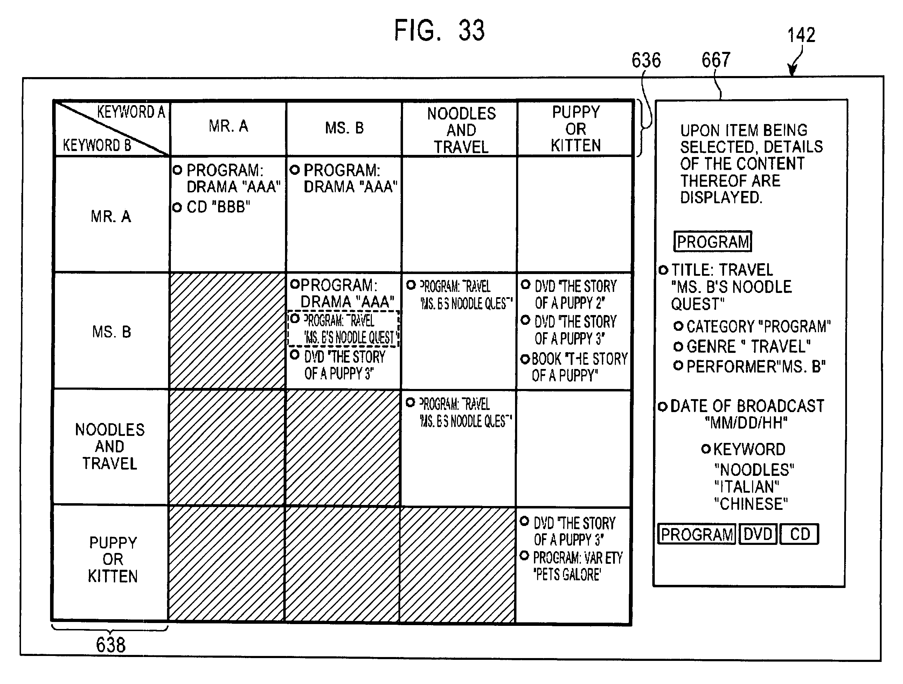

Next, a modification of the search results display screen shown in Fig. 32 according to the present embodiment will be described with reference to Fig. 33. As shown in Fig. 33, the search results display screen displayed on the display unit 142 differs from the search results display screen shown in Fig. 32, in that the items displayed in the blocks are selected with the input unit 511.

Upon an item displayed in the block being selected by the input unit 511, contents meta information or program meta information or the like corresponding to the selected item is displayed in the display region 667. For example, as shown in Fig. 33, "PROGRAM: TRAVEL 'MS. B'S NOODLE QUEST'" which is displayed in the block corresponding to the keyword A and keyword B both being "Ms. B", is selected.

Upon the "PROGRAM: TRAVEL 'MS. B'S NOODLE QUEST'" displayed within the block being selected by the input unit 511, the entirety of the program meta information of the item "PROGRAM: TRAVEL 'MS. B'S NOODLE QUEST'" is displayed at the display region 667, and further, icons such as "program", "DVD", or "CD", which indicate whether or not there is various type of information in hierarchical levels below the program meta information, are displayed.

Upon the item displayed in the block being selected, the directory service server 106 searches for meta information belonging to a hierarchical level below the selected meta information, and in the event that such meta information exists, the category information contained in the meta information is extracted.

Further, icons corresponding to the category information are generated by an icon generating unit (not shown) and are transmitted to the user terminal device 101, whereby icons can be displayed on the display region 667 of the display unit 142. The icon generating unit (not shown) only needs to be provided to one of the user terminal device 101, directory service server 106, and the user information managing server 113.

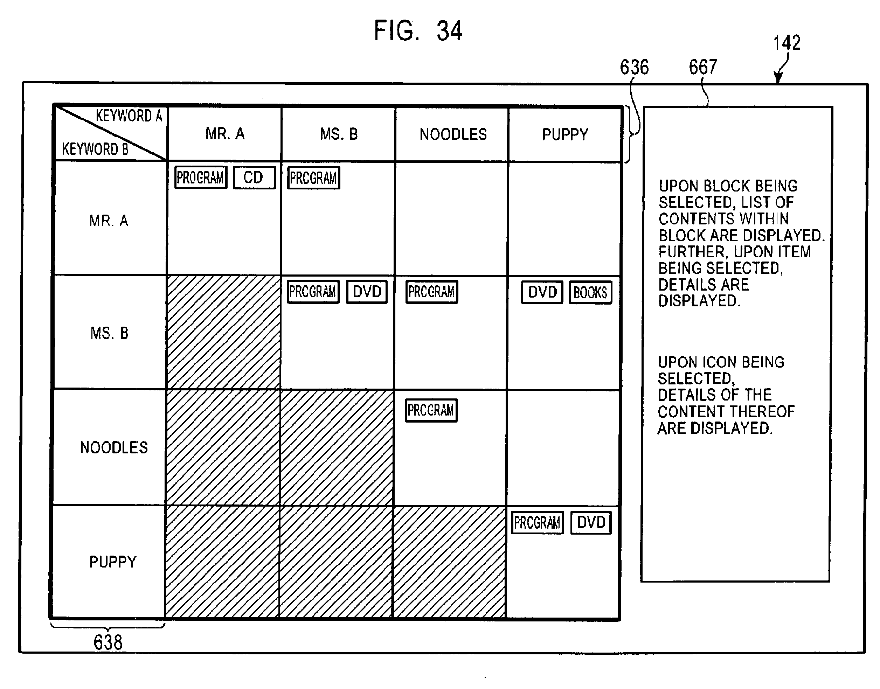

Next, a modification of the search results display screen shown in Fig. 32 according to the present embodiment will be described with reference to Fig. 34. As shown in Fig. 34, the search results display screen displayed on the display unit 142 differs from the search results display screen shown in Fig. 32, in that icons indicating the category of the searched meta information are displayed in the blocks.

The icon displayed in the blocks are displayed by category, with one icon being displayed representatively even in the event that multiple sets of meta information belonging to the same category are found. Note that in the event that that multiple sets of meta information belonging to the same category are found, the number of the searched meta information sets may be displayed as a numeral on the icon, for example. The icons are generated by the category information contained in the searched meta information being extracted at the directory service server 106 side for example, and generated at the icon generating unit (not shown).

The icon generating unit generates icons corresponding to the category information. The generated icons are transmitted to the user terminal device 101 and displayed in the blocks on the display unit 142. Or, the icons may be generated at the user terminal device 101 instead.

The user can easily visually recognize from the icons displayed on the display unit 142 which category contents have been found as search results matching the keyword conditions. Also, in the event that an icon displayed in the block in Fig. 34 is selected, a list of meta information items corresponding to the category of the selected icon is displayed in the display region 667.

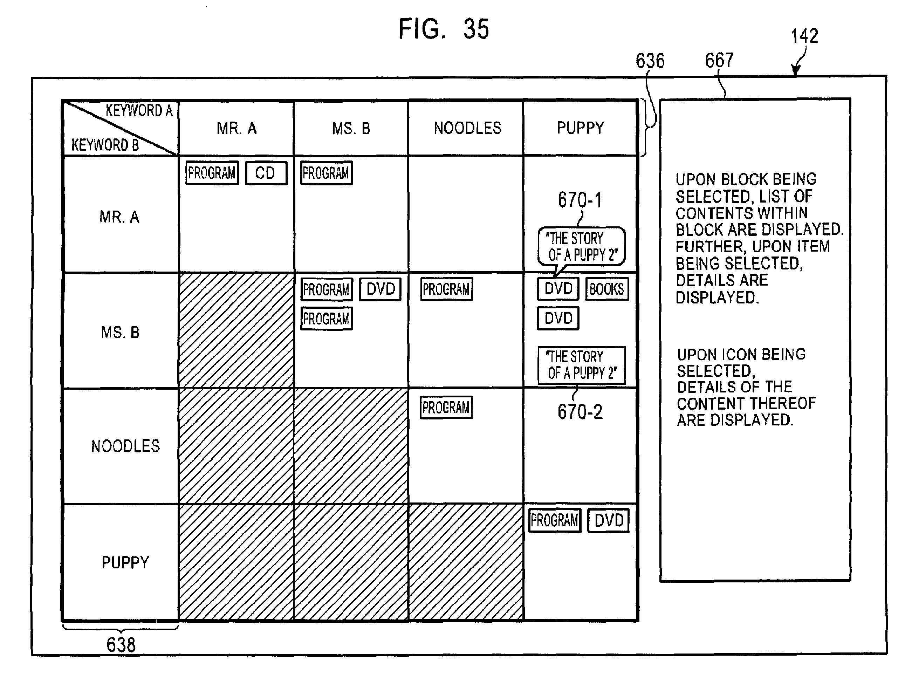

Next, a modification of the search results display screen shown in Fig. 34 according to the present embodiment will be described with reference to Fig. 35. As shown in Fig. 35, the search results display screen displayed on the display unit 142 differs from the search results display screen shown in Fig. 34, in that multiple icons indicating the category of the searched meta information are displayed in the blocks, even if for the same category.

Accordingly, category information is obtained from the meta information of the search results, and multiple icons for each category are displayed on the display unit 142. In the event that there are multiple meta information items, as many icons are displayed.

Thus, the user can tell simply by looking at the icons displayed on the display unit 142 how many category contents have been found as search results matching the conditions. In the event that a sufficient region for displaying all of the multiple items in the blocks has not been secured, no more icons are displayed after reaching the limit of display, and a warning message is provided to the user that there are more icons than can be displayed.

Also, in the event that multiple same icons are to be displayed within the block, the user has no way of knowing which icon should be selected to display the detailed information of the desired contents information. Accordingly, specifying or selecting a region where the icon is displayed with the input unit 511 or the like displays an item region 670-1 or item region 670-2 with the title or the like listed, "THE STORY OF A PUPPY 2" in the example shown in Fig. 35.

In the event that the icon within the block is selected, a list of items contained in the meta information relating to that category is displayed in the display region 667 of the display unit 142.

Now, while description has been made regarding cases wherein the search results according to the present embodiment are displayed on the display unit 142 either as icons or as text, but the present invention is by no means restricted to either of these examples, and an arrangement may be made wherein both icons and text are combined and displayed.

Also, the search results according to the present embodiment are displayed with the keywords assigned to the field blocks having a constant order which is not sorted, whereby the user can visually comprehend a time-sequence distribution of how much information regarding what sort of keywords has been found.

### (Sorting Search Results)

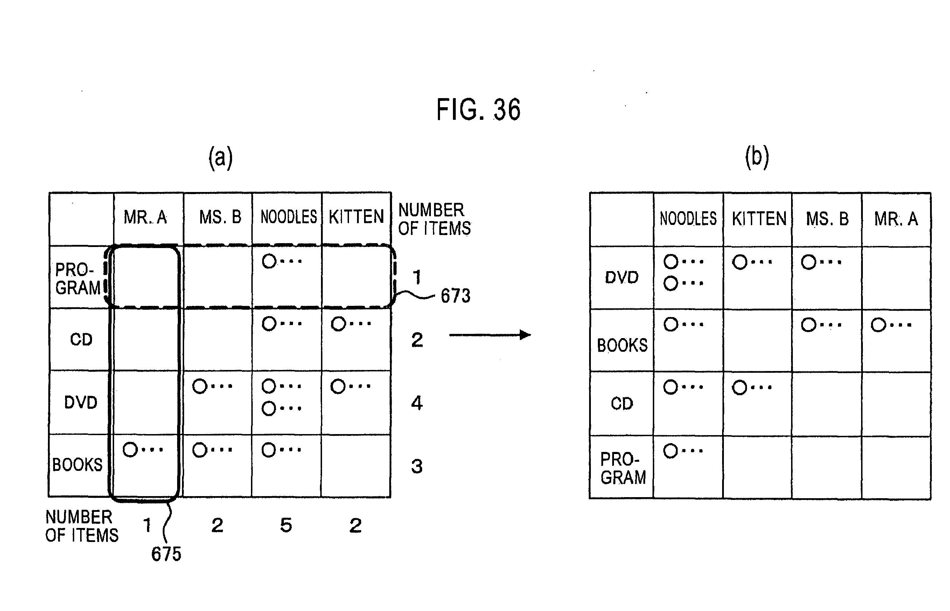

Next, sorting of the items displayed in the search results according to the present embodiment will be described with reference to Fig. 36. Upon the search results being displayed, the order of the keywords assigned to the field blocks can be automatically performed according to the number of sets of meta information found in the columns or rows of blocks, for example.

As shown in (a) in Fig. 36, first, the number of items of the searched results are totaled for each of the rows and columns of the blocks. For example, one searched result is displayed for the row block group region 673 corresponding to the keyword "program" set in the Y-axial field block. Also, one searched result is displayed for the column block group region 675 corresponding to the keyword "Mr. A" set in the X-axial field block.

In the same way, the number of items searched is totaled for each of the rows and columns regarding which keywords have been set in the field blocks, and these are sorted by the number of results found, as shown in (b) in Fig. 36. An example of sorting is to collect the blocks with the greatest number of items in the upper left corner for example, so as to be the most conspicuous to the user.

Sorting of the search results is particularly effective in cases wherein the entire table cannot be displayed within the screen of the display unit 142 for example, such that screen switching or scrolling is necessary, since the searched items can be gathered to one place. Thus, a maximum number of items can be displayed within one screen.

Also, the number of moving operations can be reduced, which is particularly helpful in the case of moving the cursor step by step with arrow keys on a remote control for example. Accordingly, the trouble of the user in selecting and viewing program or contents information displayed as search results can be reduced.

### (Three-Dimensional Search Results)

Now, search results according to the present embodiment have been described as being displayed on the display screen of the display unit 142 in a table format made up of two-dimensional (X-axial and Y-axial) columns and rows, but a new field can be added in the Z-axial direction, and three-dimensional search results can be displayed by providing keywords in the fields.

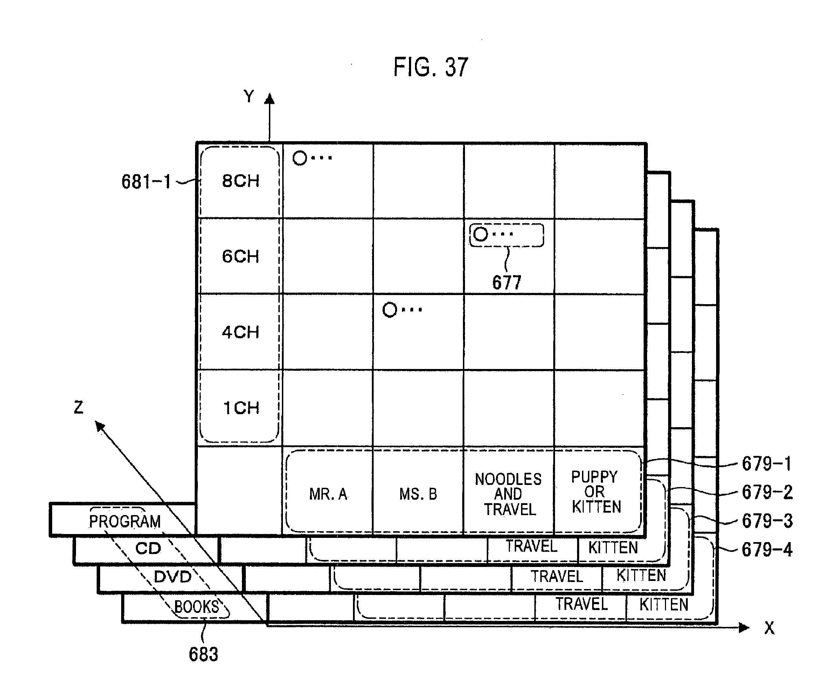

Now, three-dimensional search results according to the present embodiment will be described with reference to Fig. 37. Fig. 37 is an explanatory diagram schematically illustrating a display screen for three-dimensional search results according to the present embodiment. As shown in Fig. 37, three-dimensional search results are displayed on the display unit 142. Fields having field blocks to which keywords are assigned, are arrayed three-dimensionally for the search results, in the X-axial direction, Y-axial direction, and Z-axial direction.

In the X-axial direction are the field 679-1, the field 679-2, the field 679-3, and the field 679-4. In the Y-axial direction although hidden, are the field 681-1, the field 681-2, the field 681-3, and the field 681-4. Further, the field 683 is positioned in the Z-axial direction.

The field blocks in the field 679-1 have assigned thereto, in order from the point of origin, "Mr. A", "Ms. B", "noodles AND travel", and "puppy OR kitten". The field blocks in the field 681-1 have assigned thereto, in order from the point of origin, "Channel 1", "Channel 4", "Channel 6", and "Channel 8", which refer to broadcast station channels.

Also, the keywords assigned to the fields 679-1 and 681-1 corresponding to the keyword "program" assigned to the Z-axial direction field 683. While four keywords are shown assigned to the Z-axial direction field 683, the present invention is by no means restricted to this example.

Accordingly, the three-dimensional search results are configured with the above-described two-dimensional search results being layered for each keyword assigned in the Z-axial direction field.

Also, as shown in Fig. 37, the items displayed in the blocks for the search results are displayed by having been searched for based on the combination keywords wherein keywords assigned to the X-axial direction, Y-axial direction, and Z-axial direction.

As an example, item 677 displayed in a search results block is a result of a search made based on the combination keyword "'noodles AND travel' AND 'Channel 6' AND 'program'".

The three-dimensional search results are the same as with the two-dimensional search results according to the present embodiment in that keywords are assigned to the field blocks in the X-axial direction and Y-axial direction, at least one keyword assigned in the X-axial direction and Y-axial direction is extracted, and a combination keyword is set by combining with the keyword of the field block in the Z-axial direction intersecting with the X-axial direction and Y-axial direction.

Further, search processing is performed based on the set combination keyword, the position of the searched meta information item is determined to be the position of a block where the keywords extracted in the X-axial direction and Y-axial direction intersect, and the item is displayed in this block. Upon searching for the keywords assigned to the field blocks in the X-axial direction and Y-axial direction being completed, and further, upon searching for the keywords assigned to the other field blocks in the X-axial direction and Y-axial direction being completed, the three-dimension search results display processing ends, and the search results are display on the display unit 142 as shown in Fig. 37.

Note that while the search results shown in Fig. 37 show the search results wherein the Z-axial direction keyword "program" is on the top, but the input unit 511 can be used to switch the search results so as to display the search results hidden in lower layers for the other Z-axial direction keywords, such as "DVD" for example.

Also, while two-dimensional searching uses a combination of two keywords, but three-dimensional search results add an extract keyword, whereby the distribution of items searched in a more varied manner than with the two-dimensional search results, and the correlation of keywords therebetween, can be comprehended.

For example, the search results shown on the top screen including the field 681-1 and 679-1 show programs related to "Mr. A", "Ms. B", "noodles AND travel", and "puppy OR kitten" broadcast by "Channel 1", "Channel 4", "Channel 6", and "Channel 8", and also allow the overall distribution of the search results to be easily comprehended.

Also, in the event that the field blocks in the field 681-1 are assigned "morning programs", "afternoon programs", "evening programs", and "late-night programs", the results displayed on the top screen including the field 681-1 and 679-1 show programs related to "Mr. A", "Ms. B", "noodles AND travel", and "puppy OR kitten" broadcast at the different times, and also allow the overall distribution of the search results to be easily comprehended.

### (Displaying Personalized guide)

The user terminal device 101 can display personalized guide information using the above-described search results display processing. Note that personalized guide information is information used for providing suitable contents information and the like to users, and guiding users to intended contents information, according to the search state of the user and the ECG service usage state.

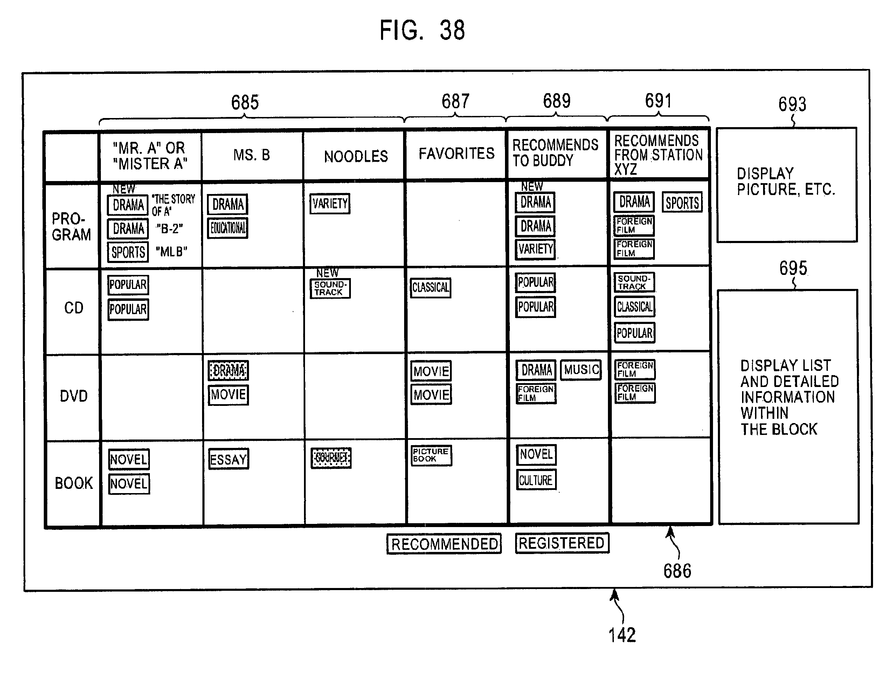

Now, a personalized guide display screen 686 upon which is displayed the personalized guide information according to the present embodiment will be described with reference to Fig. 38. Fig. 38 is an explanatory diagram schematically describing the display unit where the personalized guide information display screen according to the present embodiment has been displayed.

As shown in Fig. 38, the display unit 142 displays a personalized guide display screen 686 in which horizontal (X-axial direction) and vertical (Y-axial direction) fields are formed, a display region 693 where program pictures and the like are displayed, and a display region 695 where detailed inf ormation is displayed upon an icon or the like within the blocks making up the personalized guide display screen 686 being selected. Note that the personalized guide information is equivalent to the information displayed on the personalized guide display screen 686.

Also, field blocks to which keywords are assigned are set in the X-axial direction and Y-axial direction fields shown in the personalized guide display screen 686. For example, as shown in Fig. 38, the keywords "program", "CD", "DVD", and "book" are assigned in order from the top down in the X-axial direction field blocks, and the keywords "'Mr. A' OR 'Mister A'", "Ms. B", "noodles", "favorites", "recommends for you", and "recommends from station XYZ", are assigned in order from the left in the Y-axial direction field blocks.

Of the X-axial direction field blocks, the keywords corresponding to the block 685 ("'Mr. A' OR 'Mister A'", "Ms. B", "noodles") are keywords which the user has specified or which are frequently used, and are assigned to the block 685. For example, of the block group in the column "Ms. B", the blocks corresponding to the Y-axial direction keyword "DVD" have displayed the text "drama" and an icon, and the text "movie" and an icon. The "drama" icon matches the "drama" icon in the "recommends for you" column block group, so the display position or display color or the like is changed, so as to facilitate user comprehension. Also, changing the display position or display color or the like is not restricted to matching other icons, and is also performed in the event that, for example, an icon is selected with the input unit 511 and the detailed information is already displayed in the display region 695.

Further, an arrangement may be made wherein, of the block group in the column of "'Mr. A' OR 'Mister A'", the block corresponding to the keyword "program" in the vertical direction has displayed the text "drama" and an icon, another text "drama" and an icon, and the text "sports" and an icon, and also the titles being displayed for each of the icons, such as "THE STORY OF A", "B-2", and "MLB".

Also, of the X-axial direction field blocks, the keyword "favorites" corresponding to the block 687 corresponds to keywords and the like saved in the keyword pool region 530 of the user terminal device 101, being assigned to the block 687. In the block group of the column corresponding to the block 687 are displayed icons corresponding to the newest meta information corresponding to the keyword saved by the user due to search processing, each time the personalized guide screen 686 is displayed. For example, of the block group in the column "favorites", the text "classical" and an icon is displayed in the block corresponding to the horizontal direction keyword "CD". While the icons according to the present embodiment are described has having text, the present invention is by no means restricted to this example, and various arrangements may be made such as giving the icons at least one of color, texture, tone, shapes, and so forth.

Of the X-axial direction field blocks, the keyword "recommends for you" corresponding to the block 689 displays icons recommended in the block group of the column corresponding to the block 689 as a result of the preferences analysis at the user terminal device 101. This preferences analysis is performed every so often. For example, the block corresponding to the Y-axial direction keyword "program" of the block group in the column "recommends for you" has displayed the text "drama" and an icon, another text "drama" and an icon, and the text "variety" and an icon. A "NEW" mark is attached to newly found items since the last search, based on the program or contents meta information ID or the like, as with "drama" here. Also, the items may be sorted with priority. Further, aside from the above arrangement, a "registered" mark may be provided for programs indicating that the user has programmed that program to be recorded, besides the "NEW" marks. Icon category information for showing such a "registered" mark is managed in the personalized information of the user information for example, along with the ID of the meta information, and accordingly can be displayed on the screen.

Of the X-axial direction field blocks, the keyword "recommends from station XYZ" corresponding to the block 691 displays icons relating to program or contents recommended by the broadcast station, Station XYZ in this case, in the block group of the column corresponding to the block 691. For example, the block in the block group of the column "recommends from station XYZ" which intersects with the Y-axial direction keyword "CD" has displayed the text "sound track" and an icon, the text "classical" and an icon, and the text "popular" and an icon.

Also, upon selecting an icon displayed in the personalized guide screen 686, a list of items such as the title and the like in the meta information corresponding to the selected icon is displayed in the display region 695, and upon an item being further selected, detailed information corresponding to the selected item is displayed in the display region 695, based on the URI and the like contained in the meta information.

Also, in the event that the personalized guide screen 686 cannot fit in the display screen of the display unit 142, the personalized guide screen 686 can be scrolled so as to display the entire personalized guide screen 686. Further, in the event that detailed information or the like is to be displayed in the display region 695, the display region 695 is enlarged and the display region for the personalized guide screen 686 is reduced, thereby improving the visual recognition of the detailed information.

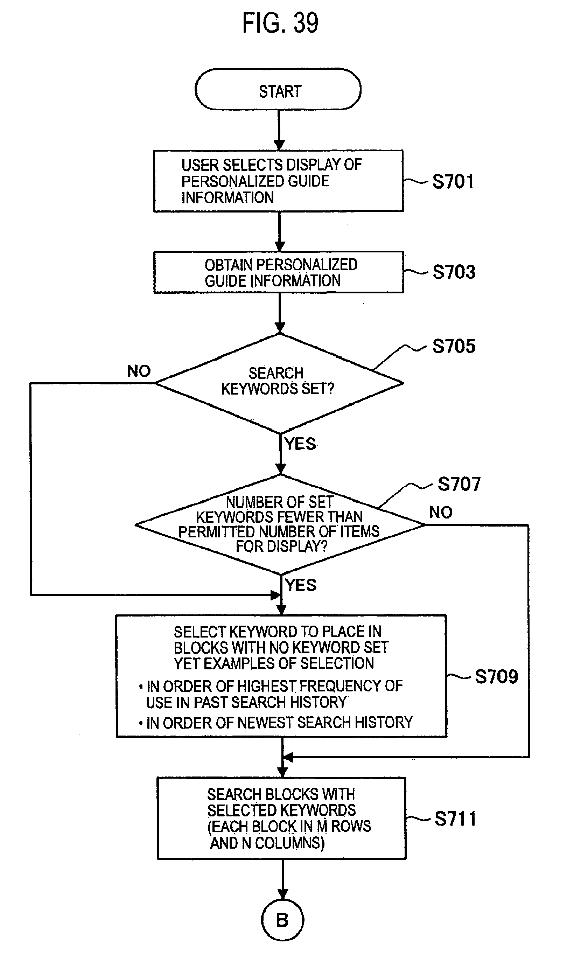

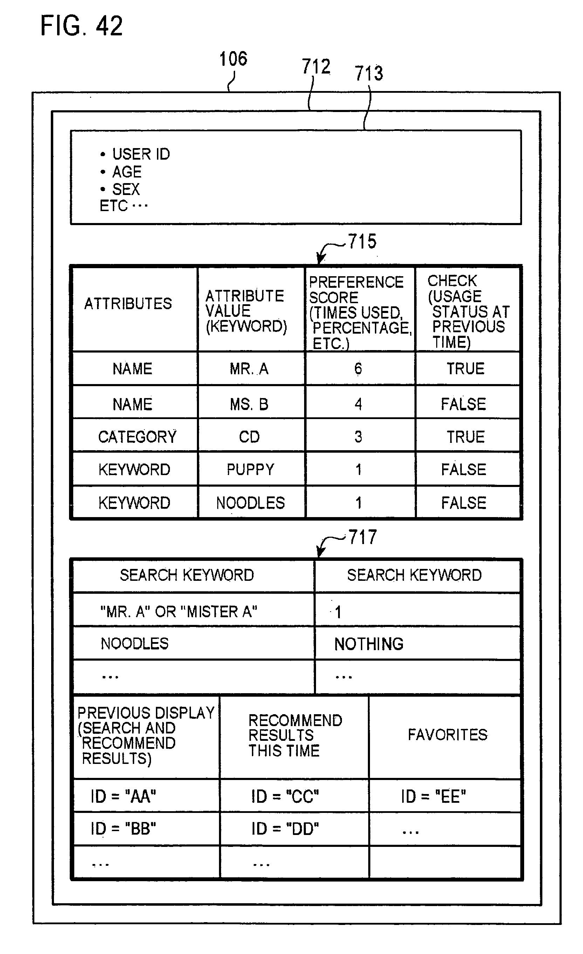

Next, the display processing of the personalized guide information according to the present embodiment will be described with reference to Figs. 39 through 42. Figs. 39 through 41 are flowcharts schematically illustrating the display processing of the personalized guide information according to the present embodiment, and Fig. 42 is an explanatory diagram schematically describing the user information 712 which the directory service server according to the present embodiment manages.

As shown in Fig. 39, first, display of the personalized guide information is selected from the input unit 511 provided to the user terminal device 101 (S701). For example, an icon or the like for displaying the personalized guide information on the display unit 142 is selected with the input unit 511.

Upon display of the personalized guide information being selected from the user terminal device 101 (S701), the list managing unit 314 of the directory service server 106 extracts the personalized guide information of the user information 712 managed thereby, and transmits this to the user terminal device 101 via the network 103 (S703).

As shown in Fig. 42, the list managing unit 314 of the directory service server 106 manages the user information 712 for each individual user. The user information 712 includes a user profile information 713 including personal information such as user ID and name, a search information list 715 which is a list of the above-described search information, and a personalized guide list 717.

First, the personalized guide list 717 has set therein "search keyword" information storing keywords to be searched with, and "display position specifying" information for deciding which field blocks of the X-axial direction and Y-axial direction in the personalized guide display screen 686 the keywords are to be displayed. The corresponding meta information is searched based on the search keywords, and displayed in the blocks on the personalized guide display screen 686.

Also included in the personalized guide list 717 is "previous display contents" storing the ID and the like of meta information relating to the icons displayed on the personalized guide display screen 686 the previous time that personalized guide information was provided, "recommend results this time" information storing the newest results of user preference analysis carried out by the preference analyzing engine (not shown) every so often, and "favorites" information storing the ID and the like of meta information relating to keywords or icons specified by the user. The preference analyzing engine is provided to the directory service server 106 or user terminal device 101 or the like.

While an example has been described regarding IDs relating to the program meta information or contents meta information or the like being stored with regard to the "previous display contents" information, "recommend results this time" information, and "favorites" information according to the present embodiment, the present invention is by no means restricted to such examples, and arrangements may be made such as the meta information itself being stored instead of the ID of the meta information (meta information reference ID) , for example.

As shown in Fig. 39, the assigning unit 317 of the user terminal device 101 confirms the presence or absence of keywords set as a search keyword in the obtained personalized guide information (S705). In the event that a keyword is set (S705), the assigning unit 317 determines whether or not the number of set keywords exceeds the number of keywords which can be displayed in the personalized guide display screen 686 on the display unit 142 (S707).

In the event hat the number of set keywords satisfy the number which can be displayed on the display unit 142 (S707), the assigning unit 317 assigns the keywords to the field blocks in the X-axial direction and Y-axial direction (S709). In the event that there are keywords assigned to field blocks beforehand, these are assigned to the remaining field blocks.

Examples of criteria for assigning include assigning keywords with high usage frequency as search keywords with higher priority, or assigning keywords used recently as search keywords with higher priority.

Next, the setting unit 319 extracts at least one key word assigned to the field blocks of the fields, combines the extracted keywords, and sets combination keywords. At least one combination keywords is set per field block.

The search unit 320 performs search processing based on the combination keywords set by the setting unit 319 (S711). Upon the meta information corresponding to the keywords being searched, the meta information ID included in the meta information (meta information reference ID) is extracted by the search unit 320. The search results are assigned block positions for display by the subsequent processing, and are displayed in these blocks.

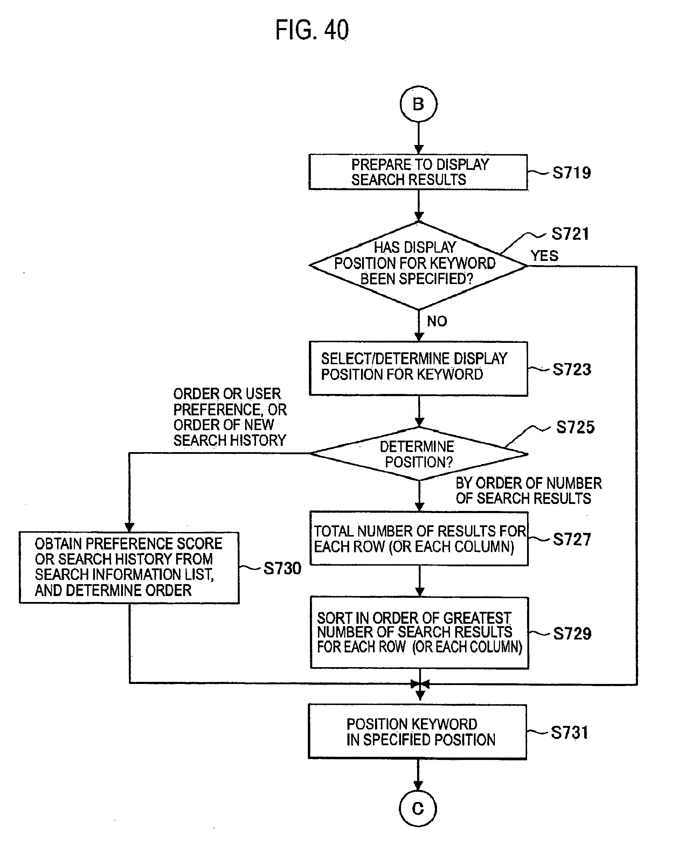

The following is a description of the personalized guide information display processing according to the present embodiment, with reference to Fig. 40. As shown in Fig. 40, upon the search processing by the search unit 320 ending, the personalized guide display screen has temporarily determined positions for placing keywords and icons corresponding to the meta information items or meta information of the search results. Upon the placement positions being temporarily determined, further, the keywords are sorted in the specified order so as to determine the positions of the keyword and the row or column blocks corresponding to the keywords. Thus, preparation is made to display the personalized guide display screen on the display unit 142 of the user terminal device 101 (S719).

Next, the placement unit 321 makes reference to the personalized guide list 717 of the user, and confirms whether or not the display position has been specified for the "display position specification" of the "search keyword" which corresponds to the combination keyword (S721).

In the event that the "search keyword" is "'Mr. A' OR 'Mister A'" as shown in Fig. 42, the "display position specification" is "1". A display position of "1" means that the display position can be determined for each value set beforehand, and is assigned to the leftmost field block in the X-axial direction, for example.

In the event that the display position is not specified (S721), the display unit 321 prepares to select and determine the position of the blocks for displaying the searched meta information items or the like (S723).

Next, the placement unit 321 determines the position of the blocks based on the position determining criteria set in the environment setting information or the like beforehand. In the event that the position determining criteria is in the order of results found (S725), the placement unit 321 tabulates the total of items found, with regard to the blocks in the rows or blocks making up the personalized guide display screen (S727).

The placement unit 321 determines the position to place the keywords, icons, and the like in the order of greatest total of the tabulation for each row and each column, for example (S729). For example, the keywords and search results icons and the like with the greatest number in each row are displayed in the blocks of the topmost first field blocks.

Next, upon the order of the keywords, and the block groups made up of columns and rows corresponding to the keywords, being determined (S729), the placement unit 321 first places the keywords in predetermined field blocks in the predetermined direction, i.e., the X-axial direction or Y-axial direction (S731) .

Also, in the event that the position determining criteria is in order of higher user preference or newer search history (S730), the placement unit 321 makes reference to the search information list, and determines the order of the keywords according to higher user preference or newer search history (S730). After determining the order, the keywords are sorted and placed in their respective positions (S731).

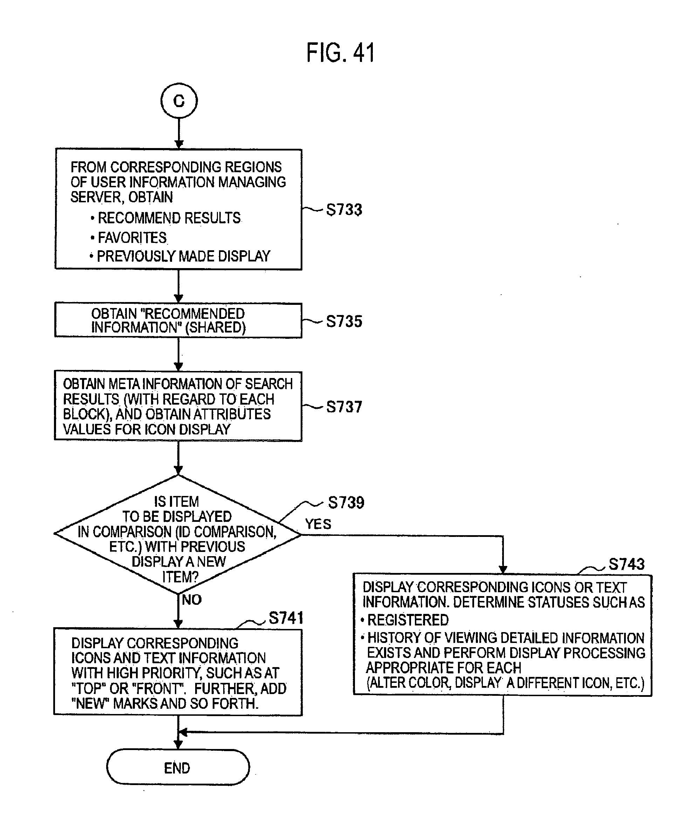

The subsequent display processing for the personalized guide display screen according to the present embodiment will be described with reference to Fig. 41.

Upon the placement positions of the keywords and items to be displayed in the clocks being determined for display in the personalized guide display screen 686, the placement unit 321 obtains the meta information reference ID relating to the meta information stored in the "previous display contents" information, "recommend results this time" information, and "favorites" information, of the personalized guide list 717, as shown in Fig. 41 (S733).

Next, the placement unit 321 obtains the meta information reference ID as "recommends" for display in the block 691 of the personalized guide display screen 686 from servers (not shown) of the broadcasting stations 105 and the like (S735). Note that the meta information reference ID of the "recommends" information may be obtained from the directory service server 106 instead.

Next, the placement unit 321 obtains meta information such as the program meta information or contents meta information from the directory service server 106 for each block based on the meta information reference ID obtained as a result of the search, and further extracts the attributes and attribute values contained in the meta information (S737).

Next, the placement unit 321 compares the meta information reference ID stored in the "previous display contents" information in the personalized guide list 717 with the meta information reference ID of the detected meta information, and determines whether or not the ID is a new item which does not match (S739).

As the result of comparison (S741), in the event that the item is a new item, the placement unit 321 places the icon or the text such as a title or the like corresponding to the obtained meta information in a block toward the top for the display position thereof with higher priority (S741). The icon is generated by an icon generating unit (not shown) of the user information managing server or the like.

In the event that the item is not a new item, the placement unit 321 places the icon or the text such as a title or the like corresponding to the obtained meta information in a block for display. The placement unit 321 changes the color of the icon or text or the like according to various types of status, such as whether the detailed information has already been viewed, or the like (S743). Thus, the personalized guide information generating processing for the personalized guide display screen displayed on the display unit 142 of the user terminal device 101 ends, and upon the personalized guide information being transmitted from the user information managing server 113 to the user terminal device 101, the display unit 142 displays the personalized guide display screen 686.

Note that while the personalized guide information according to the present embodiment has been described as being generated at the time of request of the personalized guide display screen 686 from the user terminal device 101, the present invention is by no means restricted to this arrangement, and for example, the personalized guide information may be generated by batch processing by the user information managing server 113 at predetermined time intervals set in user profile information of each user, or at specified times, for example. In such a case, information such as the meta information reference IDs and the like stored in information such as the "recommend results this time" information, and "favorites" information in the personalized guide list 717 may be obtained again at the time of a request from the user terminal device 101 for displaying the personalized guide display screen 686, so as to re-update the already-generated personalized guide information.

Also, icons and the like displayed in the personalized guide display screen 686 can be deleted or arranged. For example, an arrangement may be made wherein once a user checks information and then deletes the icon, the meta information reference ID or the like corresponding to the category of the icon is saved such that the item is not displayed again even when found in a later search.

As described above, the user can comprehend the distribution of searched content components and the distribution of placed contents components, from the search results displayed on the display screen. Accordingly, displaying combinations of keywords wherein a great number of contents components are placed and there is a great amount of contents, or combinations of keywords with few contents, allows the user to easily comprehend the search results containing a great amount of information.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Also, while the components of the user terminal device 101, directory service server 106, contents service server 107, and user information managing server 113, have been described as being hardware, the present invention is not restricted to such an arrangement. For example, these components may be realized by a computer program configured of one or more modules or components.

Also, the embodiment has been described with reference to an example wherein the information providing device 104 side managing the search information, but the present invention is not restricted to such an arrangement, and various other arrangements may be made, such as the user terminal device 101 managing the search information, or the information providing device 104 and the user terminal device 101 managing the search information.

Moreover, the embodiment has been described with reference to an example wherein the information providing device 104 generates the display screen for displaying the search results, but the present invention is not restricted to such an arrangement, and an arrangement may be made wherein the user terminal device 101 generates the display screen for displaying the search results, for example.

In an information providing system, an information providing server may comprise an assigning unit for configuring multiple fields containing at least one field block, and assigning keywords to each of the field blocks of the fields according to predetermined conditions, a setting unit for selecting at least one assigned keyword from the field block of each field, and combining these to set a combination keyword, and a placement unit for placing contents components equivalent to the combination keyword, according to the positions assigned to the selected keywords. Also, a user terminal device may comprise a reception unit for receiving information to be displayed on a screen, generated by keywords being assigned to the field blocks of the fields according to predetermined conditions, and the contents components being placed at positions respectively assigned to the selected keywords, and a display unit for displaying on a screen, based on the information for screen display.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information providing system, wherein a user terminal device for displaying contents on a screen, and an information providing server for at least providing information for displaying said contents on said user terminal device, are mutually connected to a network;
said information providing server comprising
an assigning unit for configuring multiple fields containing at least one field block, and assigning keywords to each of the field blocks of said fields according to predetermined conditions,
a setting unit for selecting at least one assigned keyword from the field block of each field, and combining these to set a combination keyword, and
a placement unit for placing contents components equivalent to said combination keyword, according to the positions assigned to said selected keywords; and
said user terminal device comprising
a reception unit for receiving via said network information to be displayed on a screen, generated by keywords being assigned to the field blocks of said fields according to predetermined conditions, and said contents components being placed at positions respectively assigned to said selected keywords, and
a display unit for displaying on a screen, based on said information for screen display.

2. An information providing server for at least providing information for displaying contents on a user terminal device via a network, said information providing server comprising:
an assigning unit for configuring multiple fields containing at least one field block, and assigning keywords to each of the field blocks of said fields according to predetermined conditions;
a setting unit for selecting at least one assigned keyword from the field block of each field, and combining these to set a combination keyword; and
a placement unit for placing contents components equivalent to said combination keyword, according to the positions assigned to said selected keywords.

3. An information providing server according to Claim 2, wherein said contents components are placed within blocks configured on said fields, with each field as an axis.

4. An information providing server according to Claim 3, wherein contents components searched by said combination keyword are placed in said blocks.

5. An information providing server according to Claim 3, wherein a desired contents component which is the target of the search is placed in at least one of said blocks.

6. An information providing server according to Claim 3, wherein said placement unit places said contents component in said block wherein, of said selected keywords, a row at a position where a first keyword has been assigned and a column wherein a second keyword at least intersect.

7. An information providing server according to Claim 6, wherein said placed contents component is displayed on the screen.

8. An information providing server according to Claim 2, wherein said placement unit places meta information corresponding to said contents component.

9. An information providing server according to Claim 8, wherein said placement unit places said meta information at a position wherein, of said selected keywords, a row at a position where a first keyword has been assigned and a column wherein a second keyword at least intersect.

10. An information providing server according to Claim 9, wherein said placement unit places said meta information within a block corresponding to said intersecting position.

11. An information providing server according to Claim 10, wherein said placed meta information is displayed on the screen.

12. An information providing server according to Claim 10, wherein the contents component searched by said combination keyword is placed in said block.

13. An information providing server according to Claim 10, wherein a desired contents component which is the target of the search is placed in at least one of said blocks.

14. An information providing server according to Claim 2, wherein said placed contents component is a contents component searched based on said combination keyword.

15. An information providing server according to Claim 14, wherein said contents components are placed within blocks configured on said fields, with each field as an axis.

16. An information providing server according to Claim 15, wherein said placement unit places said meta information in said block corresponding to a position wherein, of said selected keywords, a row at a position where a first keyword has been assigned and a row wherein a second keyword at least intersect.

17. An information providing server according to Claim 16, wherein placed meta information relating to said searched content component is displayed on the screen.

18. An information providing server according to Claim 2, wherein at least one of the attributes or attributes value of meta information relating to the contents component obtained by searching is registered as a keyword.

19. An information providing server according to Claim 2, wherein said predetermined conditions are at least the search frequency or search history of a keyword.

20. An information providing server according to Claim 2, wherein said placement unit places an image symbolizing the category of said contents component.

21. An information providing server according to Claim 20, wherein said placement unit places said image in said block corresponding to a position wherein, of said selected keywords, a row at a position where a first keyword has been assigned and a row wherein a second keyword at least intersect.

22. An information providing server according to Claim 2, wherein said contents component includes broadcast programming.

23. An information providing server according to Claim 2, wherein, in the event that said contents component is a broadcast program, the registration status of the program is displayed in said block.

24. An information providing server according to Claim 2, wherein, in the event that said placed contents component is configured of two of said fields, said placed contents component is displayed in a two-dimensional format.

25. An information providing server according to Claim 2, wherein, in the event that said placed contents component is configured of three of said fields, said placed contents component is displayed in a three-dimensional format.

26. An information providing server according to Claim 2, wherein said contents are made up of at least one contents component.

27. A user terminal device for obtaining information from an information providing server via a network for display on a screen, said user terminal device comprising:
a reception unit for receiving information for display on said screen via said network; and
a display unit for making a display on the screen based on information for display on said screen;
wherein said information for display on said screen is generated by said information providing server configuring a plurality of fields in which at least one field block is contained, assigning keywords to the field blocks of the fields according to predetermined conditions, selecting at least one of said assigned keywords from the field blocks of the fields and combined to establish a combination keyword, and placing contents components corresponding to said combination keyword at positions assigned with said selected combination keyword.

28. a contents display device for displaying contents on a screen, comprising:
an assigning unit for configuring a plurality of fields in which at least one field block is contained, and assigning keywords to the field blocks of the fields according to predetermined conditions;
a setting unit for selecting at least one of said assigned keywords from the field blocks of the fields, and combining the keywords to establish a combination keyword; and
a placement unit for placing contents components corresponding to said combination keyword at positions assigned with said selected keywords.

29. A contents display device according to Claim 28,
wherein said contents components are placed within blocks configured on said fields, with each field as an axis.

30. A contents display device according to Claim 29,
wherein contents components searched by said combination keyword are placed in said blocks.

31. A contents display device according to Claim 29,
wherein a desired contents component which is the target of the search is placed in at least one of said blocks.

32. A contents display device according to Claim 29,
wherein said placement unit places said contents component in said block wherein, of said selected keywords, a row at a position where a first keyword has been assigned and a row
wherein a second keyword at least intersect.

33. A contents display device according to Claim 32,
wherein said placed contents component is displayed on the screen.

34. A contents display device according to Claim 28,
wherein said placement unit places meta information corresponding to said contents component.

35. A contents display device according to Claim 34,
wherein said placement unit places said meta information at a position wherein, of said selected keywords, a row at a position where a first keyword has been assigned and a row
wherein a second keyword at least intersect.

36. A contents display device according to Claim 35,
wherein said placement unit places said meta information within a block corresponding to said intersecting position.

37. A contents display device according to Claim 36,
wherein said placed meta information is displayed on the screen.

38. A contents display device according to Claim 36,
wherein the contents component searched by said combination keyword is placed in said block.

39. A contents display device according to Claim 36,
wherein a desired contents component which is the target of the search is placed in at least one of said blocks.

40. A contents display device according to Claim 28,
wherein said placed contents component is a contents component searched based on said combination keyword.

41. A contents display device according to Claim 40,
wherein said contents components are placed within blocks configured on said fields, with each field as an axis.

42. A contents display device according to Claim 41,
wherein said placement unit places said meta information in said block corresponding to a position wherein, of said selected keywords, a row at a position where a first keyword has been assigned and a row wherein a second keyword at least intersect.

43. A contents display device according to Claim 42,
wherein placed meta information relating to said searched content component is displayed on the screen.

44. A contents display device according to Claim 28,
wherein at least one of the attributes or attributes value of meta information relating to the contents component obtained by searching is registered as a keyword.

45. A contents display device according to Claim 28,
wherein said predetermined conditions are at least the search frequency or search history of a keyword.

46. A contents display device according to Claim 28,
wherein said placement unit places an image symbolizing the category of said contents component.

47. A contents display device according to Claim 46,
wherein said placement unit places said image in said block corresponding to a position wherein, of said selected keywords, a row at a position where a first keyword has been assigned and a row wherein a second keyword at least intersect.

48. A contents display device according to Claim 28,
wherein said contents component includes broadcast programming.

49. A contents display device according to Claim 28,
wherein, in the event that said contents component is a broadcast program, the registration status of the program is displayed in said block.

50. A contents display device according to Claim 28,
wherein, in the event that said placed contents component is configured of two of said fields, said placed contents component is displayed in a two-dimensional format.

51. A contents display device according to Claim 28,
wherein, in the event that said placed contents component is configured of three of said fields, said placed contents component is displayed in a three-dimensional format.

52. A contents display device according to Claim 28,
wherein said contents are made up of at least one contents component.

53. A computer program for causing a computer to functions as a contents display device for displaying contents on a screen, such that said computer comprises:
an assigning unit for configuring a plurality of fields in which at least one field block is contained, and assigning keywords to the field blocks of the fields according to predetermined conditions;
a setting unit for selecting at least one of said assigned keywords from the field blocks of the fields, and combining the keywords to establish a combination keyword; and
a placement unit for placing contents components corresponding to said combination keyword at positions assigned with said selected keywords.

54. A contents display method for displaying contents on a screen, comprising:
an assigning step for configuring a plurality of fields in which at least one field block is contained, and assigning keywords to the field blocks of the fields according to predetermined conditions;
a setting step for selecting at least one of said assigned keywords from the field blocks of the fields, and combining the keywords to establish a combination keyword; and
a placement step for placing contents components corresponding to said combination keyword at positions assigned with said selected keywords.

55. A contents display method according to Claim 54,
wherein said contents components are placed within blocks configured on said fields, with each field as an axis.

56. A contents display method according to Claim 55,
wherein contents components searched by said combination keyword are placed in said blocks.

57. A contents display method according to Claim 55,
wherein a desired contents component which is the target of the search is placed in at least one of said blocks.

58. A contents display method according to Claim 55,
wherein said placement step places said contents component in said block wherein, of said selected keywords, a row at a position where a first keyword has been assigned and a row
wherein a second keyword at least intersect.

59. A contents display method according to Claim 58,
wherein said placed contents component is displayed on the screen.

60. A contents display method according to Claim 54,
wherein said placement step places meta information corresponding to said contents component.

61. A contents display method according to Claim 60,
wherein said placement step places said meta information at a position wherein, of said selected keywords, a row at a position where a first keyword has been assigned and a row
wherein a second keyword at least intersect.

62. A contents display method according to Claim 61,
wherein said placement step places said meta information within a block corresponding to said intersecting position.

63. A contents display method according to Claim 62,
wherein said placed meta information is displayed on the screen.

64. A contents display method according to Claim 62,
wherein the contents component searched by said combination keyword is placed in said block.

65. A contents display method according to Claim 63,
wherein a desired contents component which is the target of the search is placed in at least one of said blocks.

66. A contents display method according to Claim 54,
wherein said placed contents component is a contents component searched based on said combination keyword.

67. A contents display method according to Claim 66,
wherein said contents components are placed within blocks configured on said fields, with each field as an axis.

68. A contents display method according to Claim 67,
wherein said placement step places said meta information in said block corresponding to a position wherein, of said selected keywords, a row at a position where a first keyword has been assigned and a row wherein a second keyword at least intersect.

69. A contents display method according to Claim 68,
wherein placed meta information relating to said searched content component is displayed on the screen.

70. A contents display method according to Claim 54,
wherein at least one of the attributes or attributes value of meta information relating to the contents component obtained by searching is registered as a keyword.

71. A contents display method according to Claim 54,
wherein said predetermined conditions are at least the search frequency or search history of a keyword.

72. A contents display method according to Claim 54,
wherein said placement step places an image symbolizing the category of said contents component.

73. A contents display method according to Claim 72,
wherein said placement step places said image in said block corresponding to a position wherein, of said selected keywords, a row at a position where a first keyword has been assigned and a row wherein a second keyword at least intersect.

74. A contents display method according to Claim 54,
wherein said contents component includes broadcast programming.

75. A contents display method according to Claim 54,
wherein, in the event that said contents component is a broadcast program, the registration status of the program is displayed in said block.

76. A contents display method according to Claim 54,
wherein, in the event that said placed contents component is configured of two of said fields, said placed contents component is displayed in a two-dimensional format.

77. A contents display method according to Claim 54,
wherein, in the event that said placed contents component is configured of three of said fields, said placed contents component is displayed in a three-dimensional format.

78. A contents display method according to Claim 54,
wherein said contents are made up of at least one contents component.
